# EUROPÄISCHE PATENTSCHRIFT

(11) **EP 2 225 337 B1**
(45) Veröffentlichungstag und Bekanntmachung des Hinweises auf die Patenterteilung: **23.08.2017**
(21) Anmeldenummer: 08851867.5
(22) Anmeldetag: 19.11.2008
(51) Int. Cl.: C09D 133/04, C09D 169/00, C08L 33/04, C08L 69/00

(54) **VERWENDUNG HOCHVERZWEIGTER POLYMERE IN POLYMERDISPERSIONEN FÜR GLANZFARBEN**
USE OF HIGHLY BRANCHED POLYMERS IN POLYMER DISPERSIONS FOR GLOSS COLOURS
UTILISATION DE POLYMÈRES TRÈS RAMIFIÉS DANS DES DISPERSIONS DE POLYMÈRES POUR DES PEINTURES BRILLANTES

(30) Priorität: 19.11.2007 EP 07121034; 14.12.2007 EP 07150041
(43) Veröffentlichungstag der Anmeldung: 08.09.2010
(73) Patentinhaber: BASF SE, 67056 Ludwigshafen am Rhein (DE)
(72) Erfinder: ROLLER, Sebastian, 68199 Mannheim (DE); BRUCHMANN, Bernd, 67251 Freinsheim (DE); DERSCH, Rolf, 67434 Neustadt (DE); SCHÖNFELDER, Daniel, B-1000 Bruxelles (BE)
(74) Vertreter: BASF IP Association
(86) Internationale Anmeldenummer: PCT/EP2008/065861
(87) Internationale Veröffentlichungsnummer: WO 2009/065868

(56) Entgegenhaltungen:
- EP-A- 1 006 165
- EP-A- 1 095 953
- EP-A- 1 219 650
- WO-A-01/96411
- WO-A-2004/016701
- WO-A-2004/072125
- WO-A-2005/003186
- WO-A2-2008/009516
- DE-A1-102004 046 508
- US-A- 5 159 047
- US-A- 6 096 801
- US-A- 6 150 468
- C GAO ET AL: "Hyperbranched polymers: from synthesis to applications", PROGRESS IN POLYMER SCIENCE, vol. 29, no. 3, 1 March 2004 (2004-03-01), pages 183-275, XP055173669, ISSN: 0079-6700, DOI: 10.1016/j.progpolymsci.2003.12.002

## Beschreibung

Die vorliegende Erfindung betrifft ein Verfahren zur Herstellung von Beschichtungen mit erhöhtem Glanz, wässrige Beschichtungsmittel für ein solches Verfahren sowie die Verwendung von hochverzweigten Polymeren als Zusatzstoff für wässrige Polymerdispersionen für Beschichtungsmittel, die zu Beschichtungen mit erhöhtem Glanz führen.

Gemäß ihrer Fähigkeit, Licht zu reflektieren, werden Farben üblicherweise in drei Kategorien eingeteilt
1. Mattanstrichfarben mit einem Spiegelglanz von weniger als 15 % Reflektion,
2. Seidenglanzfarben mit einem Spiegelglanz von etwa 35 % bis 50 % Reflektion und
3. Hochglanzfarben mit einem Spiegelglanz von > 70 % Reflektion,
jeweils bezogen auf Licht mit einem Auftreffwinkel von 60°.

Die Qualität nicht pigmentierter und speziell pigmentierter Beschichtungsmittel auf Basis wässriger Polymerdispersionen hängt entscheidend vom Glanz der erhaltenen Beschichtungen ab. Es hat daher nicht an Versuchen gefehlt, diesen durch geeignete Zusätze zu verbessern. Vielfach weisen diese Zusätze jedoch den Nachteil auf, noch eine gewisse Flüchtigkeit aufzuweisen, was sich negativ auf den VOC der daraus erhaltenen Beschichtungen auswirkt.

Die WO 00/29495 beschreibt ein Beschichtungsmittel, das ein Lösungsmittel, ein Alkydharz (Polyesterharz) und ein Sternpolymer enthält. Die Sternpolymere dienen dabei als Modifizierungsmittel zur Verbesserung der Anwendungseigenschaften der Beschichtungsmittel, z. B. zur Erzielung einer geringeren Viskosität. Sie leiten sich ab von polyfunktionalen Thiolen, die wenigstens drei vinylisch ungesättigte Seitenketten aufweisen.

Die WO 01/96411 beschreibt amphiphile Sternpolymere, die einen Kern auf Mercaptanbasis sowie wenigstens drei davon ausgehende Polymerarme aufweisen sowie die Verwendung dieser Sternpolymere zur Stabilisation von wässrigen Polymerdispersionen.

Die WO 2004/016700 beschreibt eine Copolymerdispersion auf Wasserbasis, die durch Copolymerisation unter Verwendung wenigstens eines mit Alkylengruppen funktionalisierten dendritischen Polymers erhältlich ist. Die so erhaltenen Copolymerdispersionen zeichnen sich durch verbesserte "Blocking"-Eigenschaften aus. In diesem Dokument wird nicht gelehrt, ein hochverzweigtes Polymer einer wässrigen Polymerdispersion zuzusetzen, um somit wässrige Beschichtungsmittel bereitzustellen, die zu Beschichtungen mit erhöhtem Glanz führen.

WO 2004/016701 beschreibt eine wässrige Homo- bzw. Copolymerdispersion, erhältlich durch Emulsionspolymerisation, bei der ein Alkenyl-funktionalisiertes Dendrimer als Zusatz eingesetzt wird. Die Zusammensetzung kann als Bindemittel für Coatings verwendet werden. Eine Verwendung zur Erhöhung des Glanzes ist nicht offenbart.

WO 2004/037928 beschreibt eine lufttrocknende wässrige Harzzusammensetzung, bestehend aus einem Fettsäure-funktionalisierten hyperverzweigten Polymer, welches an der Luft trocknet, einem nicht amphiphilen Alkydharz, einem Trockner und einem Stabilisator.

Die WO 2005/003186 beschreibt ein Verfahren zur Herstellung wässriger Polymerdispersionen auf Basis von Copolymeren, die wenigstens ein hydrophobes Allyl-, Vinyl-, Malein- oder Dien-Monomer einpolymerisiert enthalten, wobei die Polymerisation in Gegenwart wenigstens eines dendritischen Polymers erfolgt. Das dendritische Polymer ermöglicht dabei auch stark hydrophobe Monomere mit einer Wasserlöslichkeit von weniger als 0,001 g/l zur Emulsionspolymerisation einzusetzen. Die Verwendung solcher dendritischer Polymere als Zusatz zu Polymerdispersionen, um somit wässrige Beschichtungsmittel bereitzustellen, die zu Beschichtungen mit erhöhtem Glanz führen, ist nicht beschrieben.

EP 1006165 A2 beschreibt eine Beschichtungszusammensetzung, die ein Vinylpolymer mit angehängten Carbosiloxan-Dendrimer-Gruppen enthält. Die Einführung dieser Gruppen geschieht durch radikalische Copolymerisation mit Vinyl-funktionalisierten Carbosiloxan-Dendrimeren. Die Beschichtungszusammensetzung dient für das Baugewerbe, Gebäude, Automobile, etc. Die Beschichtung ist wetter-, wasser- und vereisungsresistent und zeigt einen guten Erhalt in Glanz und Wasserabweisung.

K. Manczyk, P. Szewczyk beschreiben in Prog. Org. Coat. 2002, 44, 99-109 hochverzweigte "high-solids" Alkydharze. Diese können sowohl auf sternförmigen als auch hyperverzweigten Strukturen basieren. Mit zunehmendem Verzweigungsgrad trockneten diese Alkydharze schneller. Neben anderen anwendungstechnischen Eigenschaften ist auch der Glanz angegeben. Diesem Dokument lässt sich jedoch nicht entnehmen, dass sich hyperverzweigte Polymere als gezielter Zusatz zur Glanzverbesserung eignen. Einen vergleichbaren Offenbarungsgehalt hat der Artikel von E. Bat, G. Gündüz, D. Kisakürek, I. M. Akhmedoc in Prog. Org. Coat. 2006, 55, 330-336.

Der vorliegenden Erfindung lag die Aufgabe zu Grunde, wässrige Polymerdispersionen für den Einsatz in Anstrichmitteln mit erhöhtem Glanz zur Verfügung zu stellen. Sie sollten dabei speziell der Erhöhung des Glanzes von Glanzfarben auf Basis von Acrylatdispersionen dienen.

Überraschenderweise wurde gefunden, dass diese Aufgabe durch den Einsatz von hochverzweigten Polymeren in wässrigen Polymerdispersionen für Beschichtungsmittel gelöst wird.

Ein erster Gegenstand der Erfindung ist daher ein Verfahren zur Herstellung von Beschichtungen mit erhöhtem Glanz, bei dem man auf ein Substrat ein wässriges Beschichtungsmittel aufträgt, das eine wässrige Polymerdispersion PD) und ein hochverzweigtes Polymer enthält.

Ein weiterer Gegenstand der Erfindung sind Beschichtungsmittel in Form einer wässrigen Zusammensetzung, enthaltend:
- wenigstens eine Dispersion wie im Folgenden definiert, die ein hochverzweigtes Polymer als Zusatzstoff enthält,
- gegebenenfalls wenigstens einen anorganischen Füllstoff und/oder anorganisches Pigment,
- übliche Hilfsmittel, und
- Wasser auf 100 Gew.-%.

Ein weiterer Gegenstand der Erfindung ist ein Verfahren zur Erhöhung des Glanzes einer Beschichtung auf Basis einer wässrigen Polymerdispersion PD), die durch radikalische Emulsionspolymerisation wenigstens eines α,β-ethylenisch ungesättigten Monomers M) erhältlich ist, durch Zusatz wenigstens eines hochverzweigten Polymers.

Die Zugabe des hochverzweigten Polymers zu der Polymerdispersion PD) kann vor und/oder während und/oder nach der Emulsionspolymerisation zur Herstellung von PD) erfolgen. Eine Zugabe nach der Emulsionspolymerisation umfasst dabei auch eine Zugabe im Rahmen der Formulierung eines Produkts, das ein Emulsionspolymerisat auf Basis wenigstens eines α,β-ethylenisch ungesättigten Monomers M) enthält. Dazu kann wenigstens ein hochverzweigtes Polymer, wie im Folgenden definiert, als Additiv zu einem Anstrichmittel gegeben werden. Ein weiterer Gegenstand der Erfindung ist daher die Verwendung wenigstens eines hochverzweigten Polymers als Additiv für ein Produkt, das ein Emulsionspolymerisat auf Basis wenigstens eines α,β-ethylenisch ungesättigten Monomers M), wie im Folgenden definiert, enthält, zur Erhöhung des Glanzes der daraus hergestellten Beschichtungen.

Ein weiterer Gegenstand der Erfindung ist die Verwendung von hochverzweigten Polymeren, wie im Folgenden definiert, als Zusatzstoff für wässrige Beschichtungsmittel, die eine wässrige Polymerdispersion PD) enthalten, zur Erhöhung des Glanzes der daraus hergestellten Beschichtungen.

Ein weiterer Gegenstand der Erfindung ist die Verwendung einer wässrigen Polymerdispersion PD), die ein hochverzweigtes Polymer als Zusatzstoff enthält, als Komponente in Klarlacken und in Hochglanzfarben.

Die Bestimmung des Glanzes des Anstrichmittels kann nach DIN 67530 erfolgen. Dazu wird das Anstrichmittel mit 240 µm Spaltweite auf eine Glasplatte aufgetragen und 72 Stunden lang bei Raumtemperatur getrocknet. Der Prüfkörper wird in ein kalibriertes Reflektometer eingesetzt, und bei definiertem Einfallswinkel wird festgestellt, inwieweit das zurückgeworfene Licht reflektiert oder gestreut worden ist. Der ermittelte Reflektometerwert ist ein Maß für den Glanz (je höher der Wert, desto höher der Glanz).

Der Glanz von Seidenglanzlacken ist vorzugsweise größer als 15 bei 60°. Der Glanz von Hochglanzlacken auf Basis der erfindungsgemäßen Beschichtungsmittel ist vorzugsweise größer 60 bei 20°. Der Glanz von Hochglanzlacken ist vorzugsweise größer 80 bei 60°.

Die erfindungsgemäß eingesetzte Polymerdispersion PD) enthält vorzugsweise 0,1 bis 15 Gew.-%, besonders bevorzugt 0,5 bis 10 Gew.-%, bezogen auf das Gesamtgewicht der Polymerdispersion, wenigstens eines hochverzweigten Polymers. Übliche Einsatzmengen des hochverzweigten Polymers liegen z. B. in einem Bereich von 1 bis 5 Gew.-%.

Der erfindungsgemäße Einsatz der hochverzweigten Polymere bringt wenigstens einen der folgenden Vorteile mit sich:
- Erhöhung des Glanzes von Beschichtungsmitteln (Anstrichmitteln), speziell von Glanzfarben auf Basis von Acrylatdispersionen,
- gute Verträglichkeit der eingesetzten hochverzweigten Polymere mit einer Vielzahl Dispersionen,
- ein zumindest teilweiser Verzicht auf Additive, die den VOC-Gehalt der Dispersionen erhöhen.

Erfindungsgemäß wird der Polymerdispersion PD) wenigstens ein hochverzweigtes Polymer zugesetzt. Der Ausdruck "hochverzweigte Polymere" bezeichnet im Rahmen dieser Erfindung ganz allgemein Polymere, die sich durch eine stark verzweigte Struktur und eine hohe Funktionalität auszeichnen. Zur allgemeinen Definition hochverzweigter Polymere wird auch auf P. J. Flory, J. Am. Chem. Soc. 1952, 74, 2718, und H. Frey et al., Chem. Eur. J. 2000, 6, Nr. 14, 2499, Bezug genommen (dort abweichend von der hier gewählten Definition als "hyperbranched polymers" bezeichnet).

Zu den hochverzweigten Polymeren im Sinne der Erfindung zählen Sternpolymere, Dendrimere, Arborole und davon verschiedene hochverzweigte Polymere, wie speziell hyperverzweigte Polymere.

Sternpolymere sind Polymere, bei denen von einem Zentrum drei oder mehr Ketten ausgehen. Das Zentrum kann dabei ein einzelnes Atom oder eine Atomgruppe sein.

Dendrimere leiten sich strukturell von den Sternpolymeren ab, wobei jedoch die einzelnen Ketten jeweils ihrerseits sternförmig verzweigt sind. Sie entstehen ausgehend von kleinen Molekülen durch eine sich ständig wiederholende Reaktionsfolge, wobei immer höhere Verzweigungen resultieren, an deren Enden sich jeweils funktionelle Gruppen befinden, die wiederum Ausgangspunkt für weitere Verzweigungen sind. So wächst mit jedem Reaktionsschritt die Zahl der Monomer-Endgruppen exponentiell an, wobei am Ende eine, im Idealfall kugelförmige, Baumstruktur entsteht. Ein charakteristisches Merkmal der Dendrimere ist die Anzahl der zu ihrem Aufbau durchgeführten Reaktionsstufen (Generationen). Auf Grund ihres einheitlichen Aufbaus (im Idealfall enthalten alle Äste exakt dieselbe Anzahl von Monomereinheiten) sind Dendrimere im Wesentlichen monodispers, d. h. sie weisen in der Regel eine definierte Molmasse auf.

Molekular wie strukturell einheitliche hochverzweigte Polymere werden im Folgenden auch einheitlich als Dendrimere bezeichnet.

"Hyperverzweigte Polymere" sind im Rahmen dieser Erfindung hochverzweigte Polymere, die im Gegensatz zu den zuvor genannten Dendrimeren sowohl molekular wie auch strukturell uneinheitlich sind. Sie weisen Seitenketten und/oder Seitenäste unterschiedlicher Länge und Verzweigung sowie eine Molmassenverteilung (Polydispersität) auf.

Die erfindungsgemäß eingesetzten hochverzweigten Polymere weisen vorzugsweise einen Verzweigungsgrad (Degree of Branching, DB) pro Molekül von 10 bis 100 %, bevorzugt 10 bis 90 % und insbesondere 10 bis 80 %, auf. Der Verzweigungsgrad DB ist dabei definiert als DB (%) = (T + Z) / (T + Z + L) x 100, mit
- T: mittlere Anzahl der terminal gebundenen Monomereinheiten,
- Z: mittlere Anzahl der Verzweigungen bildenden Monomereinheiten,
- L: mittlere Anzahl der linear gebundenen Monomereinheiten.

Dendrimere weisen im Allgemeinen einen Verzweigungsgrad DB von wenigstens 99 %, speziell 99,9 bis 100 %, auf.

Hyperverzweigte Polymere weisen vorzugsweise einen Verzweigungsgrad DB von 10 bis 95 %, bevorzugt 25 bis 90 % und insbesondere 30 bis 80 %, auf.

Zur Erzielung vorteilhafter Glanzeigenschaften können sowohl die strukturell und molekular einheitlichen Dendrimere wie auch hyperverzweigte Polymere eingesetzt werden. Hyperverzweigte Polymere sind jedoch in der Regel einfacher und somit wirtschaftlicher herstellbar als Dendrimere. So wird z. B. die Herstellung der monodispersen Dendrimere dadurch verkompliziert, dass bei jedem Verknüpfungsschritt Schutzgruppen eingeführt und wieder entfernt werden müssen und vor Beginn jeder neuen Wachstumsstufe intensive Reinigungsoperationen erforderlich sind, weshalb Dendrimere üblicherweise nur im Labormaßstab hergestellt werden können. Hyperverzweigte Polymere mit ihrer Molekulargewichtsverteilung können sich auch vorteilhaft auf die Viskositätseigenschaften der mit ihnen modifizierten Dispersionen auswirken. Hyperverzweigte Polymere weisen zudem eine flexiblere Struktur auf als die Dendrimere.

Als hochverzweigte Polymere sind prinzipiell solche geeignet, die durch Polykondensation, Polyaddition oder durch Polymerisation von ethylenisch ungesättigten Verbindungen erhältlich sind. Bevorzugt sind Polykondensate. Unter Polykondensation wird dabei die wiederholte chemische Umsetzung von funktionellen Verbindungen mit geeigneten reaktiven Verbindungen unter Abspaltung von niedermolekularen Verbindungen, wie Wasser, Alkohol, HCl, etc. verstanden. Unter Polyaddition wird dabei die wiederholte chemische Umsetzung von funktionellen Verbindungen mit geeigneten reaktiven Verbindungen ohne Abspaltung von niedermolekularen Verbindungen verstanden.

Geeignet sind Polymere, die funktionelle Gruppen aufweisen, die vorzugsweise ausgewählt sind unter Ethergruppen, Estergruppen, Carbonatgruppen, Aminogruppen, Amidgruppen, Urethangruppen und Harnstoffgruppen.

Insbesondere können als Polymere Polycarbonate, Polyester, Polyether, Polyurethane, Polyharnstoffe, Polyamine, Polyamide, sowie deren Mischformen, wie beispielsweise Poly(harnstoffurethane), Poly(etheramine), Poly(esteramine), Poly(etheramide), Poly(esteramide), Poly(amidoamine), Poly(estercarbonate), Poly(ethercarbonate), Poly(etherester), Poly(etherestercarbonate) etc., verwendet werden.

Bevorzugte hyperverzweigte Polymere sind solche auf Basis von Ethern, Aminen, Estern, Carbonaten, Amiden, sowie deren Mischformen, wie beispielsweise Esteramiden, Amidoaminen, Estercarbonaten, Ethercarbonaten, Etherestern, Etherestercarbonaten, Harnstoffurethanen etc.

Insbesondere können als hyperverzweigte Polymere hyperverzweigte Polycarbonate, hyperverzweigte Poly(ethercarbonate), hyperverzweigte Poly(etherester), hyperverzweigte Poly(etherestercarbonate), hyperverzweigte Polyester, hyperverzweigte Polyether, hyperverzweigte Polyurethane, hyperverzweigte Poly(harnstoffurethane), hyperverzweigte Polyharnstoffe, hyperverzweigte Polyamine, hyperverzweigte Polyamide, hyperverzweigte Poly(etheramin)e, hyperverzweigte Poly(esteramin)e, hyperverzweigte Poly(etheramid)e, hyperverzweigte Poly(esteramid)e und Mischungen davon, eingesetzt werden. Eine spezielle Ausführung hyperverzweigter Polymere sind hyperverzweigte Polycarbonate. Eine weitere spezielle Ausführung hyperverzweigter Polymere sind hyperverzweigte stickstoffatomhaltige Polymere, speziell Polyurethane, Polyharnstoffe, Polyamine, Polyamide, Poly(esteramid)e und Poly(esteramin)e.

Bevorzugt wird als hochverzweigtes Polymer ein hyperverzweigtes Polycarbonat, Poly(ethercarbonat), Poly(estercarbonat) oder Poly(etherestercarbonat) oder ein Gemisch hyperverzweigter Polymere, das wenigstens ein hyperverzweigtes Polycarbonat, Poly(ethercarbonat), Poly(estercarbonat) oder Poly(etherestercarbonat) enthält, eingesetzt.

Für die erfindungsgemäße Verwendung geeignete hyperverzweigte Polymere und Verfahren zu ihrer Herstellung sind in den folgenden Dokumenten beschrieben, auf die in vollem Umfang Bezug genommen wird:
- hochverzweigte und speziell hyperverzweigte Polycarbonate nach der WO 2005/026234,
- hyperverzweigte Polyester nach WO 01/46296, DE 101 63 163, DE 102 19 508 oder DE 102 40 817,
- hyperverzweigte Polyether nach WO 03/062306, WO 00/56802, DE 102 11 664 oder DE 199 47 631,
- hyperverzweigte stickstoffatomhaltige Polymere (speziell Polyurethane, Polyharnstoffe, Polyamide, Poly(esteramide), Poly(esteramine)), wie in der WO 2006/087227 beschrieben,
- hyperverzweigte Polyurethane nach WO 97/02304 oder DE 199 04 444,
- hyperverzweigte Poly(harnstoffurethane) nach WO97/02304 oder DE 199 04 444,
- hyperverzweigte Polyharnstoffe wie in der WO 03/066702, WO 2005/044897 und WO 2005/075541 beschrieben,
- hyperverzweigte aminogruppenhaltige Polymere, speziell Poly(esteramine) nach der WO 2005/007726,
- hyperverzweigte Poly(esteramide) nach WO 99/16810 oder EP 1 036 106,
- hyperverzweigte Polyamide wie in der WO 2006/018125 beschrieben,
- hyperverzweigte Poly(estercarbonate) wie in der WO 2006/089940 beschrieben.

Bevorzugt sind Polymere, die ein gewichtsmittleres Molekulargewicht M_{w} im Bereich von etwa 500 bis 500 000, bevorzugt 750 bis 200 000, insbesondere 1000 bis 100 000 aufweisen. Die Molmassenbestimmung kann dabei per Gelpermeationschromatographie mit einem Standard, wie Polymethylmethacrylat, erfolgen.

Im Rahmen der vorliegenden Erfindung umfasst der Ausdruck Alkyl geradkettige und verzweigte Alkylgruppen. Geeignete kurzkettige Alkylgruppen sind z. B. geradkettige oder verzweigte C₁-C₇-Alkyl-, bevorzugt C₁-C₆-Alkyl- und besonders bevorzugt C₁-C₄-Alkylgruppen. Dazu zählen insbesondere Methyl, Ethyl, Propyl, Isopropyl, n-Butyl, 2-Butyl, sec.-Butyl, tert.-Butyl, n-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 2-Heptyl, 3-Heptyl, 2-Ethylpentyl, 1-Propylbutyl etc.

Geeignete längerkettige C₈-C₃₀-Alkylgruppen sind geradkettige und verzweigte Alkylgruppen. Bevorzugt handelt es sich dabei um überwiegend lineare Alkylreste, wie sie auch in natürlichen oder synthetischen Fettsäuren und Fettalkoholen sowie Oxoalkoholen vorkommen. Dazu zählen z. B. n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl etc. Der Ausdruck Alkyl umfasst unsubstituierte und substituierte Alkylreste.

Die vorstehenden Ausführungen zu Alkyl gelten auch für die Alkylteile in Arylalkyl. Bevorzugte Arylalkylreste sind Benzyl und Phenylethyl.

C₈-C₃₂-Alkenyl steht im Rahmen der vorliegenden Erfindung für geradkettige und verzweigte Alkenylgruppen, die einfach, zweifach oder mehrfach ungesättigt sein können. Vorzugsweise handelt es sich um C₁₀-C₂₀-Alkenyl. Der Ausdruck Alkenyl umfasst unsubstituierte und substituierte Alkenylreste. Speziell handelt es sich dabei um überwiegend lineare Alkenylreste, wie sie auch in natürlichen oder synthetischen Fettsäuren und Fettalkoholen sowie Oxoalkoholen vorkommen. Dazu zählen insbesondere Octenyl, Nonenyl, Decenyl, Undecenyl, Dodecenyl, Tridecenyl, Tetradecenyl, Pentadecenyl, Hexadecenyl, Heptadecenyl, Octadecenyl, Nonadecenyl, Linolyl, Linolenyl, Eleostearyl und Oleyl (9-Octadecenyl).

Der Ausdruck Alkylen im Sinne der vorliegenden Erfindung steht für geradkettige oder verzweigte Alkandiyl-Gruppen mit 1 bis 7 Kohlenstoffatomen, z. B. Methylen, 1,2-Ethylen, 1,3-Propylen, etc.

Cycloalkyl steht vorzugsweise für C₄-C₈-Cycloalkyl, wie Cyclobutyl, Cyclopentyl, Cyclohexyl, Cycloheptyl oder Cyclooctyl.

Der Ausdruck Aryl umfasst im Rahmen der vorliegenden Erfindung ein- oder mehrkernige aromatische Kohlenwasserstoffreste, die unsubstituiert oder substituiert sein können. Der Ausdruck Aryl steht vorzugsweise für Phenyl, Tolyl, Xylyl, Mesityl, Duryl, Naphthyl, Fluorenyl, Anthracenyl, Phenanthrenyl oder Naphthyl, besonders bevorzugt für Phenyl oder Naphthyl, wobei diese Arylgruppen im Falle einer Substitution im Allgemeinen 1, 2, 3, 4 oder 5, vorzugsweise 1, 2 oder 3 Substituenten tragen können.

Zur Synthese von für den Einsatz in dem erfindungsgemäßen Verfahren geeigneten hyperverzweigten Polymeren eignen sich insbesondere so genannte ABₓ-Monomere. Diese weisen zwei verschiedene funktionelle Gruppen A und B auf, die unter Bildung einer Verknüpfung miteinander reagieren können. Die funktionelle Gruppe A ist dabei nur einmal pro Molekül enthalten und die funktionelle Gruppe B zweifach oder mehrfach (z. B. AB₂- oder AB₃-Monomere). Die ABₓ-Monomere können dabei einerseits vollständig in Form von Verzweigungen in das hyperverzweigte Polymer eingebaut werden, sie können als terminale Gruppen eingebaut werden, also noch x freie B-Gruppen aufweisen, und sie können als lineare Gruppen mit (x-1) freien B-Gruppen eingebaut sein. Die erhaltenen hyperverzweigten Polymere weisen je nach dem Polymerisationsgrad eine mehr oder weniger große Anzahl von B-Gruppen, entweder terminal oder als Seitengruppen auf. Nähere Einzelheiten sind beispielsweise in Journal of Molecular Science, Rev. Macromol. Chem. Phys., C37(3), 555-579 (1997), zu finden.

Vorzugsweise weisen die erfindungsgemäß eingesetzten hyperverzweigten Polymere neben den bei der Synthese der hyperverzweigten Struktur resultierenden Gruppen (z. B. bei hyperverzweigten Polycarbonaten Carbonatgruppen, bei hyperverzweigten Polyurethanen Urethan- und/oder Harnstoffgruppen bzw. weitere aus der Reaktion von Isocyanatgruppen hervorgehende Gruppen; bei hyperverzweigten Polyamiden Amidgruppen, etc.) wenigstens vier weitere funktionelle Gruppen auf. Die maximale Anzahl dieser funktionellen Gruppen ist in der Regel nicht kritisch. Sie beträgt jedoch vielfach nicht mehr als 100. Bevorzugt beträgt die Anzahl an funktionellen Gruppen 4 bis 100, speziell 5 bis 80, und spezieller 6 bis 50.

Die weiteren endständigen funktionellen Gruppen, die die erfindungsgemäß eingesetzten hyperverzweigten Polymere aufweisen, sind z. B. unabhängig voneinander ausgewählt unter -OC(=O)OR, -COOH, -COOR, -CONH₂, -CONHR, -OH, -NH₂, -NHR oder -SO₃H. Mit OH-, COOH- und/oder ROC(=O)O-Gruppen terminierte hyperverzweigte Polymere haben sich als besonders vorteilhaft erwiesen.

### Hyperverzweigte Polycarbonate

Für die Verwendung zur Erhöhung des Glanzes geeignete hyperverzweigte Polycarbonate können beispielsweise hergestellt werden durch
a) Umsetzung mindestens eines organischen Carbonats (A) der allgemeinen Formel R^{a}OC(=O)OR^{b} mit mindestens einem aliphatischen Alkohol (B), welcher mindestens 3 OH-Gruppen aufweist, unter Eliminierung von Alkoholen R^{a}OH bzw. R^{b}OH zu einem oder mehreren Kondensationsprodukten (K), wobei R^{a} und R^{b} jeweils unabhängig voreinander ausgewählt sind unter geradkettigen oder verzweigten Alkyl-, Arylalkyl-, Cycloalkyl- und Arylresten, wobei R^{a} und R^{b} auch gemeinsam mit der Gruppe -OC(=O)O-, an die sie gebunden sind, für ein cyclisches Carbonat stehen können,
b) intermolekulare Umsetzung der Kondensationsprodukte (K) zu einem hochfunktionellen, hyperverzweigten Polycarbonat,
wobei das Mengenverhältnis der OH-Gruppen zu den Carbonaten im Reaktionsgemisch so gewählt wird, dass die Kondensationsprodukte (K) im Mittel entweder eine Carbonatgruppe und mehr als eine OH-Gruppe oder eine OH-Gruppe und mehr als eine Carbonatgruppe aufweisen. Die Reste R^{a} und R^{b} können gleiche oder verschiedene Bedeutungen aufweisen. In einer speziellen Ausführung weisen R^{a} und R^{b} gleiche Bedeutungen auf. Vorzugsweise sind R^{a} und R^{b} ausgewählt unter C₁-C₂₀-Alkyl, C₅-C₇-Cycloalkyl, C₆-C₁₀-Aryl und C₆-C₁₀-Aryl-C₁-C₂₀-alkyl, wie eingangs definiert. R^{a} und R^{b} können auch gemeinsam für eine C₂-C₆-Alkylen-Gruppe stehen. Besonders bevorzugt sind R^{a} und R^{b} ausgewählt unter geradkettigem und verzweigtem C₁-C₅-Alkyl, wie eingangs definiert.

Dialkyl- oder Diarylcarbonate können z. B. hergestellt werden aus der Reaktion von aliphatischen, araliphatischen oder aromatischen Alkoholen, vorzugsweise Monoalkoholen mit Phosgen. Weiterhin können sie auch über oxidative Carbonylierung der Alkohole oder Phenole mittels CO in Gegenwart von Edelmetallen, Sauerstoff oder NOₓ hergestellt werden. Zu Herstellmethoden von Diaryl- oder Dialkylcarbonaten siehe auch "Ullmann's Encyclopedia of Industrial Chemistry", 6th Edition, 2000 Electronic Release, Verlag Wiley-VCH.

Beispiele geeigneter Carbonate umfassen aliphatische oder aromatische Carbonate wie Ethylencarbonat, 1,2- oder 1,3-Propylencarbonat, Diphenylcarbonat, Ditolylcarbonat, Dixylylcarbonat, Dinaphthylcarbonat, Ethylphenylcarbonat, Dibenzylcarbonat, Dimethylcarbonat, Diethylcarbonat, Dipropylcarbonat, Dibutylcarbonat, Diisobutylcarbonat, Dipentylcarbonat, Dihexylcarbonat, Dicyclohexylcarbonat, Diheptylcarbonat, Dioctylcarbonat, Didecylacarbonat und Didodecylcarbonat.

Bevorzugt werden aliphatische Carbonate eingesetzt, insbesondere solche, bei denen die Reste 1 bis 5 C-Atome umfassen, wie z. B. Dimethylcarbonat, Diethylcarbonat, Dipropylcarbonat, Dibutylcarbonat oder Diisobutylcarbonat.

Die organischen Carbonate werden mit mindestens einem aliphatischen Alkohol (B), welcher mindestens 3 OH-Gruppen aufweist oder Gemischen zweier oder mehrerer verschiedener Alkohole umgesetzt.

Beispiele für Verbindungen mit mindestens drei OH-Gruppen sind Glycerin, Trimethylolmethan, Trimethylolethan, Trimethylolpropan, 1,2,4-Butantriol, Tris(hydroxymethyl)amin, Tris(hydroxyethyl)amin, Tris(hydroxypropyl)amin, Pentaerythrit, Bis(trimethylolpropan), Di(pentaerythrit), Di- Tri- oder Oligoglycerine, oder Zucker, wie z. B. Glucose, tri- oder höherfunktionelle Polyetherole auf Basis tri- oder höherfunktioneller Alkohole und Ethylenoxid, Propylenoxid oder Butylenoxid, oder Polyesterole. Dabei sind Glycerin, Trimethylolethan, Trimethylolpropan, 1,2,4-Butantriol, Pentaerythrit, sowie deren Polyetherole auf Basis von Ethylenoxid oder Propylenoxid besonders bevorzugt.

Diese mehrfunktionellen Alkohole können auch in Mischung mit difunktionellen Alkoholen (B') eingesetzt werden, mit der Maßgabe, dass die mittlere OH-Funktionalität aller eingesetzten Alkohole zusammen größer als 2 ist. Beispiele geeigneter Verbindungen mit zwei OH-Gruppen umfassen Ethylenglykol, Diethylenglykol, Triethylenglykol, 1,2-und 1,3-Propandiol, Dipropylenglykol, Tripropylenglykol, Neopentylglykol, 1,2-, 1,3- und 1,4-Butandiol, 1,2-, 1,3-und 1,5-Pentandiol, Hexandiol, Cyclopentandiol, Cyclohexandiol, Cyclohexandimethanol, difunktionelle Polyether- oder Polyesterole.

Die Reaktion des Carbonats mit dem Alkohol oder Alkoholgemisch zum erfindungsgemäßen verwendeten hochfunktionellen hyperverzweigten Polycarbonat erfolgt unter Eliminierung des monofunktionellen Alkohols oder Phenols aus dem Carbonat-Molekül.

Die nach dem geschilderten Verfahren gebildeten hochfunktionellen hyperverzweigten Polycarbonate sind nach der Reaktion, also ohne weitere Modifikation, mit Hydroxylgruppen und/oder mit Carbonatgruppen terminiert. Sie lösen sich gut in verschiedenen Lösemitteln, z. B. in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Unter einem hochfunktionellen Polycarbonat ist im Rahmen dieser Erfindung ein Produkt zu verstehen, das neben den Carbonatgruppen, die das Polymergerüst bilden, end- oder seitenständig weiterhin mindestens vier, bevorzugt mindestens acht funktionelle Gruppen aufweist. Bei den funktionellen Gruppen handelt es sich um Carbonat-gruppen und/oder um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polycarbonate der vorliegenden Erfindung weisen zumeist nicht mehr als 500 end- oder seitenständige funktionelle Gruppen, bevorzugt nicht mehr als 100, insbesondere nicht mehr als 50 end- oder seitenständige funktionelle Gruppen auf.

Bei der Herstellung der hochfunktionellen Polycarbonate ist es notwendig, das Verhältnis von den OH-Gruppen enthaltenden Verbindungen zu dem Carbonat so einzustellen, dass das resultierende einfachste Kondensationsprodukt (im weiteren Kondensationsprodukt (K) genannt) im Mittel entweder eine Carbonatgruppe und mehr als eine OH-Gruppe oder eine OH-Gruppe und mehr als eine Carbonatgruppe enthält. Die einfachste Struktur des Kondensationsproduktes (K) aus einem Carbonat (A) und einem Di- oder Polyalkohol (B) ergibt dabei die Anordnung XYₙ oder YXₙ, wobei X eine Carbonatgruppe, Y eine Hydroxylgruppe und n in der Regel eine Zahl zwischen 1 und 6, vorzugsweise zwischen 1 und 4, besonders bevorzugt zwischen 1 und 3 darstellt. Die reaktive Gruppe, die dabei als einzelne Gruppe resultiert, wird im Folgenden "fokale Gruppe" genannt.

Liegt beispielsweise bei der Herstellung des einfachsten Kondensationsproduktes (K) aus einem Carbonat und einem zweiwertigen Alkohol das Umsetzungsverhältnis bei 1 : 1, so resultiert im Mittel ein Molekül des Typs XY. Bei der Herstellung des Kondensationsproduktes (K) aus einem Carbonat und einem dreiwertigen Alkohol bei einem Umsetzungsverhältnis von 1 : 1 resultiert im Mittel ein Molekül des Typs XY₂. Bei der Herstellung des Kondensationsproduktes (K) aus einem Carbonat und einem vierwertigen Alkohol ebenfalls mit dem Umsetzungsverhältnis 1 : 1 resultiert im Mittel ein Molekül des Typs XY₃. Weiterhin kann die Herstellung des Kondensationsprodukts (K) z. B. auch aus einem Carbonat und einem dreiwertigen Alkohol erfolgen, wobei das molare Umsetzungsverhältnis bei 2 : 1 liegt. Hier resultiert im Mittel ein Molekül des Typs X₂Y, fokale Gruppe ist hier eine OH-Gruppe. Werden zu den Komponenten zusätzlich difunktionelle Verbindungen, z. B. ein Dicarbonat oder ein Diol gegeben, so bewirkt dies eine Verlängerung der Ketten. Es resultiert wieder im Mittel ein Molekül des Typs XY₂, fokale Gruppe ist eine Carbonatgruppe. Die einfachen Kondensationsprodukte (K) reagieren erfindungsgemäß bevorzugt intermolekular unter Bildung von hochfunktionellen Polykondensationsprodukten, im folgenden Polykondensationsprodukte (P) genannt. Die Umsetzung zum Kondensationsprodukt (K) und zum Polykondensationsprodukt (P) erfolgt üblicherweise bei einer Temperatur von 0 bis 250 °C, bevorzugt bei 60 bis 160 °C in Substanz oder in Lösung. Dabei können allgemein alle Lösungsmittel verwendet werden, die gegenüber den jeweiligen Edukten inert sind. Bevorzugt verwendet werden organische Lösungsmittel, wie z. B. Decan, Dodecan, Benzol, Toluol, Chlorbenzol, Xylol, Dimethylformamid, Dimethylacetamid oder Solvent Naphtha.

In einer bevorzugten Ausführungsform wird die Kondensationsreaktion in Substanz durchgeführt. Der bei der Reaktion freiwerdende monofunktionelle Alkohol ROH oder das Phenol, kann zur Beschleunigung der Reaktion destillativ, gegebenenfalls bei vermindertem Druck, aus dem Reaktionsgleichgewicht entfernt werden.

Falls Abdestillieren vorgesehen ist, ist es regelmäßig empfehlenswert, solche Carbonate einzusetzen, welche bei der Umsetzung Alkohole ROH mit einem Siedepunkt von weniger als 140 °C freisetzen.

Zur Beschleunigung der Reaktion können auch Katalysatoren oder Katalysatorgemische zugegeben werden. Geeignete Katalysatoren sind Verbindungen, die Veresterungs- oder Umesterungsreaktionen katalysieren, z. B. Alkalihydroxide, Alkalicarbonate, Alkalihydrogencarbonate, vorzugsweise des Natriums, Kaliums oder Cäsiums, tertiäre Amine, Guanidine, Ammoniumverbindungen, Phosphoniumverbindungen, Aluminium-, Zinn-, Zink, Titan-, Zirkon- oder Wismut-organische Verbindungen, weiterhin so genannte Doppelmetallcyanid (DMC)-Katalysatoren, wie z. B. in der DE 10138216 oder in der DE 10147712 beschrieben.

Vorzugsweise werden Kaliumhydroxid, Kaliumcarbonat, Kaliumhydrogencarbonat, Diazabicyclooctan (DABCO), Diazabicyclononen (DBN), Diazabicycloundecen (DBU), Imidazole, wie Imidazol, 1-Methylimidazol oder 1,2-Dimethylimidazol, Titantetrabutylat, Titantetraisopropylat, Dibutylzinnoxid, Dibutylzinndilaurat, Zinndioctoat, Zirkonacetylacetonat oder Gemische davon eingesetzt.

Die Zugabe des Katalysators erfolgt im Allgemeinen in einer Menge von 50 bis 10000, bevorzugt von 100 bis 5000 Gew. ppm bezogen auf die Menge des eingesetzten Alkohols oder Alkoholgemisches.

Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des Polymeren (P) einstellen.

Die Kondensationsprodukte (K) bzw. die Polykondensationsprodukte (P), die bei erhöhter Temperatur hergestellt wurden, sind bei Raumtemperatur üblicherweise über einen längeren Zeitraum stabil.

Aufgrund der Beschaffenheit der Kondensationsprodukte (K) ist es möglich, dass aus der Kondensationsreaktion Polykondensationsprodukte (P) mit unterschiedlichen Strukturen resultieren können, die Verzweigungen, aber keine Vernetzungen aufweisen. Ferner weisen die Polykondensationsprodukte (P) im Idealfall entweder eine Carbonatgruppe als fokale Gruppe und mehr als zwei OH-Gruppen oder aber eine OH-Gruppe als fokale Gruppe und mehr als zwei Carbonatgruppen auf. Die Anzahl der reaktiven Gruppen ergibt sich dabei aus der Beschaffenheit der eingesetzten Kondensationsprodukte (K) und dem Polykondensationsgrad. Beispielsweise kann ein Kondensationsprodukt (K) durch dreifache intermolekulare Kondensation auch zu zwei verschiedenen Polykondensationsprodukten (P) reagieren.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Produkt (K) oder das Polykondensationsprodukt (P) lagerstabil ist.

In einer weiteren Ausführungsform kann, sobald aufgrund der intermolekularen Reaktion des Kondensationsproduktes (K) ein Polykondensationsprodukt (P) mit gewünschten Polykondensationsgrad vorliegt, dem Produkt (P) zum Abbruch der Reaktion ein Produkt mit gegenüber der fokalen Gruppe von (P) reaktiven Gruppen zugesetzt werden. So kann bei einer Carbonatgruppe als fokaler Gruppe z. B. ein Mono-, Di- oder Polyamin zugegeben werden. Bei einer Hydroxylgruppe als fokaler Gruppe kann dem Produkt (P) beispielsweise ein Mono-, Di- oder Polyisocyanat, eine Epoxidgruppen enthaltende Verbindung oder ein mit OH-Gruppen reaktives Säurederivat zugegeben werden.

Die Herstellung der erfindungsgemäßen hochfunktionellen Polycarbonate erfolgt zumeist in einem Druckbereich von 0,1 mbar bis 20 bar, bevorzugt bei 1 mbar bis 5 bar, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die Produkte nach der Herstellung ohne weitere Reinigung weiterverarbeitet werden.

In einer weiteren bevorzugten Ausführungsform können die Polycarbonate neben den bereits durch die Reaktion erhaltenen funktionellen Gruppen weitere funktionelle Gruppen enthalten. Die Funktionalisierung kann dabei während des Molekulargewichtsaufbaus oder auch nachträglich, d. h. nach Beendigung der eigentlichen Polykondensation erfolgen.

Gibt man vor oder während des Molekulargewichtsaufbaus Komponenten zu, die neben Hydroxyl- oder Carbonatgruppen weitere funktionelle Gruppen oder funktionelle Elemente besitzen, so erhält man ein Polycarbonat-Polymer mit statistisch verteilten von den Carbonat- oder Hydroxylgruppen verschiedenen Funktionalitäten.

Derartige Effekte lassen sich z. B. durch Zusatz von Verbindungen während der Polykondensation erzielen, die neben Hydroxylgruppen oder Carbonatgruppen weitere funktionelle Gruppen oder funktionelle Elemente, wie Mercaptogruppen, primäre, sekundäre oder tertiäre Aminogruppen, Ethergruppen, Derivate von Carbonsäuren, Derivate von Sulfonsäuren, Derivate von Phosphonsäuren, Arylreste oder langkettige Alkylreste tragen. Zur Modifikation mittels Carbamatgruppen lassen sich beispielsweise Ethanolamin, Propanolamin, Isopropanolamin, 2-(Butylamino)ethanol, 2-(Cyclohexyl-amino)ethanol, 2-Amino-1-butanol, 2-(2'-Amino-ethoxy)ethanol oder höhere Alkoxylierungsprodukte des Ammoniaks, 4-Hydroxy-piperidin, 1-Hydroxyethylpiperazin, Diethanolamin, Dipropanolamin, Diisopropanolamin, Tris(hydroxymethyl)aminomethan, Tris(hydroxyethyl)aminomethan, Ethylendiamin, Propylendiamin, Hexamethylendiamin oder Isophorondiamin verwenden.

Für die Modifikation mit Mercaptogruppen lässt sich z. B. Mercaptoethanol oder Thioglycerin einsetzten. Tertiäre Aminogruppen lassen sich z. B. durch Einbau von N-Methyldiethanolamin, N-Methyldipropanolamin oder N,N-Dimethylethanolamin erzeugen. Ethergruppen können z. B. durch Einkondensation von di- oder höherfunktionellen Polyetherolen generiert werden. Durch Reaktion mit langkettigen Alkandiolen lassen sich langkettige Alkylreste einbringen, die Reaktion mit Alkyl- oder Aryldiisocyanaten generiert Alkyl-, Aryl- und Urethangruppen aufweisende Polycarbonate.

Eine nachträgliche Funktionalisierung kann man erhalten, indem das erhaltene hochfunktionelle, hyperverzweigte Polycarbonat mit einem geeigneten Funktionalisierungsreagenz, welches mit den OH- und/oder Carbonat-Gruppen des Polycarbonates reagieren kann, umsetzt.

Hydroxylgruppen enthaltende hochfunktionelle, hyperverzweigte Polycarbonate können z. B. durch Zugabe von Säuregruppen- oder Isocyanatgruppen enthaltenden Molekülen modifiziert werden. Beispielsweise lassen sich Säuregruppen enthaltende Polycarbonate durch Umsetzung mit Anhydridgruppen enthaltenden Verbindungen erhalten.

Weiterhin können Hydroxylgruppen enthaltende hochfunktionelle Polycarbonate auch durch Umsetzung mit Alkylenoxiden, z. B. Ethylenoxid, Propylenoxid oder Butylenoxid, in hochfunktionelle Polycarbonat-Polyetherpolyole überführt werden.

Ein großer Vorteil des erfindungsgemäßen Verfahrens liegt in seiner Wirtschaftlichkeit. Sowohl die Umsetzung zu einem Kondensationsprodukt (K) oder Polykondensationsprodukt (P) als auch die Reaktion von (K) oder (P) zu Polycarbonaten mit anderen funktionellen Gruppen oder Elementen kann in einer Reaktionsvorrichtung erfolgen, was technisch und wirtschaftlich vorteilhaft ist.

### Hyperverzweigte Polyester

Bevorzugt werden als hyperverzweigte Polyester solche vom A₂Bₓ-Typ eingesetzt. Besonders bevorzugt sind hyperverzweigte Polyester solche vom A₂B₃-Typ. Diese weisen gegenüber hyperverzweigten Polyestern vom AB₂-Typ eine weniger starre Struktur auf. Daher sind hyperverzweigte Polyester solche vom AB₂-Typ weniger bevorzugt.

Für die Verwendung zur Erhöhung des Glanzes geeignete hyperverzweigte Polyester sind erhältlich durch Umsetzung mindestens einer aliphatischen, cycloaliphatischen, araliphatischen oder aromatischen Dicarbonsäure (A₂) oder von Derivaten derselben mit
a) mindestens einem mindestens trifunktionellen aliphatischen, cycloaliphatischen, araliphatischen oder aromatischen Alkohol (B₃), oder
b) mit mindestens einem zweiwertigen aliphatischen, cycloaliphatischen, araliphatischen oder aromatischen Alkohol (B₂) mit mindestens einem x-wertigen aliphatischen, cycloaliphatischen, araliphatischen oder aromatischen Alkohol (Cₓ), der mehr als zwei OH-Gruppen aufweist, wobei x eine Zahl größer 2, vorzugsweise 3 bis 8, besonders bevorzugt 3 bis 6, ganz besonders bevorzugt 3 bis 4 und insbesondere 3 ist,
oder durch Umsetzung mindestens einer aliphatischen, cycloaliphatischen, araliphatischen oder aromatischen Carbonsäure (D_{y}) oder deren Derivaten, die mehr als zwei Säuregruppen aufweist, wobei y eine Zahl größer 2, vorzugsweise 3 bis 8, besonders bevorzugt 3 bis 6, ganz besonders bevorzugt 3 bis 4 und insbesondere 3 ist, mit
c) mindestens einem mindestens difunktionellen aliphatischen, cycloaliphatischen, araliphatischen oder aromatischen Alkohol (B₂), oder
d) mit mindestens einem zweiwertigen aliphatischen, cycloaliphatischen, araliphatischen oder aromatischen Alkohol (B₂) mit mindestens einem x-wertigen aliphatischen, cycloaliphatischen, araliphatischen oder aromatischen Alkohol (Cₓ), der mehr als zwei OH-Gruppen aufweist, wobei x eine Zahl größer 2, vorzugsweise 3 bis 8, besonders bevorzugt 3 bis 6, ganz besonders bevorzugt 3 bis 4 und insbesondere 3 ist,
e) gegebenenfalls in Gegenwart weiterer funktionalisierter Bausteine E und
f) optional anschließender Umsetzung mit einer Monocarbonsäure F,
wobei man das Verhältnis der reaktiven Gruppen im Reaktionsgemisch so wählt, dass sich ein molares Verhältnis von OH-Gruppen zu Carboxylgruppen oder deren Derivaten von 5 : 1 bis 1 : 5, vorzugsweise von 4 : 1 bis 1 : 4, besonders bevorzugt von 3 : 1 bis 1 : 3 und ganz besonders bevorzugt von 2 : 1 bis 1 : 2 einstellt.

Unter hyperverzweigten Polyestern werden im Rahmen dieser Erfindung unvernetzte Polyester mit Hydroxyl- und Carboxylgruppen verstanden, die sowohl strukturell als auch molekular uneinheitlich sind. Unvernetzt im Rahmen dieser Schrift bedeutet, dass ein Vernetzungsgrad von weniger als 15 Gew.-%, bevorzugt von weniger als 10 Gew.-%, bestimmt über den unlöslichen Anteil des Polymeren, vorhanden ist. Der unlösliche Anteil des Polymeren wurde bestimmt durch vierstündige Extraktion mit dem gleichen Lösungsmittel, wie es für die Gelpermeationschromatographie verwendet wird, also Tetrahydrofuran oder Hexafluorisopropanol, je nachdem, in welchem Lösungsmittel das Polymer besser löslich ist, in einer Soxhlet-Apparatur und nach Trocknung des Rückstandes bis zur Gewichtskonstanz sowie Wägung des verbliebenen Rückstandes.

Zu den Dicarbonsäuren (A₂) gehören beispielsweise aliphatische Dicarbonsäuren, wie Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-cardicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure. Weiterhin können auch aromatische Dicarbonsäuren, wie z. B. Phthalsäure, Isophthalsäure oder Terephthalsäure verwendet werden. Auch ungesättigte Dicarbonsäuren, wie Maleinsäure oder Fumarsäure, sind einsetzbar.

Die genannten Dicarbonsäuren können auch substituiert sein mit einem oder mehreren Resten, ausgewählt aus C₁-C₁₀-Alkylgruppen, C₃-C₁₂-Cycloalkylgruppen, Alkylengruppen wie Methylen oder Ethyliden oder C₆-C₁₄-Arylgruppen. Als beispielhafte Vertreter für substituierte Dicarbonsäuren seien genannt: 2-Methylmalonsäure, 2-Ethylmalonsäure, 2-Phenylmalonsäure, 2-Methylbernsteinsäure, 2-Ethylbernsteinsäure, 2-Phenylbernsteinsäure, Itaconsäure, 3,3-Dimethylglutarsäure.

Weiterhin lassen sich Gemische von zwei oder mehreren der vorgenannten Dicarbonsäuren einsetzen.

Die Dicarbonsäuren lassen sich entweder als solche oder in Form von ihren Derivaten einsetzen.

C₁-C₄-Alkyl bedeutet im Einzelnen Methyl, Ethyl, iso-Propyl, n-Propyl, n-Butyl, iso-Butyl, sek.-Butyl und tert.-Butyl, bevorzugt Methyl, Ethyl und n-Butyl, besonders bevorzugt Methyl und Ethyl und ganz besonders bevorzugt Methyl.

Es ist auch möglich, ein Gemisch aus einer Dicarbonsäure und einem oder mehreren ihrer Derivate einzusetzen. Gleichfalls ist es möglich, ein Gemisch mehrerer verschiedener Derivate von einer oder mehreren Dicarbonsäuren einzusetzen.

Besonders bevorzugt setzt man Malonsäure, Bernsteinsäure, Glutarsäure, Adipinsäure, 1,2-, 1,3- oder 1,4-Cyclohexandicarbonsäure (Hexahydrophthalsäuren), Phthalsäure, Isophthalsäure, Terephthalsäure oder deren Mono- oder Dialkylester ein.

Umsetzbare Tricarbonsäuren oder Polycarbonsäuren (D_{y}) sind beispielsweise Aconitsäure, 1,3,5-Cyclohexantricarbonsäure, 1,2,4-Benzoltricarbonsäure, 1,3,5-Benzoltricarbonsäure, 1,2,4,5-Benzoltetracarbonsäure (Pyromellitsäure) sowie Mellitsäure und niedermolekulare Polyacrylsäuren.

Tricarbonsäuren oder Polycarbonsäuren (D_{y}) lassen sich entweder als solche oder aber in Form von Derivaten einsetzen.

Derivate sind die betreffenden Anhydride in monomerer oder auch polymerer Form, Mono- oder Dialkylester, bevorzugt Mono- oder Di-C₁-C₄-alkylester, besonders bevorzugt Mono- oder Dimethylester oder die entsprechenden Mono- oder Diethylester, ferner Mono- und Divinylester sowie gemischte Ester, bevorzugt gemischte Ester mit unterschiedlichen C₁-C₄-Alkylkomponenten, besonders bevorzugt gemischte Methylethylester.

Es ist auch möglich, ein Gemisch aus einer Tri- oder Polycarbonsäure und einem oder mehreren ihrer Derivate einzusetzen, z. B. eine Mischung aus Pyromellitsäure und Pyromellitsäuredianhydrid. Gleichfalls ist es möglich, ein Gemisch mehrerer verschiedener Derivate von einer oder mehreren Tri- oder Polycarbonsäuren einzusetzen, z. B. eine Mischung aus 1,3,5-Cyclohexantricarbonsäure und Pyromellitsäuredianhydrid.

Als Diole (B₂) verwendet man beispielsweise Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,2-Decandiol, 1,10-Decandiol, 1,2-Dodecandiol, 1,12-Dodecandiol, 1,5-Hexadien-3,4-diol, 1,2-und 1,3-Cyclopentandiole, 1,2-, 1,3-und 1,4-Cyclohexandiole, 1,1-, 1,2-, 1,3-und 1,4-Bis-(Hydroxymethyl)cyclohexane, 1,1-, 1,2-, 1,3-und 1,4-Bis(Hydroxyethyl)cyclohexane, Neopentylglykol, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole HO(CH₂CH₂O)ₙ-H oder Polypropylenglykole HO(CH[CH₃]CH₂O)ₙ-H, wobei n eine ganze Zahl und n ≥ 4 ist, Polyethylenpolypropylenglykole, wobei die Abfolge der Ethylenoxid- der Propylenoxid-Einheiten blockweise oder statistisch sein kann, Polytetramethylenglykole, vorzugsweise bis zu einem Molgewicht bis zu 5000 g/mol, Poly-1,3-Propandiole, vorzugsweise mit einem Molgewicht bis zu 5000 g/mol, Polycaprolactone oder Gemische von zwei oder mehr Vertretern der voran stehenden Verbindungen. Dabei kann eine oder auch beide Hydroxylgruppen in den vorstehend genannten Diolen durch SH-Gruppen substituiert werden. Bevorzugt eingesetzte Diole sind Ethylenglykol, 1,2-Propandiol, 1,3-Propandiol, 1,4-Butandiol, 1,5-Pentandiol, 1,6-Hexandiol, 1,8-Octandiol, 1,2-, 1,3- und 1,4-Cyclohexandiol, 1,3- und 1,4-Bis(hydroxymethyl)cyclohexan, sowie Diethylenglykol, Triethylenglykol, Dipropylenglykol, Tripropylenglykol, Polyethylenglykole HO(CH₂CH₂O)ₙ-H oder Polypropylenglykole HO(CH[CH₃]CH₂O)ₙ-H, wobei n eine ganze Zahl und n ≥ 4 ist, Polyethylenpolypropylenglykole, wobei die Abfolge der Ethylenoxid- und der Propylenoxid-Einheiten blockweise oder statistisch sein kann, oder Polytetramethylenglykole, vorzugsweise bis zu einem Molgewicht bis zu 5000 g/mol.

Die zweiwertigen Alkohole B₂ können optional noch weitere Funktionalitäten wie beispielsweise Carbonyl-, Carboxy-, Alkoxycarbonyl- oder Sulfonyl-Funktionen enthalten, wie beispielsweise Dimethylolpropionsäure oder Dimethylolbuttersäure, sowie deren C₁-C₄-Alkylester, Glycerinmonostearat oder Glycerinmonooleat.

Mindestens trifunktionelle Alkohole (Cₓ) umfassen Glycerin, Trimethylolmethan, Trimethylolethan, Trimethylolpropan, 1,2,4-Butantriol, Tris(hydroxymethyl)amin, Tris(hydroxyethyl)amin, Tris(hydroxypropyl)amin, Pentaerythrit, Diglycerin, Triglycerin oder höhere Kondensationsprodukte des Glycerins, Di(trimethylolpropan), Di(pentaerythrit), Trishydroxymethylisocyanurat, Tris(hydroxyethyl)isocyanurat (THEIC), Tris(hydroxypropyl)isocyanurat, Inositole oder Zucker, wie z. B. Glucose, Fructose oder Sucrose, Zuckeralkohole wie z. B. Sorbit, Mannit, Threit, Erythrit, Adonit (Ribit), Arabit (Lyxit), Xylit, Dulcit (Galactit), Maltit, Isomalt, tri- oder höherfunktionelle Polyetherole auf Basis tri- oder höherfunktioneller Alkohole und Ethylenoxid, Propylenoxid und/oder Butylenoxid.

Dabei sind Glycerin, Diglycerin, Triglycerin, Trimethylolethan, Trimethylolpropan, Bis(trimethyolopropan), 1,2,4-Butantriol, Pentaerythrit, Di(pentaerythrit), Tris(hydroxyethyl)isocyanurat sowie deren Polyetherole auf Basis von Ethylenoxid und/oder Propylenoxid besonders bevorzugt.

Die Umsetzung kann in Gegenwart oder Abwesenheit eines Lösemittels durchgeführt werden. Als Lösemittel geeignet sind beispielsweise Kohlenwasserstoffe wie Paraffine, Aromaten, Ether und Ketone. Vorzugsweise wird die Reaktion frei von Lösungsmittel durchgeführt. Die Umsetzung kann in Gegenwart eines Wasser entziehenden Mittels als Additiv erfolgen, das man zu Beginn der Reaktion zusetzt. Geeignet sind beispielsweise Molekularsiebe, insbesondere Molekularsieb 4Å, sowie MgSO₄ und Na₂SO₄. Man kann auch während der Reaktion gebildetes Wasser bzw. Alkohol abdestillieren und beispielsweise einen Wasserabscheider einsetzen, bei dem das Wasser mit Hilfe eines Schleppmittels entfernt wird.

Man kann die Umsetzung in Abwesenheit von Katalysatoren durchführen. Vorzugsweise arbeitet man jedoch in Gegenwart von mindestens einem Katalysator. Die sind bevorzugt saure anorganische, metallorganische oder organische Katalysatoren oder Gemische aus mehreren sauren anorganischen, metallorganischen oder organischen Katalysatoren.

Als saure anorganische Katalysatoren im Sinne der vorliegenden Erfindung sind beispielsweise Schwefelsäure, Sulfate und Hydrogensulfate, wie Natriumhydrogensulfat, Phosphorsäure, Phosphonsäure, hypophosphorige Säure, Aluminiumsulfathydrat, Alaun, saures Kieselgel (pH ≤ 6, insbesondere ≤ 5) und saures Aluminiumoxid zu nennen. Weiterhin sind beispielsweise Aluminiumverbindungen der allgemeinen Formel Al(OR¹)₃ und Titanate einsetzbar. Bevorzugte saure metallorganische Katalysatoren sind beispielsweise Dialkylzinnoxide oder Dialkylzinnester. Bevorzugte saure organische Katalysatoren sind saure organische Verbindungen mit beispielsweise Phosphatgruppen, Sulfonsäuregruppen, Sulfatgruppen oder Phosphonsäuregruppen. Man kann auch saure lonentauscher als saure organische Katalysatoren einsetzen.

Die Umsetzung wird bei Temperaturen von 60 bis 250 °C durchgeführt.

Die erfindungsgemäß verwendeten hyperverzweigten Polyester haben ein Molekulargewicht M_{w} von mindestens 500, bevorzugt mindestens 600 und besonders bevorzugt 1000 g/mol. Die obere Grenze des Molekulargewichts M_{w} ist bevorzugt 500 000 g/mol, besonders bevorzugt beträgt es nicht mehr als 200 000 und ganz besonders bevorzugt nicht mehr als 100 000 g/mol.

Die Angaben zur Polydispersität sowie zum zahlenmittleren und gewichtsmittleren Molekulargewicht Mₙ und M_{w} beziehen sich hier auf gelpermeationschromatographische Messungen, wobei Polymethylmethacrylat als Standard und Tetrahydrofuran, Dimethylformamid, Dimethylacetamid oder Hexafluorisopropanol als Elutionsmittel verwendet wurden. Die Methode ist im Analytiker Taschenbuch Bd. 4, Seiten 433 bis 442, Berlin 1984 beschrieben.

Die Polydispersität der erfindungsgemäß verwendeten Polyester beträgt im Allgemeinen 1,2 bis 50, bevorzugt 1,4 bis 40, besonders bevorzugt 1,5 bis 30 und ganz besonders bevorzugt 2 bis 30.

### Hyperverzweigte Polyurethane

Der Begriff "Polyurethane" im Sinne dieser Erfindung umfasst über das übliche Verständnis hinaus Polymere, die durch Umsetzung von Di- oder Polyisocyanaten mit Verbindungen mit aktivem Wasserstoff erhalten werden können, und die durch Urethan- aber auch beispielsweise durch Harnstoff-, Allophanat-, Biuret-, Carbodiimid-, Amid-, Uretonimin-, Uretdion-, Isocyanurat- oder Oxazolidon-Strukturen verknüpft sein können.

Zur Synthese der erfindungsgemäß verwendeten hyperverzweigten Polyurethane können ABₓ-Monomere eingesetzt werden, die sowohl Isocyanatgruppen als auch Gruppen, die mit Isocyanatgruppen unter Bildung einer Verknüpfung reagieren können, aufweisen. Zur Synthese der erfindungsgemäß verwendeten hyperverzweigten Polyurethane können auch Monomerkombinationen eingesetzt, die zunächst intermediär ABₓ-Bausteine bilden, wobei x für eine natürliche Zahl zwischen 2 und 8, bevorzugt 2 oder 3, steht. Solche hyperverzweigten Polyurethane und Verfahren zu ihrer Herstellung sind in der WO 97/02304 beschrieben, worauf hier Bezug genommen wird. Geeignete hyperverzweigte Polyurethane können auch durch Umsetzung von Diisocyanaten und/oder Polyisocyanaten mit Verbindungen mit mindestens zwei mit Isocyanaten reaktiven Gruppen erhalten werden, wobei mindestens einer der Reaktionspartner funktionelle Gruppen mit gegenüber dem anderen Reaktionspartner unterschiedlicher Reaktivität aufweist und die Reaktionsbedingungen so gewählt werden, dass bei jedem Reaktionsschritt jeweils nur bestimmte reaktive Gruppen miteinander reagieren. Solche hyperverzweigten Polyurethane und Verfahren zu ihrer Herstellung sind in der EP 1026185 beschrieben, worauf hier Bezug genommen wird.

Bei den mit den Isocyanatgruppen reaktiven Gruppen handelt es sich bevorzugt um OH-, NH₂-, NHR- oder SH-Gruppen.

Die ABₓ-Monomere sind in bekannter Art und Weise herstellbar. ABₓ-Monomere können beispielsweise nach der in WO 97/02304 beschriebenen Methode unter Anwendung von Schutzgruppentechniken synthetisiert werden. Beispielhaft sei diese Technik an der Herstellung eines AB₂-Monomers aus 2,4-Toluylendiisocyanat (TDI) und Trimethylolpropan erläutert. Zunächst wird eine der Isocyanatgruppen des TDI in bekannter Art und Weise verkappt, beispielsweise durch Umsetzung mit einem Oxim. Die verbleibende freie NCO-Gruppe wird mit Trimethylolpropan umgesetzt, wobei nur eine der drei OH-Gruppen mit der Isocyanatgruppe reagiert, während zwei OH-Gruppen über Acetalisierung blockiert sind. Nach Abspalten der Schutzgruppe wird ein Molekül mit einer Isocyanatgruppe und zwei OH-Gruppen erhalten.

Besonders vorteilhaft können die ABₓ-Moleküle nach der in der DE-A 199 04 444 beschriebenen Methode synthetisiert werden, bei der keine Schutzgruppen erforderlich sind. Bei dieser Methode werden Di- oder Polyisocyanate eingesetzt und mit Verbindungen, die mindestens zwei mit Isocyanatgruppen reaktive Gruppen aufweisen, umgesetzt. Zumindest einer der Reaktionspartner weist dabei Gruppen mit gegenüber dem anderen Reaktionspartner unterschiedlicher Reaktivität auf. Bevorzugt weisen beide Reaktionspartner Gruppen mit gegenüber dem anderen Reaktionspartner unterschiedlicher Reaktivität auf. Die Reaktionsbedingungen werden so gewählt, dass nur bestimmte reaktive Gruppen miteinander reagieren können.

Als Di- und Polyisocyanate kommen die aus dem Stand der Technik bekannten aliphatischen, cycloaliphatischen und aromatischen Isocyanate in Frage. Bevorzugte Di- oder Polyisocyanate sind 4,4'-Diphenylmethandiisocyanat, die Mischungen aus monomeren Diphenylmethandiisocyanaten und oligomeren Diphenylmethandiisocyanaten (Polymer-MDI), Tetramethylendiisocyanat, Hexamethylendiisocyanat, 4,4'-Methylen-bis(cyclohexyl)-diisocyanat, Xylylendiisocyanat, Tetramethylxylylendiisocyanat, Dodecyldiisocyanat, Lysinalkylesterdiisocyanat, wobei Alkyl für C₁-C₁₀-Alkyl steht, 2,2,4- oder 2,4,4-Trimethyl-1,6-hexamethylendiisocyanat, 1,4-Diisocyanatocyclohexan oder 4-Isocyanatomethyl-1,8-octamethylendiisocyanat.

Besonders bevorzugt sind Di- oder Polyisocyanate mit NCO-Gruppen unterschiedlicher Reaktivität, wie 2,4-Toluylendiisocyanat (2,4-TDI), 2,4'-Diphenylmethandiisocyanat (2,4'-MDI), Triisocyanatotoluol, Isophorondiisocyanat (IPDI), 2-Butyl-2-ethylpenta-methylendiisocyanat, 2-Isocyanatopropylcyclohexylisocyanat, 3(4)-Isocyanatomethyl-1-methylcyclohexylisocyanat, 1,4-Diisocyanato-4-methylpentan, 2,4'-Methylenbis(cyclohexyl)diisocyanat und 4-Methylcyclohexan-1,3-diisocyanat (H-TDI). Weiterhin sind Isocyanate (b) besonders bevorzugt, deren NCO-Gruppen zunächst gleich reaktiv sind, bei denen sich jedoch durch Erstaddition eines Alkohols oder Amins an eine NCO-Gruppe ein Reaktivitätsabfall bei der zweiten NCO-Gruppe induzieren lässt. Beispiele dafür sind Isocyanate, deren NCO-Gruppen über ein delokalisiertes Elektronensystem gekoppelt sind, z. B. 1,3- und 1,4-Phenylendiisocyanat, 1,5-Naphthylendiisocyanat, Diphenyldiisocyanat, Tolidindiisocyanat oder 2,6-Toluylendiisocyanat.

Weiterhin können beispielsweise Oligo- oder Polyisocyanate verwendet werden, die sich aus den genannten Di- oder Polyisocyanaten oder deren Mischungen durch Verknüpfung mittels Urethan, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen.

Als Verbindungen mit mindestens zwei mit Isocyanaten reaktiven Gruppen werden vorzugsweise di-, tri- oder tetrafunktionelle Verbindungen eingesetzt, deren funktionelle Gruppen gegenüber NCO-Gruppen eine unterschiedliche Reaktivität aufweisen. Bevorzugt sind Verbindungen mit mindestens einer primären und mindestens einer sekundären Hydroxylgruppe, mindestens einer Hydroxylgruppe und mindestens einer Mercaptogruppe, besonders bevorzugt mit mindestens einer Hydroxylgruppe und mindestens einer Aminogruppe im Molekül, insbesondere Aminoalkohole, Aminodiole und Aminotriole, da die Reaktivität der Aminogruppe gegenüber der Hydroxylgruppe bei der Umsetzung mit Isocyanat deutlich höher ist.

Beispiele für die genannten Verbindungen mit mindestens zwei mit Isocyanaten reaktiven Gruppen sind Propylenglykol, Glycerin, Mercaptoethanol, Ethanolamin, N-Methylethanolamin, Diethanolamin, Ethanolpropanolamin, Dipropanolamin, Diisopropanolamin, 2-Amino-1,3-propandiol, 2-Amino-2-methyl-1,3-propandiol oder Tris(hydroxymethyl)-aminomethan. Weiterhin sind auch Mischungen der genannten Verbindungen einsetzbar.

Die Herstellung eines AB₂-Moleküls sei beispielhaft für den Fall eines Diisocyanate mit einem Aminodiol erläutert. Hierbei wird zunächst ein Mol eines Diisocyanats mit einem Mol eines Aminodiols bei niedrigen Temperaturen, vorzugsweise im Bereich zwischen -10 bis 30 °C, umgesetzt. In diesem Temperaturbereich erfolgt eine praktisch vollständige Unterdrückung der Urethanbildungsreaktion und die reaktiveren NCO-Gruppen des Isocyanates reagieren ausschließlich mit der Aminogruppe des Aminodiols. Das gebildete ABₓ-Molekül weist eine freie NCO-Gruppe sowie zwei freie OH-Gruppen auf und kann zur Synthese eines hyperverzweigten Polyurethans eingesetzt werden.

Durch Erwärmung und/oder Katalysatorzugabe kann dieses AB₂-Molekül intermolekular zu einem hyperverzweigten Polyurethan reagieren. Die Synthese des hyperverzweigten Polyurethans kann vorteilhaft ohne vorherige Isolierung des ABₓ-Moleküls in einem weiteren Reaktionsschritt bei erhöhter Temperatur erfolgen, vorzugsweise im Bereich zwischen 30 und 80 °C. Bei Verwendung des geschilderten AB₂-Moleküls mit zwei OH-Gruppen und einer NCO-Gruppe entsteht ein hyperverzweigtes Polymer, welches pro Molekül eine freie NCO-Gruppe sowie - je nach Polymerisationsgrad - eine mehr oder weniger große Zahl von OH-Gruppen aufweist. Die Reaktion kann bis zu hohen Umsätzen durchgeführt werden, wodurch sehr hochmolekulare Strukturen erhalten werden. Sie kann aber auch beispielsweise durch Zugabe geeigneter monofunktioneller Verbindungen oder durch Zugabe einer der Ausgangsverbindungen zur Herstellung des AB₂-Moleküls beim Erreichen des gewünschten Molekulargewichtes abgebrochen werden. Je nach der zum Abbruch verwendeten Ausgangsverbindung entstehen entweder vollständig NCO-terminierte oder vollständig OH-terminierte Moleküle.

Alternativ kann beispielsweise auch ein AB₂-Molekül aus einem Mol Glycerin und 2 mol 2,4-TDI hergestellt werden. Bei tiefer Temperatur reagieren vorzugsweise die primären Alkoholgruppen sowie die Isocyanatgruppe in 4-Stellung und es wird ein Addukt gebildet, welches eine OH-Gruppe und zwei Isocyanatgruppen aufweist, und welches wie geschildert bei höheren Temperaturen zu einem hyperverzweigten Polyurethan umge-setzt werden kann. Es entsteht zunächst ein hyperverzweigtes Polymer, welches eine freie OH-Gruppe sowie - je nach Polymerisationsgrad - eine mehr oder weniger große Zahl von NCO-Gruppen aufweist.

Die Herstellung der hyperverzweigten Polyurethane kann prinzipiell ohne Lösungsmittel, bevorzugt aber in Lösung erfolgen. Als Lösungsmittel prinzipiell geeignet sind alle bei der Umsetzungstemperatur flüssigen und gegenüber den Monomeren und Polymeren inerten Verbindungen geeignet.

Andere Produkte sind durch weitere Synthesevarianten zugänglich. AB₃-Moleküle lassen sich beispielsweise durch Reaktion von Diisocyanaten mit Verbindungen mit mindestens vier gegenüber Isocyanaten reaktiven Gruppen erhalten. Beispielhaft sei die Umsetzung von 2,4-Toluylendüsocyanat mit Tris(hydroxymethyl)aminomethan genannt.

Zum Abbruch der Polymerisation können auch polyfunktionelle Verbindungen eingesetzt werden, die mit den jeweiligen A-Gruppen reagieren können. Auf diese Art und Weise können mehrere kleine hyperverzweigte Moleküle zu einem großen hyperverzweigten Molekül verknüpft werden.

Hyperverzweigte Polyurethane mit kettenverlängerten Ästen lassen sich beispielsweise erhalten, indem zur Polymerisationsreaktion neben den ABₓ-Molekülen zusätzlich im molaren Verhältnis 1 : 1 ein Diisocyanat und eine Verbindung, die zwei mit Isocyanatgruppen reaktive Gruppen aufweist, eingesetzt werden. Diese zusätzlichen AA- bzw. BB-Verbindungen können auch noch über weitere funktionelle Gruppen verfügen, die aber unter den gewählten Reaktionsbedingungen nicht reaktiv gegenüber den A- oder B-Gruppen sein dürfen. Auf diese Art und Weise können weitere Funktionalitäten in das hyperverzweigte Polymer eingebracht werden.

Weitere Synthesevarianten für hyperverzweigte Polyurethane finden sich in DE 100 13 187 und DE 100 30 869.

Die funktionellen Gruppen der durch die Aufbaureaktion erhaltenen hyperverzweigten Polyurethane können, wie oben beschrieben, hydrophobiert, hydrophiliert oder umfunktionalisiert werden. Zur Umfunktionalisierung eignen sich aufgrund ihrer Reaktivität ganz besonders solche hyperverzweigten Polyurethane, die Isocyanatgruppen aufweisen. Es können auch OH- oder NH₂-terminierte Polyurethane mittels geeigneter Reaktionspartner umfunktionalisiert werden.

Bevorzugte Gruppen, die in die hyperverzweigten Polyurethane eingeführt werden, sind -COOH, -CONH₂, -OH, -NH₂, -NHR, -NR₂, -NR₃⁺, -SO₃H und deren Salze.

Gruppen, die über ausreichend acide H-Atome verfügen, können durch Behandlung mit geeigneten Basen in die entsprechenden Salze überführt werden. Analog lassen sich basische Gruppen mit geeigneten Säuren in die entsprechenden Salze überführen. Dadurch lassen sich wasserlösliche hyperverzweigte Polyurethane erhalten.

Durch Umsetzung NCO-terminierter Produkte mit gesättigten oder ungesättigten aliphatischen Alkoholen und Aminen, insbesondere mit C₈-C₄₀-Alkylresten, lassen sich hydrophobierte Produkte erhalten.

Hydrophilierte, aber nicht ionische Produkte lassen sich durch Reaktion NCO-terminierter Polymere mit Polyetheralkoholen, wie beispielsweise Di-, Tri- oder Tetra- oder Polyethylenglykol erhalten.

Säuregruppen lassen sich beispielsweise durch Umsetzung mit Hydroxycarbonsäuren, Hydroxysulfonsäuren oder Aminosäuren einführen. Als Beispiele geeigneter Reaktionspartner seien 2-Hydroxyessigsäure, 4-Hydroxybenzoesäure, 12-Hydroxydodecansäure, 2-Hydroxyethansulfonsäure, Glycin oder Alanin genannt.

Es können auch hyperverzweigte Polyurethane erzeugt werden, die verschiedenartige Funktionalitäten aufweisen. Dies kann beispielsweise durch Umsetzung mit einem Gemisch verschiedener Verbindungen erfolgen, oder auch dadurch, dass man nur einen Teil der ursprünglich vorhandenen funktionellen Gruppen, beispielsweise nur einen Teil der OH- und/oder NCO-Gruppen, umsetzt.

Die Umfunktionalisierung des hyperverzweigten Polyurethans kann vorteilhaft unmittelbar im Anschluss an die Polymerisationsreaktion erfolgen, ohne dass das NCOterminierte Polyurethan vorher isoliert wird. Die Funktionalisierung kann aber auch in einer separaten Reaktion erfolgen.

Die erfindungsgemäß verwendeten hyperverzweigten Polyurethane weisen in der Regel im Mittel mindestens 4 und nicht mehr als 100 funktionelle Gruppen auf. Bevorzugt weisen die hyperverzweigten Polyurethane 8 bis 80 und besonders bevorzugt 8 bis 50 funktionelle Gruppen auf. Bevorzugt eingesetzte hyperverzweigte Polyurethane weisen ein gewichtsmittleres Molekulargewicht M_{w} von 1000 bis 500 000 g/mol, bevorzugt 5 000 bis 200 000 g/mol, besonders bevorzugt 10 000 bis 100 000 g/mol auf.

### Hyperverzweigte Polyharnstoffe

Hochfunktionelle hyperverzweigte Polyharnstoffe, welche erfindungsgemäß als Bestandteile zur Erhöhung des Glanzes verwendet werden, lassen sich z. B. erhalten durch Umsetzung von einem oder mehreren Carbonaten mit einem oder mehreren Aminen mit mindestens zwei primären und/oder sekundären Aminogruppen erhalten, wobei mindestens ein Amin mindestens drei primäre und/oder sekundäre Aminogruppen aufweist.

Geeignete Carbonate sind aliphatische, aromatische oder gemischt aliphatischaromatische Carbonate, bevorzugt sind aliphatische Carbonate wie Dialkylcarbonate mit C₁-C₁₂-Alkylresten. Beispiele sind Ethylencarbonat, 1,2- oder 1,3-Propylencarbonat, Diphenylcarbonat, Ditolylcarbonat, Dinaphthylcarbonat, Ethylphenylcarbonat, Dibenzylcarbonat, Dimethylcarbonat, Diethylcarbonat, Dipropylcarbonat, Dibutylcarbonat, Diisobutylcarbonat, Dipentylcarbonat, Dihexylcarbonat, Diheptylcarbonat, Dioctylcarbonat, Didecylcarbonat oder Didodecylcarbonat. Besonders bevorzugt eingesetzte Carbonate sind Dimethylcarbonat, Diethylcarbonat, Dibutylcarbonat und Diisobutylcarbonat.

Die Carbonate werden mit einem oder mehreren Aminen mit mindestens zwei primären und/oder sekundären Aminogruppen umgesetzt, wobei mindestens ein Amin mindesten drei primäre und/oder sekundäre Aminogruppen aufweist. Amine mit zwei primären und/oder sekundären Aminogruppen bewirken eine Kettenverlängerung innerhalb der Polyharnstoffe, während Amine mit drei oder mehr primären und/oder sekundären Aminogruppen ursächlich für die Verzweigungen in den erhaltenen hochfunktionellen, hyperverzweigten Polyharnstoffen sind.

Geeignete Amine mit zwei gegenüber einer Carbonat- oder Carbamatgruppe reaktiven, primären oder sekundären Aminogruppen sind beispielsweise Ethylendiamin, N-Alkylethylendiamin, Propylendiamin, 2,2-Dimethyl-1,3-propylendiamin, N-Alkylpropylendiamin, Butylendiamin, N-Alkylbutylendiamin, Pentandiamin, Hexamethylendiamin, N-Alkylhexamethylendiamin, Heptandiamin, Octandiamin, Nonandiamin, Decandiamin, Dodecandiamin, Hexadecandiamin, Toluylendiamin, Xylylendiamin, Diaminodiphenylmethan, Diaminodicyclohexylmethan, Phenylendiamin, Cyclohexylendiamin, Bis(aminomethyl)cyclohexan, Diaminodiphenylsulfon, Isophorondiamin, 2-Butyl-2-ethyl-1,5-pentamethylendiamin, 2,2,4- oder 2,4,4-Trimethyl-1,6-hexamethylendiamin, 2-Aminopropylcyclohexylamin, 3(4)-Aminomethyl-1-methylcyclohexylamin, 1,4-Diamino-4-methylpentan, Amin-terminierte Polyoxyalkylenpolyole (so genannte Jeffamine) oder Amin-terminierte Polytetramethylenglykole.

Bevorzugt weisen die Amine zwei primäre Aminogruppen auf, wie z. B. Ethylendiamin, Propylendiamin, 2,2-Dimethyl-1,3-propandiamin, Butylendiamin, Pentandiamin, Hexamethylendiamin, Heptandiamin, Octandiamin, Nonandiamin, Decandiamin, Dodecandiamin, Hexadecandiamin, Toluylendiamin, Xylylendiamin, Diaminodiphenylmethan, Diaminodicyclohexylmethan, Phenylendiamin, Cyclohexylendiamin, Diaminodiphenylsulfon, Isophorondiamin, Bis(aminomethyl)cyclohexan, 2-Butyl-2-ethyl-1,5-pentamethy-lendiamin, 2,2,4- oder 2,4,4-Trimethyl-1,6-hexamethylendiamin, 2-Aminopropylcyclohexylamin, 3(4)-Aminomethyl-1-methylcyclohexylamin, 1,4-Diamino-4-methyl-pentan, Amin-terminierte Polyoxyalkylenpolyole (so genannte Jeffamine) oder Amin-terminierte Polytetramethylenglykole.

Besonders bevorzugt sind Butylendiamin, Pentandiamin, Hexamethylendiamin, Toluylendiamin, Xylylendiamin, Diaminodiphenylmethan, Diaminodicyclohexylmethan, Phenylendiamin, Cyclohexylendiamin, Diaminodiphenylsulfon, Isophorondiamin, Bis(aminomethyl)cyclohexan, Amin-terminierte Polyoxyalkylenpolyole (so genannte Jeffamine) oder Amin-terminierte Polytetramethylenglykole.

Geeignete Amine mit drei oder mehr gegenüber einer Carbonat- oder Carbamatgruppe reaktiven primären und/oder sekundären Aminogruppen sind beispielsweise Tris(aminoethyl)amin, Tris(aminopropyl)amin, Tris(aminohexyl)amin, Trisaminohexan, 4-Aminomethyl-1,8-octamethylendiamin, Trisaminononan, Bis(aminoethyl)amin, Bis(aminopropyl)amin, Bis(aminobutyl)amin, Bis(aminopentyl)amin, Bis(aminohexyl)amin, N-(2-Aminoethyl)propandiamin, Melamin, oligomere Diaminodiphenylmethane, N,N'-Bis(3-aminopropyl)ethylendiamin, N,N'-Bis(3-aminopropyl)butandiamin, N,N,N',N'-Tetra(3-aminopropyl)ethylendiamin, N,N,N',N'-Tetra(3-aminopropyl)butylendiamin, drei- oder höherfunktionelle Amin-terminierte Polyoxyalkylenpolyole (so genannte Jeffamine), drei- oder höherfunktionelle Polyethylenimine oder drei- oder höherfunktionelle Polypropylenimine.

Bevorzugte Amine mit drei oder mehr reaktiven primären und/oder sekundären Aminogruppen sind Tris(aminoethyl)amin, Tris(aminopropyl)amin, Tris(aminohexyl)amin, Trisaminohexan, 4-Aminomethyl-1,8-octamethylendiamin, Trisaminononan, Bis(aminoethyl)amin, Bis(aminopropyl)amin, Bis(aminobutyl)amin, Bis(aminopentyl)amin, Bis(aminohexyl)amin, N-(2-Aminoethyl)propandiamin, Melamin oder drei- oder höherfunktionelle Amin-terminierte Polyoxyalkylenpolyole (so genannte Jeffamine).

Besonders bevorzugt sind Amine mit drei oder mehr primären Aminogruppen, wie Tris(aminoethyl)amin, Tris(aminopropyl)amin, Tris(aminohexyl)amin, Trisaminohexan, 4-Aminomethyl-1,8-octamethylendiamin, Trisaminononan oder drei- oder höherfunktionelle Amin-terminierte Polyoxyalkylenpolyole (so genannte Jeffamine).

Selbstverständlich können auch Gemische der genannten Amine eingesetzt werden.

Im Allgemeinen werden sowohl Amine mit zwei primären oder sekundären Aminogruppen neben Aminen mit drei oder mehr primären oder sekundären Aminogruppen eingesetzt. Derartige Amingemische lassen sich auch durch die mittlere Aminfunktionalität charakterisieren, wobei nicht reaktive tertiäre Aminogruppen außer Betracht bleiben. So weist beispielsweise ein äquimolares Gemisch aus einem Diamin und einem Triamin eine mittlere Funktionalität von 2,5 auf. Bevorzugt werden solche Amingemische umgesetzt, bei denen die mittlere Aminfunktionalität von 2,1 bis 10, insbesondere von 2,1 bis 5 beträgt.

Die Reaktion des Carbonats mit dem Di- oder Polyamin zum erfindungsgemäß verwendeten hochfunktionellen hyperverzweigten Polyharnstoff erfolgt unter Eliminierung des in dem Carbonat gebundenen Alkohols oder Phenols. Reagiert ein Molekül Carbonat mit zwei Aminogruppen, so werden zwei Moleküle Alkohol oder Phenol eliminiert und eine Harnstoffgruppe gebildet. Reagiert ein Molekül Carbonat mit nur einer Aminogruppe, so wird unter Eliminierung eines Moleküls Alkohol oder Phenol eine Carbamatgruppe gebildet.

Die Umsetzung des Carbonats oder der Carbonate mit dem Amin oder den Aminen kann in einem Lösungsmittel erfolgen. Dabei können allgemein alle Lösungsmittel eingesetzt werden, die gegenüber den jeweiligen Edukten inert sind. Bevorzugt wird in organischen Lösungsmitteln, wie Decan, Dodecan, Benzol, Toluol, Chlorbenzol, Dichlorbenzol, Xylol, Dimethylformamid, Dimethylacetamid oder Solventnaphtha gearbeitet.

In einer bevorzugten Ausführungsform des wird die Umsetzung in Substanz, also ohne inertes Lösungsmittel durchgeführt. Der bei der Reaktion zwischen Amin und Carbonat bzw. Carbamat freiwerdende Alkohol bzw. das freiwerdende Phenol können destillativ, gegebenenfalls bei vermindertem Druck, abgetrennt und so aus dem Reaktionsgleichgewicht entfernt werden. Dadurch wird auch die Umsetzung beschleunigt.

Zur Beschleunigung der Reaktion zwischen Amin und Carbonat bzw. Carbamat können auch Katalysatoren oder Katalysatorgemische zugegeben werden. Geeignete Katalysatoren sind im allgemeinen Verbindungen, die die Carbamat- oder Harnstoffbildung katalysieren, z. B. Alkali- oder Erdalkalihydroxide, Alkali- oder Erdalkalihydrogencarbonate, Alkali- oder Erdalkalicarbonate, tertiäre Amine, Ammoniumverbindungen, Aluminium-, Zinn-, Zink-, Titan-, Zirkon- oder Wismut-organische Verbindungen. Beispielsweise können Lithium-, Natrium-, Kalium- oder Cäsiumhydroxid, Lithium-, Natrium-, Kalium- oder Cäsiumcarbonat, Diazabicyclooctan (DABCO), Diazabicyclononen (DBN), Diazabicycloundecen (DBU), Imidazole, wie Imidazol, 1-Methylimidazol, 2-Methylimidazol, 1,2-Dimethylimidazol, Titantetrabutylat, Dibutylzinnoxid, Dibutylzinndilaurat, Zinndioctoat, Zirkonacetylacetonat oder Gemische davon eingesetzt werden.

Die Zugabe des Katalysators erfolgt im Allgemeinen in einer Menge von 50 bis 10 000, bevorzugt von 100 bis 5000 Gew.-ppm, bezogen auf die Menge des eingesetzten Amins.

Die so hergestellten hochfunktionellen hyperverzweigten Polyharnstoffe sind nach der Umsetzung, also ohne weitere Modifikation, entweder mit Amino- oder mit Carbamatgruppen terminiert. Sie lösen sich gut in polaren Lösemitteln, z. B. in Wasser, Alkoholen, wie Methanol, Ethanol, Butanol, Alkohol/Wasser-Mischungen, Dimethylformamid, Dimethylacetamid, N-Methylpyrrolidon, Ethylencarbonat oder Propylencarbonat.

Unter einem hochfunktionellen hyperverzweigten Polyharnstoff im Sinne der Erfindung wird ein Produkt verstanden, das Harnstoffgruppen sowie mindestens vier, bevorzugt mindestens sechs, insbesondere mindestens acht funktionelle Gruppen aufweist. Die Anzahl der funktionellen Gruppen ist prinzipiell nach oben nicht beschränkt, jedoch können Produkte mit einer sehr hohen Anzahl von funktionellen Gruppen unerwünschte Eigenschaften, beispielsweise eine hohe Viskosität oder eine schlechte Löslichkeit, aufweisen. Die erfindungsgemäß verwendeten hochfunktionellen Polyharnstoffe weisen daher im Allgemeinen nicht mehr als 100 funktionelle Gruppen, bevorzugt nicht mehr als 30 funktionelle Gruppen auf. Unter funktionellen Gruppen sind hier primäre, sekundäre oder tertiäre Aminogruppen oder Carbamatgruppen zu verstehen. Daneben kann der hochfunktionelle hyperverzweigte Polyharnstoff weitere funktionelle Gruppen aufweisen, die nicht am Aufbau des hyperverzweigten Polymers teilnehmen (siehe unten). Diese weiteren funktionellen Gruppen können durch Di- oder Polyamine eingeführt werden, welche neben primären und sekundären Aminogruppen noch weitere funktionelle Gruppen aufweisen.

Die erfindungsgemäß verwendeten Polyharnstoffe können weitere funktionelle Gruppen enthalten. Die Funktionalisierung kann dabei während der Umsetzung des Carbonats mit dem oder den Aminen, also während der den Molekulargewichtsaufbau bewirkenden Polykondensationsreaktion, oder aber nach Beendigung der Polykondensationsreaktion durch nachträgliche Funktionalisierung der erhaltenen Polyharnstoffe erfolgen.

Gibt man vor oder während des Molekulargewichtsaufbaus Komponenten zu, die neben Amino- oder Carbamatgruppen weitere funktionelle Gruppen aufweisen, so erhält man einen Polyharnstoff mit statistisch verteilten weiteren, das heißt von den Carbamat- oder Aminogruppen verschiedenen funktionellen Gruppen.

Beispielsweise können vor oder während der Polykondensation Komponenten zugegeben werden, die neben Aminogruppen oder Carbamatgruppen Hydroxylgruppen, Mercaptogruppen, tertiäre Aminogruppen, Ethergruppen, Carboxylgruppen, Sulfonsäuregruppen, Phosphonsäuregruppen, Arylreste oder langkettige Alkylreste aufweisen.

Hydroxylgruppen aufweisende Komponenten, die zur Funktionalisierung zugesetzt werden können, umfassen beispielsweise Ethanolamin, N-Methylethanolamin, Propanolamin, Isopropanolamin, Butanolamin, 2-Amino-1-butanol, 2-(Butylamino)ethanol, 2-(Cyclohexylamino)ethanol, 2-(2'-Aminoethoxy)ethanol oder höhere Alkoxylierungsprodukte des Ammoniaks, 4-Hydroxypiperidin, 1-Hydroxyethylpiperazin, Diethanolamin, Dipropanolamin, Düsopropanolamin, Tris(hydroxymethyl)aminomethan oder Tris(hydroxyethyl)aminomethan.

Mercaptogruppen enthaltende Komponenten, die zur Funktionalisierung zugesetzt werden können, umfassen beispielsweise Cysteamin. Mit tertiären Aminogruppen lassen sich die hyperverzweigten Polyharnstoffe z. B. durch Mitverwendung von N-Methyldiethylentriamin oder N,N-Dimethylethylendiamin funktionalisieren. Mit Ethergruppen lassen sich die hyperverzweigten Polyharnstoffe durch Mitverwendung von Amin-terminierten Polyetherolen (so genannten Jeffaminen) funktionalisieren. Mit Säuregruppen lassen sich die hyperverzweigten Polyharnstoffe z. B. durch Mitverwendung von Aminocarbonsäuren, Aminosulfonsäuren oder Aminophosphonsäuren funktionalisieren. Mit langkettigen Alkylresten lassen sich die hyperverzweigten Polyharnstoffe durch Mitverwendung von Alkylaminen oder Alkylisocyanaten mit langkettigen Alkylresten funktionalisieren.

Weiterhin lassen sich die Polyharnstoffe auch durch Einsatz geringer Mengen an Monomeren funktionalisieren, die von Aminogruppen oder Carbamatgruppen verschiedene funktionelle Gruppen aufweisen. Genannt seien hier beispielsweise di-, tri- oder höherfunktionelle Alkohole, die über Carbonat- oder Carbamatfunktionen in den Polyharnstoff eingebaut werden können. So lassen sich z. B. hydrophobe Eigenschaften durch Zusatz langkettiger Alkan-, Alken- oder Alkindiole erzielen, während Polyethylenoxiddiole oder -triole hydrophile Eigenschaften im Polyharnstoff erzeugen.

Die genannten, von Amin-, Carbonat- oder Carbamatgruppen verschiedenen funktionellen Gruppen, die vor oder während der Polykondensation eingeführt werden, werden im Allgemeinen in Mengen von 0,1 bis 80 Mol-%, bevorzugt in Mengen von 1 bis 50 Mol-%, bezogen auf die Summe der Amino-, Carbamat- und Carbonatgruppen, eingeführt.

Eine nachträgliche Funktionalisierung von Aminogruppen enthaltenden hochfunktionellen hyperverzweigten Polyharnstoffen kann z. B. erreicht werden durch Zugabe von Säuregruppen, Isocyanatgruppen, Ketogruppen oder Aldehydgruppen enthaltenden Molekülen oder von aktivierte Doppelbindungen, z. B. acrylische Doppelbindungen, enthaltenden Molekülen. Beispielsweise lassen sich Säuregruppen enthaltende Polyharnstoffe durch Umsetzung mit Acrylsäure oder Maleinsäure und deren Derivaten mit gegebenenfalls anschließender Hydrolyse erhalten.

Weiterhin können Aminogruppen enthaltende hochfunktionelle hyperverzweigte Polyharnstoffe durch Umsetzung mit Alkylenoxiden, z. B. Ethylenoxid, Propylenoxid oder Butylenoxid, in hochfunktionelle Polyharnstoff-Polyole überführt werden.

Durch Salzbildung mit Protonensäuren oder durch Quaternisierung der Aminofunktionen mit Alkylierungsreagenzien, wie Methylhalogeniden oder Dialkylsulfaten, können die hochfunktionellen, hyperverzweigten Polyharnstoffe wasserlöslich oder wasserdispergierbar eingestellt werden.

Um eine Hydrophobierung zu erreichen, können Amin-terminierte hochfunktionelle hyperverzweigte Polyharnstoffe mit gesättigten oder ungesättigten langkettigen Carbonsäuren, deren gegenüber Amin-Gruppen reaktiven Derivaten oder auch mit aliphatischen oder aromatischen Isocyanaten umgesetzt werden.

Mit Carbamatgruppen terminierte Polyharnstoffe können durch Umsetzung mit langkettigen Alkylaminen oder langkettigen aliphatischen Monoalkoholen hydrophobiert werden.

### Hyperverzweigte Polyamide

Geeignete hyperverzweigte Polyamide lassen sich durch Umsetzung eines ersten Monomers A₂ mit mindestens zwei funktionellen Gruppen A mit einem zweiten Monomer B₃ mit mindestens drei funktionellen Gruppen B, wobei
1) die funktionellen Gruppen A und B miteinander reagieren, und
2) das eine der Monomere A und B ein Amin ist, und das andere der Monomere A und B eine Carbonsäure oder ein Acrylat ist.

### herstellen.

Geeignete hyperverzweigte Polyamide schließen hyperverzweigte Polyamidoamine (siehe EP-A 802 215, US 2003/0069370 A1 und US 2002/0161113 A1) mit ein.

Obwohl das erste Monomer A₂ auch mehr als zwei funktionelle Gruppen A aufweisen kann, wird es hier der Einfachheit halber als A₂ bezeichnet, und obwohl das zweite Monomer B₃ auch mehr als drei funktionelle Gruppen B aufweisen kann, wird es hier der Einfachheit halber als B₃ bezeichnet. Wesentlich ist nur, dass sich die Funktionalitäten von A₂ und B₃ unterscheiden.

Gemäß Bedingung 1) reagieren die funktionellen Gruppen A und B miteinander. Die funktionellen Gruppen A und B sind derart gewählt, dass A nicht (oder nur in unwesentlichem Ausmaß) mit A, und B nicht (oder nur in unwesentlichem Ausmaß) mit B, wohl aber A mit B reagiert.

Gemäß Bedingung 2) ist das eine der Monomere A und B ein Amin, und das andere der Monomere A und B eine Carbonsäure.

Bevorzugt ist das Monomer A₂ eine Carbonsäure mit mindestens zwei Carboxylgruppen, und das Monomer B₃ ist ein Amin mit mindestens drei Aminogruppen. Alternativ ist das Monomer A₂ ein Amin mit mindestens zwei Aminogruppen, und das Monomer B₃ eine Carbonsäure mit mindestens drei Carboxylgruppen.

Geeignete Carbonsäuren weisen üblicherweise 2 bis 4, insbesondere 2 oder 3 Carboxylgruppen, und einen Alkylrest, Arylrest oder Arylalkylrest mit 1 bis 30 C-Atomen auf.

Als Dicarbonsäuren kommen z. B. in Betracht: Oxalsäure, Malonsäure, Bernsteinsäure, Glutarsäure, Adipinsäure, Pimelinsäure, Korksäure, Azelainsäure, Sebacinsäure, Undecan-α, ω-dicarbonsäure, Dodecan-α, ω-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure sowie cis- und trans-Cyclopentan-1,3-dicarbonsäure, wobei die Dicarbonsäuren substituiert sein können mit einem oder mehreren Resten, ausgewählt aus C₁-C₁₀-Alkylgruppen, C₃-C₁₂-Cycloalkylgruppen, Alkylengruppen und C₆-C₁₄-Arylgruppen. Als Beispiele für substituierte Dicarbonsäuren seien genannt: 2-Methylmalonsäure, 2-Ethylmalonsäure, 2-Phenylmalonsäure, 2-Methylbernsteinsäure, 2-Ethylbernsteinsäure, 2-Phenylbernsteinsäure, Itaconsäure und 3,3-Dimethylglutarsäure.

Ebenso sind ethylenisch ungesättigte Dicarbonsäuren wie beispielsweise Maleinsäure und Fumarsäure sowie aromatische Dicarbonsäuren wie beispielsweise Phthalsäure, Isophthalsäure oder Terephthalsäure, geeignet.

Als Tricarbonsäuren bzw. Tetracarbonsäuren eignen sich z. B. Trimesinsäure, Trimellitsäure, Pyromellitsäure, Butantricarbonsäure, Naphthalentricarbonsäure und Cyclohexan-1,3,5-tricarbonsäure.

Weiterhin lassen sich Gemische von zwei oder mehreren der vorgenannten Carbonsäuren einsetzen. Die Carbonsäuren können entweder als solche oder in Form von Derivaten verwendet werden. Solche Derivate sind insbesondere
- die Anhydride der genannten Carbonsäuren, und zwar in monomerer oder auch polymerer Form;
- die Ester der genannten Carbonsäuren, z. B.
   - Mono- oder Dialkylester, bevorzugt Mono- oder Dimethylester oder die entsprechenden Mono- oder Diethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- und Dialkylester,
   - Mono- und Divinylester sowie
   - gemischte Ester, bevorzugt Methylethylester.

Man kann auch ein Gemisch aus einer Carbonsäure und einem oder mehreren ihrer Derivate, oder ein Gemisch mehrerer verschiedener Derivate von einer oder mehreren Dicarbonsäuren, einsetzen.

Besonders bevorzugt setzt man als Carbonsäure Bernsteinsäure, Glutarsäure, Adipinsäure, Cyclohexandicarbonsäuren, Phthalsäure, Isophthalsäure, Terephthalsäure oder deren Mono- oder Dimethylester ein. Ganz besonders bevorzugt sind Bernsteinsäure und Adipinsäure.

Geeignete Amine weisen üblicherweise 2 bis 6, insbesondere 2 bis 4 Aminogruppen, und einen Alkylrest, Arylrest oder Arylalkylrest mit 1 bis 30 C-Atomen auf.

Als Diamine kommen z. B. solche der Formel R¹-NH-R²-NH-R³ in Betracht, worin R¹, R² und R³ unabhängig voneinander Wasserstoff oder einen Alkylrest, Arylrest oder Arylalkylrest mit 1 bis 20 C-Atomen bedeuten. Der Alkylrest kann linear oder insbesondere für R² auch cyclisch sein.

Geeignete Diamine sind beispielsweise Ethylendiamin, die Propylendiamine (1,2-Diaminopropan and 1,3-Diaminopropan), N-Methyl-ethylendiamin, Piperazin, Tetramethylendiamin (1,4-Diaminobutan), N,N'-Dimethylethylendiamin, N-Ethylethylendiamin, 1,5-Diaminopentan, 1,3-Diamino-2,2-diethylpropan, 1,3-Bis(methylamino)propan, Hexamethylendiamin (1,6-Diaminohexan), 1,5-Diamino-2-methylpentan, 3-(Propylamino)-propylamin, N,N'-Bis-(3-aminopropyl)-piperazin, N,N'-Bis-(3-aminopropyl)-piperazin und Isophorondiamin (IPDA).

Als Triamine, Tetramine bzw. höherfunktionelle Amine eignen sich z. B. Tris(2-aminoethyl)amin, Tris(2-aminopropyl)amin, Diethylentriamin (DETA), Triethylentetramin (TETA), Tetraethylenpentamin (TEPA), Isopropylentriamin, Dipropylentriamin und N,N'-bis(3-aminopropyl-ethylendiamin).

Aminobenzylamine und Aminohydrazide mit 2 oder mehr Aminogruppen sind ebenfalls geeignet.

Bevorzugt verwendet man als Amine DETA oder Tris(2-aminoethyl)amin oder deren Mischungen.

Man kann auch Gemische mehrerer Carbonsäuren bzw. Carbonsäurederivate oder Gemische mehrerer Amine verwenden. Dabei kann die Funktionalität der verschiedenen Carbonsäuren oder Amine gleich oder verschieden sein.

Insbesondere kann man, wenn das Monomer A₂ ein Diamin ist, als Monomer B₃ Gemische von Dicarbonsäuren und Tricarbonsäuren (oder höherfunktionellen Carbonsäuren) verwenden, wobei das Gemisch B₃ eine mittlere Funktionalität von mindestens 2,1 hat. Beispielsweise hat ein Gemisch aus 50 Mol-% Dicarbonsäure und 50 Mol-% Tricarbonsäure eine mittlere Funktionalität von 2,5.

In ähnlicher Weise kann man, wenn das Monomer A₂ eine Dicarbonsäure ist, als Monomer B₃ Gemische von Diaminen und Triaminen (oder höherfiunktionellen Aminen) verwenden, wobei das Gemisch B₃ eine mittlere Funktionalität von mindestens 2,1 hat. Diese Variante ist besonders bevorzugt. Beispielsweise hat ein Gemisch aus 50 Mol-% Diamin und 50 Mol-% Triamin eine mittlere Funktionalität von 2,5.

Die Reaktivität der funktionellen Gruppen A des Monomers A₂ kann gleich oder verschieden sein. Ebenso kann die Reaktivität der funktionellen Gruppen B des Monomers B₃ gleich oder verschieden sein. Insbesondere kann die Reaktivität der zwei Aminogruppen des Monomers A₂ bzw. der drei Aminogruppen des Monomers B₃, gleich oder verschieden sein.

In einer bevorzugten Ausführungsform ist die Carbonsäure das difunktionelle Monomer A₂ und das Amin das trifunktionelle Monomer B₃, d. h. bevorzugt verwendet man Dicarbonsäuren, und Triamine oder höherfunktionelle Amine.

Besonders bevorzugt verwendet man als Monomer A₂ eine Dicarbonsäure und als Monomer B₃ ein Triamin. Ganz besonders bevorzugt wird als Monomer A₂ Adipinsäure, und als Monomer B₃ Diethylentriamin oder Tris(2-aminoethyl)amin verwendet.

Während oder nach der Polymerisation der Monomere A₂ und B₃ zum hyperverzweigten Polyamid, kann man di- oder höherfunktionelle, als Kettenverlängerer wirkende Monomere C mit verwenden. Dadurch lässt sich der Gelpunkt des Polymeren (Zeitpunkt, an dem durch Vernetzungsreaktionen unlösliche Gelpartikel gebildet werden, siehe z. B. Flory, Principles of Polymer Chemistry, Cornell University Press, 1953, Seiten 387-398) kontrollieren und die Architektur des Makromoleküls, also die Verknüpfung der Monomeräste, verändern.

Demnach ist das Verfahren in einer bevorzugten Ausführungsform dadurch gekennzeichnet, dass man während oder nach der Umsetzung der Monomere A₂ und B₃ ein als Kettenverlängerer wirkendes Monomer C mit verwendet.

Als kettenverlängerndes Monomer C geeignet sind z. B. die bereits genannten Diamine oder höherfunktionellen Amine, die mit den Carboxylgruppen verschiedener Polymer-äste reagieren und sie so verbinden. Geeignet ist insbesondere Isophorondiamin, Ethylendiamin, 1,2-Diaminopropan, 1,3-Diaminopropan, N-Methylethylendiamin, Piperazin, Tetramethylendiamin (1,4-Diaminobutan), N,N'-Dimethylethylendiamin, N-Ethylethylendiamin, 1,5-Diaminopentan, 1,3-Diamino-2,2-diethylpropan, 1,3-Bis(methylamino)-propan, Hexamethylendiamin (1,6-Diaminohexan), 1,5-Diamino-2-methylpentan, 3-(Propylamino)-propylamin, N,N'-Bis-(3-aminopropyl)-piperazin, N,N'-Bis-(3-amino-propyl)-piperazin und Isophorondiamin (IPDA).

Auch Aminosäuren der allgemeinen Formel H₂N-R-COOH sind als Kettenverlängerer C geeignet, wobei R ein organischer Rest ist.

Die Menge der Kettenverlängerer C richtet sich in üblicher Weise nach dem gewünschten Gelpunkt bzw. der gewünschten Architektur des Makromoleküls. In der Regel beträgt die Menge der Kettenverlängerer C 0,1 bis 50, bevorzugt 0,5 bis 40 und insbesondere 1 bis 30 Gew.-%, bezogen auf die Summe der eingesetzten Monomeren A₂ und B₃.

Zur Herstellung von funktionalisierten Polyamiden werden monofunktionelle Comonomere D mit verwendet, wobei diese vor, während oder nach der Umsetzung der Monomeren A₂ und B₃ zugefügt werden können. Man erhält auf diese Weise ein mit den Comonomer-Einheiten und deren funktionellen Gruppen chemisch modifiziertes Polymer.

Demnach ist das Verfahren in einer bevorzugten Ausführungsform dadurch gekennzeichnet, dass man vor, während oder nach der Umsetzung der Monomeren A₂ und B₃ ein Comonomer D mit einer funktionellen Gruppe mit verwendet, wodurch ein modifiziertes Polyamid entsteht.

Solche Comonomere D sind beispielsweise gesättigte oder ungesättigte Monocarbonsäuren, auch Fettsäuren, und deren Anhydride bzw. Ester. Geeignet sind z. B. Essigsäure, Propionsäure, Buttersäure, Valeriansäure, Isobuttersäure, Trimethylessigsäure, Capronsäure, Caprylsäure, Heptansäure, Caprinsäure, Pelargonsäure, Laurinsäure, Myristinsäure, Palmitinsäure, Montansäure, Stearinsäure, Isostearinsäure, Nonansäure, 2-Ethylhexansäure, Benzoesäure und ungesättigte Monocarbonsäuren wie Methacrylsäure, sowie die Anhydride und Ester, beispielsweise Acrylsäureester oder Methacrylsäureester der genannten Monocarbonsäuren.

Als ungesättigte Fettsäuren D eignen sich z. B. Ölsäure, Ricinolsäure, Linolsäure, Linolensäure, Erucasäure, Fettsäuren aus Soja, Leinsamen, Ricinus und Sonnenblume.

Geeignete Carbonsäureester D sind insbesondere Methylmethacrylat, Hydroxyethylmethacrylat und Hydroxypropylmethacrylat.

Als Comonomere D kommen auch Alkohole, einschließlich Fettalkohole, in Betracht, z. B. Glycerolmonolaurat, Glycerolmonostearat, Ethylenglycolmonomethylether, die Polyethylenmonomethylether, Benzylalkohol, 1-Dodecanol, 1-Tetradecanol, 1-Hexadecanol und ungesättigte Fettalkohole.

Geeignete Comonomere D sind außerdem Acrylate, insbesondere Alkylacrylate wie n-, iso- und tert-Butylacrylat, Laurylacrylat, Stearylacrylat, oder Hydroxyalkylacrylate wie Hydroxyethylacrylat, Hydroxypropylacrylat und die Hydroxybutylacrylate. Die Acrylate lassen sich auf besonders einfache Weise durch Michael-Addition an den Aminogruppen des hyperverzweigten Polyamids in das Polymer einführen.

Die Menge der Comonomere D richtet sich in üblicher Weise danach, in welchem Ausmaß das Polymer modifiziert werden soll. In der Regel beträgt die Menge der Comonomeren D 0,5 bis 40, bevorzugt 1 bis 35 Gew.-%, bezogen auf die Summe der eingesetzten Monomeren A₂ und B₃.

Je nach Art und Menge der eingesetzten Monomere und den Reaktionsbedingungen kann das hyperverzweigte Polyamid terminale Carboxylgruppen (-COOH) oder terminale Aminogruppen (-NH, -NH₂) oder beides aufweisen. Die Wahl des zur Funktionalisierung zugefügten Comonomers D richtet sich in üblicher Weise nach Art und Anzahl der terminalen Gruppen, mit denen D reagiert. Falls Carboxylendgruppen modifiziert werden sollen, verwendet man bevorzugt 0,5 bis 2,5, bevorzugt 0,6 bis 2 und besonders bevorzugt 0,7 bis 1,5 molare Äquivalente eines Amins, z. B. eines Mono- oder Diamins und insbesondere eines Triamins mit primären oder sekundären Aminogruppen, pro ein mol Carboxylendgruppen.

Falls Aminoendgruppen modifiziert werden sollen, verwendet man bevorzugt 0,5 bis 2,5, bevorzugt 0,6 bis 2 und besonders bevorzugt 0,7 bis 1,5 molare Äquivalente einer Monocarbonsäure pro ein mol Aminoendgruppen.

Wie erwähnt können Aminoendgruppen auch mit den genannten Acrylaten in einer Michael-Addition umgesetzt werden, wozu man bevorzugt 0,5 bis 2,5, insbesondere 0,6 bis 2 und besonders bevorzugt 0,7 bis 1,5 molare Äquivalente eines Acrylats pro ein Mol Aminoendgruppen, verwendet.

Die Zahl freier COOH-Gruppen (Säurezahl) des Endprodukts Polyamid beträgt in der Regel 0 bis 400, bevorzugt 0 bis 200 mg KOH pro Gramm Polymer und kann z. B. durch Titration nach DIN 53240-2 bestimmt werden.

Die Umsetzung der Monomere A₂ mit den Monomeren B₃ erfolgt in der Regel bei erhöhter Temperatur, beispielsweise 80 bis 180 °C, insbesondere 90 bis 160 °C. Bevorzugt arbeitet man unter Inertgas, z. B. Stickstoff, oder im Vakuum, in Anwesenheit oder Abwesenheit eines Lösungsmittels wie Wasser, 1,4-Dioxan, Dimethylformamid (DMF) oder Dimethylacetamid (DMAC). Gut geeignet sind Lösungsmittelgemische z. B. aus Wasser und 1,4-Dioxan. Erforderlich ist ein Lösungsmittel jedoch nicht; beispielsweise kann man die Carbonsäure vorlegen und aufschmelzen und der Schmelze das Amin zufügen. Das im Verlauf der Polymerisation (Polykondensation) gebildete Reaktionswasser wird beispielsweise im Vakuum abgezogen oder bei Verwendung von geeigneten Lösungsmitteln wie Toluol durch azeotrope Destillation entfernt.

Der Druck ist in der Regel unkritisch und liegt bei z. B. 1 mbar bis 100 bar absolut. Falls man kein Lösungsmittel verwendet, kann durch Arbeiten unter Vakuum, z. B. 1 bis 500 mbar, das Reaktionswasser auf einfache Weise entfernt werden.

Die Reaktionsdauer beträgt üblicherweise 5 Minuten bis 48 Stunden, bevorzugt 30 Minuten bis 24 Stunden und besonders bevorzugt 1 Stunde bis 10 Stunden.

Die Umsetzung von Carbonsäure und Amin kann in Abwesenheit oder Anwesenheit von Katalysatoren erfolgen. Geeignete Katalysatoren sind beispielsweise die weiter unten genannten Amidierungskatalysatoren.

Falls Katalysatoren mit verwendet werden, beträgt ihre Menge üblicherweise 1 bis 5000, bevorzugt 10 bis 1000 Gew. ppm, bezogen auf die Summe der Monomeren A₂ und B₃.

Während oder nach der Polymerisation können, falls gewünscht, die erwähnten Kettenverlängerer C zugefügt werden. Außerdem kann man vor, während oder nach der Polymerisation die genannten Comonomere D zufügen, um das hyperverzweigte Polyamid chemisch zu modifizieren.

Die Reaktion der Comonomere D kann, falls erforderlich, durch übliche Amidierungskatalysatoren katalysiert werden. Solche Katalysatoren sind z. B. Ammoniumphosphat, Triphenylphosphit oder Dicyclohexylcarbodiimid. Insbesondere bei temperaturempfindlichen Comonomeren D und bei Methacrylaten oder Fettalkoholen als Comonomer D kann man die Reaktion auch durch Enzyme katalysieren, wobei man üblicherweise bei 40 bis 90, bevorzugt 50 bis 85 und insbesondere 55 bis 80 °C und in Gegenwart eines radikalischen Inhibitors arbeitet.

Der Inhibitor und gegebenenfalls Arbeiten unter Inertgas verhindert eine radikalische Polymerisation und außerdem unerwünschte Vernetzungsreaktionen ungesättigter funktioneller Gruppen. Solche Inhibitoren sind z. B. Hydrochinon, Hydrochinonmonomethylether, Phenothiazin, Phenolderivate wie 2-tert-Butyl-4-methylphenol, 6-tert-Butyl-2,4-dimethylphenol oder N-Oxylverbindungen wie 4-Hydroxy-2,2,6,6-tetramethyl-piperidin-N-oxyl (Hydroxy-TEMPO), 4-Oxo-2,2,6,6-tetramethylpiperidin-N-oxyl (TEMPO), in Mengen von 50 bis 2000 Gew.-ppm, bezogen auf die Summe der Monomeren A₂ und B₃.

Die Herstellung wird bevorzugt diskontinuierlich, kann aber auch kontinuierlich durchgeführt werden, beispielsweise in Rührbehältern, Rohrreaktoren, Turmreaktoren oder anderen üblichen Reaktoren, die mit statischen oder dynamischen Mischern und üblichen Vorrichtungen zur Druck- und Temperaturkontrolle sowie zum Arbeiten unter Inertgas, ausgestattet sein können.

Beim Arbeiten ohne Lösungsmittel erhält man in der Regel unmittelbar das Endprodukt, das erforderlichenfalls durch übliche Reinigungsoperationen gereinigt werden kann. Sofern ein Lösungsmittel mit verwendet wurde, kann dieses nach der Umsetzung in üblicher Weise aus der Reaktionsmischung entfernt werden, etwa durch Vakuumdestillation.

Das Verfahren zeichnet sich durch ihre große Einfachheit aus. Es ermöglicht die Herstellung von hyperverzweigten Polyamiden in einer simplen Ein-Topf-Reaktion. Die Isolierung oder Reinigung von Zwischenstufen oder die Verwendung von Schutzgruppen für Zwischenstufen sind nicht erforderlich. Das Verfahren ist ökonomisch vorteilhaft, da die Monomere handelsüblich und preiswert sind.

### Hyperverzweigte Polyesteramide

Geeignete hyperverzweigte Polyesteramide lassen sich durch Umsetzung einer Carbonsäure mit mindestens zwei Carboxylgruppen mit einem Aminoalkohol, der mindestens eine Aminogruppe und mindestens zwei Hydroxylgruppen aufweist, herstellen.

Das Verfahren geht aus von einer Carbonsäure mit mindestens zwei Carboxylgruppen (Dicarbonsäure, Tricarbonsäure oder höherfunktionelle Carbonsäure) und einem Aminoalkohol (Alkanolamin) mit mindestens einer Aminogruppe und mindestens zwei Hydroxylgruppen.

Geeignete Carbonsäuren weisen üblicherweise 2 bis 4, insbesondere 2 oder 3 Carboxylgruppen, und einen Alkylrest, Arylrest oder Arylalkylrest mit 1 bis 30 C-Atomen auf. Als Carbonsäuren kommen alle bereits im Zusammenhang mit den hyperverzweigten Polyamiden genannten Di-, Tri- und Tetracarbonsäuren und deren Derivate in Betracht.

Besonders bevorzugt setzt man als Carbonsäure Bernsteinsäure, Glutarsäure, Adipinsäure, 1,2-, 1,3- oder 1,4-Cyclohexandicarbonsäure, Phthalsäure, Isophthalsäure, Terephthalsäure oder deren Dimethylester ein. Ganz besonders bevorzugt sind Bernsteinsäure und Adipinsäure.

Als Aminoalkohole (Alkanolamine) mit mindestens einer Aminogruppe und mindestens zwei Hydroxylgruppen sind vorzugsweise Dialkanolamine und Trialkanolamine geeignet. Als Dialkanolamine kommen z. B. solche der Formel 1 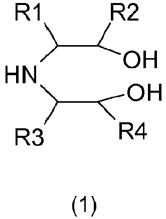 in Betracht, wobei R1, R2, R3 und R4 unabhängig voneinander Wasserstoff, C₁₋₆-Alkyl, C₃₋₁₂-Cycloalkyl oder C₆₋₁₄-Aryl (inkl. Arylalkyl) bedeuten.

Geeignete Dialkanolamine sind z. B. Diethanolamin, Dipropanolamin, Diisopropanolamin, 2-Amino-1,3-propandiol, 3-Amino-1,2-propandiol, 2-Amino-1,3-propandiol, Dibutanolamin, Diisobutanolamin, Bis(2-hydroxy-1-butyl)amin, Bis(2-hydroxy-1-propyl)amin und Dicyclohexanolamin.

Als Trialkanolamine eignen sich solche der Formel 2, 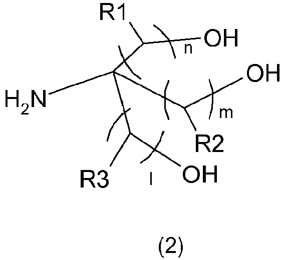 wobei R1, R2 und R3 die bei Formel 1 angegebene Bedeutung haben und I, m und n unabhängig voneinander ganze Zahlen von 1 bis 12 sind. Beispielsweise ist Tris(hydroxymethyl)aminomethan geeignet.

Bevorzugt verwendet man als Aminoalkohol Diethanolamin (DEA) und Diisopropanolamin (DIPA).

In einem bevorzugten Verfahren verwendet man als Carbonsäure eine Dicarbonsäure und als Aminoalkohol einen Alkohol mit einer Aminogruppe und zwei Hydroxylgruppen.

Mit dem Verfahren lassen sich auch funktionalisierte Polyesteramide herstellen. Dazu werden Comonomere C mit verwendet, wobei diese vor, während oder nach der Umsetzung von Carbonsäure, Aminoalkohol und gegebenenfalls Monomer M, zugefügt werden können. Man erhält auf diese Weise ein mit den Comonomereinheiten und deren funktionellen Gruppen chemisch modifiziertes Polymer.

Demnach ist das Verfahren in einer bevorzugten Ausführungsform dadurch gekennzeichnet, dass man vor, während oder nach der Umsetzung von Carbonsäure, Aminoalkohol und gegebenenfalls Monomer M, ein Comonomer C mit verwendet, wodurch ein modifiziertes Polyesteramid entsteht. Das Comonomer kann eine, zwei oder mehr funktionelle Gruppen enthalten.

Geeignete Comonomere C sind die bereits im Zusammenhang mit den hyperverzweigten Polyamiden genannten gesättigten und ungesättigten Monocarbonsäuren, auch Fettsäuren, deren Anhydride und Ester, Alkohole, Acrylate sowie die bereits genannten mono- oder höherfunktionellen Alkohole (auch Diole, Polyole), Amine (auch Diamine, Triamine) und Aminoalkohole (Alkanolamine).

Die Menge der Comonomere C richtet sich in üblicher Weise danach, in welchem Ausmaß das Polymer modifiziert werden soll. In der Regel beträgt die Menge der Comonomeren C 0,5 bis 40, bevorzugt 1 bis 35 Gew.-%, bezogen auf die Summe der eingesetzten Monomeren Carbonsäure und Aminoalkohol.

Die Zahl freier OH-Gruppen (Hydroxylzahl) des Endprodukts Polyesteramid beträgt in der Regel 10 bis 500, bevorzugt 20 bis 450 mg KOH pro Gramm Polymer und kann z. B. durch Titration nach DIN 53240-2 bestimmt werden.

Die Zahl freier COOH-Gruppen (Säurezahl) des Endprodukts Polyesteramid beträgt in der Regel 0 bis 400, bevorzugt 0 bis 200 mg KOH pro Gramm Polymer und kann ebenfalls durch Titration nach DIN 53240-2 bestimmt werden.

Die Umsetzung der Carbonsäure mit dem Aminoalkohol erfolgt in der Regel bei erhöhter Temperatur, beispielsweise 80 bis 250 °C, insbesondere 90 bis 220 °C und besonders bevorzugt 95 bis 180 °C. Sofern man das Polymer zwecks Modifizierung mit Comonomeren C umsetzt und dazu Katalysatoren verwendet (siehe weiter unten), kann man die Reaktionstemperatur an den jeweiligen Katalysator anpassen und arbeitet in der Regel bei 90 bis 200 °C, bevorzugt 100 bis 190 °C und insbesondere 110 bis 180 °C.

Bevorzugt arbeitet man unter Inertgas, z. B. Stickstoff, oder im Vakuum, in Anwesenheit oder Abwesenheit eines Lösungsmittels wie 1,4-Dioxan, Dimethylformamid (DMF) oder Dimethylacetamid (DMAc). Erforderlich ist ein Lösungsmittel jedoch nicht; beispielsweise kann man die Carbonsäure mit dem Aminoalkohol vermischen und - gegebenenfalls in Gegenwart eines Katalysators - bei erhöhter Temperatur umsetzen. Das im Verlauf der Polymerisation (Polykondensation) gebildete Reaktionswasser wird beispielsweise im Vakuum abgezogen oder bei Verwendung von geeigneten Lösungsmitteln wie Toluol, durch azeotrope Destillation entfernt.

Das Ende der Umsetzung von Carbonsäure und Aminoalkohol kann man oftmals daran erkennen, dass die Viskosität der Reaktionsmischung plötzlich schnell anzusteigen beginnt. Beim beginnenden Viskositätsanstieg kann man die Reaktion abstoppen, beispielsweise durch Abkühlen. Danach kann man an einer Probe der Mischung die Carboxylgruppenanzahl im (Prä)polymer bestimmen, beispielsweise durch Titration der Säurezahl nach DIN 53402-2, und anschließend ggf. das Monomer M und/oder Comonomer C, zufügen und umsetzen.

Der Druck ist in der Regel unkritisch und liegt bei z. B. 1 mbar bis 100 bar absolut. Falls man kein Lösungsmittel verwendet, kann durch Arbeiten unter Vakuum, z. B. 1 bis 500 mbar absolut, das Reaktionswasser auf einfache Weise entfernt werden. Die Reaktionsdauer beträgt üblicherweise 5 Minuten bis 48 Stunden, bevorzugt 30 Minuten bis 24 Stunden und besonders bevorzugt 1 Stunde bis 10 Stunden.

Wie erwähnt, kann man vor, während oder nach der Polymerisation die genannten Comonomere C zufügen, um das hyperverzweigte Polyesteramid chemisch zu modifizieren.

Bei dem Verfahren kann ein Katalysator mit verwendet werden, der die Umsetzung der Carbonsäure mit dem Aminoalkohol (Veresterung), katalysiert.

Als Katalysatoren sind saure, bevorzugt anorganische Katalysatoren, Organometall-Katalysatoren oder Enzyme geeignet.

Als saure anorganische Katalysatoren sind beispielsweise Schwefelsäure, Phosphorsäure, Phosphonsäure, hypophosphorige Säure, Aluminiumsulfathydrat, Alaun, saures Kieselgel (pH ≤ 6, insbesondere ≤ 5) und saures Aluminiumoxid zu nennen. Weiterhin sind beispielsweise Aluminiumverbindungen der allgemeinen Formel Al(OR)₃ und Titanate der allgemeinen Formel Ti(OR)₄ als saure anorganische Katalysatoren einsetzbar. Bevorzugte saure metallorganische Katalysatoren sind beispielsweise gewählt aus Dialkylzinnoxiden R₂SnO, wobei R wie oben stehend definiert ist. Ein besonders bevorzugter Vertreter für saure metallorganische Katalysatoren ist Di-n-butylzinnoxid, das als so genanntes Oxo-Zinn kommerziell erhältlich ist. Geeignet ist beispielsweise Fascat® 4201, ein Di-n-butylzinnoxid von Fa. Atofina.

Bevorzugte saure organische Katalysatoren sind saure organische Verbindungen mit beispielsweise Phosphatgruppen, Sulfonsäuregruppen, Sulfatgruppen oder Phosphonsäuregruppen. Besonders bevorzugt sind Sulfonsäuren wie beispielsweise para-Toluolsulfonsäure. Man kann auch saure lonentauscher als saure organische Katalysatoren einsetzen, beispielsweise sulfonsäuregruppenhaltige Polystyrolharze, die mit etwa 2 Mol-% Divinylbenzol vernetzt sind.

Falls ein Katalysator verwendet wird, beträgt seine Menge üblicherweise 1 bis 5000 und bevorzugt 10 bis 1000 Gew.- ppm, bezogen auf die Summe an Carbonsäure und Aminoalkohol.

Speziell die Reaktion der Comonomere C kann auch durch die bereits genannten Amidierungskatalysatoren katalysiert werden, wobei man üblicherweise bei 40 bis 90 °C, bevorzugt 50 bis 85 °C und insbesondere 55 bis 80 °C und in Gegenwart eines radikalischen Inhibitors arbeitet.

Das erfindungsgemäße Verfahren kann bevorzugt diskontinuierlich, aber auch kontinuierlich durchgeführt werden, beispielsweise in Rührbehältern, Rohrreaktoren, Turmreaktoren oder anderen üblichen Reaktoren, die mit statischen oder dynamischen Mischern, und üblichen Vorrichtungen zur Druck- und Temperaturkontrolle sowie zum Arbeiten unter Inertgas, ausgestattet sein können.

Beim Arbeiten ohne Lösungsmittel erhält man in der Regel unmittelbar das Endprodukt, das erforderlichenfalls durch übliche Reinigungsoperationen gereinigt werden kann. Sofern ein Lösungsmittel mit verwendet wurde, kann dieses nach der Umsetzung in üblicher Weise aus der Reaktionsmischung entfernt werden, etwa durch Vakuumdestillation.

Die zuvor beschriebenen hyperverzweigten Polymere können zusätzlich einer polymeranalogen Umsetzung unterzogen werden. Somit gelingt es, ihre Eigenschaften unter Umständen noch besser an den Einsatz in verschiedenen Dispersionen anzupassen. Zur polymeranalogen Umsetzung können ursprünglich im Polymer vorhandene funktionelle Gruppen (z. B. A- oder B-Gruppen) einer Umsetzung unterzogen werden, so dass die resultierenden Polymere wenigstens eine neue Funktionalität aufweisen.

Die polymeranaloge Umsetzung der hyperverzweigten Polymere kann während der Herstellung der Polymere, unmittelbar im Anschluss an die Polymerisationsreaktion oder in einem separaten Reaktionsschritt erfolgen.

Gibt man vor oder während des Polymeraufbaus Komponenten zu, die neben A- und B-Gruppen weitere funktionelle Gruppen aufweisen, so erhält man ein hyperverzweigtes Polymer, in dem diese weiteren funktionellen Gruppen im Wesentlichen statistisch verteilt sind.

Zur Umfunktionalisierung eingesetzte Verbindungen können einerseits die gewünschte, neu einzuführende funktionelle Gruppe sowie eine zweite Gruppe enthalten, die mit den B-Gruppen des als Ausgangsmaterial verwendeten hyperverzweigten Polymers unter Bildung einer Bindung zur Reaktion befähigt ist. Ein Beispiel dafür ist die Umsetzung einer Isocyanatgruppe mit einer Hydroxycarbonsäure oder einer Aminocarbonsäure unter Bildung einer Säurefunktionalität oder die Umsetzung einer OH-Gruppe mit Acrylsäureanhydrid unter Bildung einer reaktionsfähigen acrylischen Doppelbindung.

Beispiele für geeignete funktionelle Gruppen, die mittels geeigneter Reaktionspartner eingeführt werden können, umfassen insbesondere saure oder basische, H-Atome aufweisende Gruppen sowie deren Derivate, wie -OC(O)OR, -COOH, -COOR, -CONHR, -CONH₂,-OH, -SH, -NH₂, -NHR, -NR₂, -SO₃H, - SO₃R, -NHCOOR, -NHCONH₂, -NHCONHR, etc. Gegebenenfalls können ionisierbare funktionellen Gruppen auch mit Hilfe geeigneter Säuren oder Basen in die entsprechenden Salze überführt werden. Weiterhin können primäre, sekundäre oder tertiäre Aminogruppen auch einer Quaternisierung, z. B. mit Alkylhalogeniden oder Dialkylsulfaten, unterzogen werden. Auf diese Weise lassen sich beispielsweise wasserlösliche oder wasserdispergierbare hyperverzweigte Polymere erhalten.

Bei den Resten R der besagten Gruppen handelt es sich vorzugsweise um geradkettige oder verzweigte, unsubstituierte oder substituierte Alkylreste. Beispielsweise handelt es sich um C₁-C₃₀-Alkylreste oder um C₆-C₁₄-Arylreste. Geeignete funktionelle Gruppen sind beispielsweise -CN oder -OR^{a}, mit R^{a} = H oder Alkyl.

Für die Verwendung der hyperverzweigten Polymere in Dispersionen kann es vorteilhaft sein, wenn hydrophile und hydrophobe Molekülteile in einem bestimmten Verhältnis zueinander stehen. Eine Hydrophobierung eines hyperverzweigten Polymers kann z. B. dadurch erfolgen, dass man monofunktionelle hydrophobe Verbindungen einsetzt, mit der vorhandene reaktive Gruppen vor, während oder nach der Polymerisation modifiziert werden. So können die erfindungsgemäßen Polymere z. B. durch Umsetzung mit monofunktionellen, gesättigten oder ungesättigten aliphatischen oder aromatischen Aminen, Alkoholen, Carbonsäuren, Epoxiden oder Isocyanaten hydrophobiert werden.

Weiterhin können z. B. auch di- oder höherfunktionelle, hydrophobe Gruppen aufweisende Monomere während des Molekulargewichtsaufbaus einpolymerisiert werden. Hierzu können beispielsweise di- oder höherfunktionelle Alkohole, di- oder höherfunktionelle Amine, di- oder höherfunktionelle Isocyanate, di- oder höherfunktionelle Carbonsäuren, di- oder höherfunktionelle Epoxide, die zu den reaktiven Gruppen zusätzlich aromatische Reste oder langkettige Alkan-, Alken- oder Alkin-Reste tragen, verwendet werden.

Beispiele für derartige Monomere sind Alkohole, wie Glycerinmonostearat, Glycerinmonooleat, Hexandiol, Octandiol, Decandiol, Dodecandiol, Octadecandiol, Dimerfettalkohole, Amine, wie Hexamethylendiamin, Octandiamin, Dodecandiamin, Isocyanate, wie aromatische oder aliphatische Di- und Polyisocyanate, z. B. Diphenylmethandiisocyanat und dessen höheroligomere Spezies, Toluylendiisocyanat, Naphthylendiisocyanat, Xylylendiisocyanat, Hexamethylendiisocyanat, Hexamethylendiisocyanat-Trimere, Isophorondiisocyanat, Bis(diisocyanato-cyclohexyl)-methan oder Bis(isocyanatomethyl)cyclohexan, Säuren, wie Adipinsäure, Octandisäure, Dodecandisäure, Octadecandisäure oder Dimerfettsäuren.

Weiterhin können die erfindungsgemäß eingesetzten hyperverzweigten Polymere hydrophiliert werden. Dazu können z. B. Hydroxylgruppen und/oder primäre oder sekundäre Aminogruppen enthaltende hyperverzweigte Polymere durch Umsetzung mit Alkylenoxiden, z. B. Ethylenoxid, Propylenoxid, Butylenoxid oder Mischungen davon, in hochfunktionelle Polymer-Polyole überführt werden. Bevorzugt wird zur Alkoxilierung Ethylenoxid eingesetzt. Als weitere Option können aber auch di- oder höherfunktionelle Alkylenoxid-Alkohole oder Alkylenoxid-Amine als Aufbaukomponenten bei der Herstellung der hyperverzweigten Polymere eingesetzt werden.

Es können auch hyperverzweigte Polymere erzeugt werden, die verschiedenartige Funktionalitäten aufweisen. Dies kann beispielsweise durch Umsetzung mit einem Gemisch verschiedener Verbindungen zur Umfunktionalisierung erfolgen, oder auch dadurch, dass man nur einen Teil der ursprünglich vorhandenen funktionellen Gruppen umsetzt.

Weiterhin lassen sich gemischt funktionelle Verbindungen dadurch erzeugen, dass man Monomere vom Typ ABC oder AB₂C für die Polymerisation einsetzt, wobei C eine funktionelle Gruppe darstellt, die unter den gewählten Reaktionsbedingungen mit A oder B nicht reaktiv ist.

### Polymerdispersion PD)

Zur Herstellung der Polymerdispersion PD) wird wenigstens ein ethylenisch ungesättigtes Monomer (M) eingesetzt. Bei dem Monomer (M) handelt es sich um α,β-ethylenisch ungesättigte Monomere, worunter im Rahmen der Erfindung Monomere mit einer endständigen Doppelbindung verstanden werden. Das Monomer (M) ist vorzugsweise ausgewählt aus Estern α,β-ethylenisch ungesättigter Mono- und Dicarbonsäuren mit C₁-C₂₀-Alkanolen, Vinylaromaten, Estern von Vinylalkohol mit C₁-C₃₀-Monocarbonsäuren, ethylenisch ungesättigten Nitrilen, Vinylhalogeniden, Vinylidenhalogeniden, monoethylenisch ungesättigten Carbon- und Sulfonsäuren, phosphorhaltigen Monomeren, Estern α,β-ethylenisch ungesättigter Mono- und Dicarbonsäuren mit C₂-C₃₀-Alkandiolen, Amiden α,β-ethylenisch ungesättigter Mono- und Dicarbonsäuren mit C₂-C₃₀-Aminoalkoholen, die eine primäre oder sekundäre Aminogruppe aufweisen, primären Amiden α,β-ethylenisch ungesättigter Monocarbonsäuren und deren N-Alkyl- und N,N-Dialkylderivaten, N-Vinyllactamen, offenkettigen N-Vinylamidverbindungen, Estern von Allylalkohol mit C₁-C₃₀-Monocarbonsäuren, Estern von α,β-ethylenisch ungesättigten Mono- und Dicarbonsäuren mit Aminoalkoholen, Amiden α,β-ethylenisch ungesättigten Mono- und Dicarbonsäuren mit Diaminen, welche mindestens eine primäre oder sekundäre Aminogruppe aufweisen, N,N-Diallylaminen, N,N-Diallyl-N-alkylaminen, vinyl- und allylsubstituierten Stickstoffheterocyclen, Vinylethern, C₂-C₈-Monoolefinen, nicht aromatischen Kohlenwasserstoffen mit mindestens zwei konjugierten Doppelbindungen, Polyether(meth)acrylaten, Harnstoffgruppen aufweisenden Monomeren und Mischungen davon.

Geeignete Ester α,β-ethylenisch ungesättigter Mono- und Dicarbonsäuren mit C₁-C₂₀-Alkanolen sind Methyl(meth)acrylat, Methylethacrylat, Ethyl(meth)acrylat, Ethylethacrylat, n-Propyl(meth)acrylat, Isopropyl(meth)acrylat, n-Butyl(meth)acrylat, sec.-Butyl(meth)acrylat, tert.-Butyl(meth)acrylat, tert.-Butylethacrylat, n-Hexyl(meth)acrylat, n-Heptyl(meth)acrylat, n-Octyl(meth)acrylat, 1,1,3,3-Tetramethylbutyl(meth)acrylat, Ethylhexyl(meth)acrylat, n-Nonyl(meth)acrylat, n-Decyl(meth)acrylat, n-Undecyl(meth)acrylat, Tridecyl(meth)acrylat, Myristyl(meth)acrylat, Pentadecyl(meth)acrylat, Palmityl(meth)acrylat, Heptadecyl(meth)acrylat, Nonadecyl(meth)acrylat, Arachinyl(meth)acrylat, Behenyl(meth)acrylat, Lignoceryl(meth)acrylat, Cerotinyl(meth)acrylat, Melissinyl(meth)acrylat, Palmitoleinyl(meth)acrylat, Oleyl(meth)acrylat, Linolyl(meth)acrylat, Linolenyl(meth)acrylat, Stearyl(meth)acrylat, Lauryl(meth)acrylat und Mischungen davon.

Bevorzugt als Vinylaromaten sind Styrol, 2-Methylstyrol, 4-Methylstyrol, 2-(n-Butyl)styrol, 4-(n-Butyl)styrol, 4-(n-Decyl)styrol und besonders bevorzugt Styrol.

Geeignete Ester von Vinylalkohol mit C₁-C₃₀-Monocarbonsäuren sind z. B. Vinylformiat, Vinylacetat, Vinylpropionat, Vinylbutyrat, Vinyllaurat, Vinylstearat, Vinylpropionat, Versaticsäurevinylester und Mischungen davon.

Geeignete ethylenisch ungesättigte Nitrile sind Acrylnitril, Methacrylnitril und Mischungen davon.

Geeignete Vinylhalogenide und Vinylidenhalogenide sind Vinylchlorid, Vinylidenchlorid, Vinylfluorid, Vinylidenfluorid und Mischungen davon.

Geeignete ethylenisch ungesättigte Carbonsäuren, Sulfonsäuren und Phosphonsäuren oder deren Derivate sind Acrylsäure, Methacrylsäure, Ethacrylsäure, α-Chloracrylsäure, Crotonsäure, Maleinsäure, Maleinsäureanhydrid, Itaconsäure, Citraconsäure, Mesaconsäure, Glutaconsäure, Aconitsäure, Fumarsäure, die Halbester von monoethylenisch ungesättigten Dicarbonsäuren mit 4 bis 10, vorzugsweise 4 bis 6 C-Atomen, z. B. Maleinsäuremonomethylester, Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäuren und 2-Acrylamido-2-methylpropansulfonsäure. Geeignete Styrolsulfonsäuren und Derivate davon sind Styrol-4-sulfonsäure und Styrol-3-sulfonsäure und die Erdalkali- oder Alkalimetallsalze davon, z. B. Natrium-styrol-3-sulfonat und Natrium-styrol-4-sulfonat. Besonders bevorzugt sind Acrylsäure, Methacrylsäure und Mischungen davon.

Beispiele für phosphorhaltige Monomere sind z. B. Vinylphosphonsäure und Allylphosphonsäure. Geeignet sind weiter die Mono- und Diester der Phosphonsäure und Phosphorsäure mit Hydroxyalkyl(meth)acrylaten, speziell die Monoester. Geeignet sind weiter Diester der Phosphonsäure und Phosphorsäure die einfach mit einem Hydroxyalkyl(meth)acrylat und zusätzlich einfach mit einem davon verschiedenen Alkohol, z. B. einem Alkanol, verestert sind. Geeignete Hydroxyalkyl(meth)acrylate für diese Ester sind die im Folgenden als separate Monomere genannten, insbesondere 2-Hydroxyethyl(meth)acrylat, 3-Hydroxypropyl(meth)acrylat, 4-Hydroxybutyl(meth)acrylat, etc. Entsprechende Dihydrogenphosphatestermonomere umfassen Phosphoalkyl(meth)acrylate, wie 2-Phosphoethyl(meth)acrylat, 2-Phosphopropyl(meth)acrylat, 3-Phosphopropyl(meth)acrylat, Phosphobutyl(meth)-acrylat und 3-Phospho-2-hydroxypropyl(meth)acrylat. Geeignet sind auch die Ester der Phosphonsäure und Phosphorsäure mit alkoxilierten Hydroxyalkyl(meth)acrylaten, z. B. die Ethylenoxidkondensate von (Meth)acrylaten, wie H₂C=C(H,CH₃)COO(CH₂CH₂O)ₙ,P(OH)₂ und
H₂C=C(H,CH₃)COO(CH₂CH₂O)ₙP(=O)(OH)₂, worin n für 1 bis 50 steht. Weiter geeignet sind Phosphoalkylcrotonate, Phosphoalkylmaleate, Phosphoalkylfumarate, Phosphodi-alkyl(meth)acrylate, Phosphodialkylcrotonate und Allylphosphate. Weitere geeignete Phosphorgruppen-haltige Monomere sind in WO 99/25780 und US 4,733,005 beschrieben, worauf hier Bezug genommen wird.

Geeignete Ester α,β-ethylenisch ungesättigter Mono- und Dicarbonsäuren mit C₂-C₃₀-Alkandiolen sind z. B. 2-Hydroxyethylacrylat, 2-Hydroxyethylmethacrylat, 2-Hydroxyethylethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat,
3-Hydroxy-2-ethylhexylacrylat, 3-Hydroxy-2-ethylhexylmethacrylat etc.

Geeignete primäre Amide α,β-ethylenisch ungesättigter Monocarbonsäuren und deren N-Alkyl- und N,N-Dialkylderivate sind Acrylsäureamid, Methacrylsäureamid, N-Methyl(meth)acrylamid, N-Ethyl(meth)acrylamid, N-Propyl(meth)acrylamid, N-(n-Butyl)(meth)acrylamid, N-(tert.-Butyl)(meth)acrylamid, N-(n-Octyl)(meth)acrylamid, N-(1,1,3,3-Tetramethylbutyl)(meth)acrylamid, N-Ethylhexyl(meth)acrylamid, N-(n-Nonyl)(meth)acrylamid, N-(n-Decyl)(meth)acrylamid, N-(n-Undecyl)(meth)acrylamid, N-Tridecyl(meth)acrylamid, N-Myristyl(meth)acrylamid, N-Pentadecyl(meth)acrylamid, N-Palmityl(meth)acrylamid,
N-Heptadecyl(meth)acrylamid, N-Nonadecyl(meth)acrylamid,
N-Arachinyl(meth)acrylamid, N-Behenyl(meth)acrylamid, N-Lignoceryl(meth)acrylamid, N-Cerotinyl(meth)acrylamid, N-Melissinyl(meth)acrylamid,
N-Palmitoleinyl(meth)acrylamid, N-Oleyl(meth)acrylamid, N-Linolyl(meth)acrylamid, N-Linolenyl(meth)acrylamid, N-Stearyl(meth)acrylamid, N-Lauryl(meth)acrylamid, N,N-Dimethyl(meth)acrylamid, N,N-Diethyl(meth)acrylamid,
Morpholinyl(meth)acrylamid.

Geeignete N-Vinyllactame und deren Derivate sind z. B. N-Vinylpyrrolidon, N-Vinylpiperidon, N-Vinylcaprolactam, N-Vinyl-5-methyl-2-pyrrolidon, N-Vinyl-5-ethyl-2-pyrrolidon, N-Vinyl-6-methyl-2-piperidon, N-Vinyl-6-ethyl-2-piperidon, N-Vinyl-7-methyl-2-caprolactam, N-Vinyl-7-ethyl-2-caprolactam etc.

Geeignete offenkettige N-Vinylamidverbindungen sind beispielsweise N-Vinylformamid, N-Vinyl-N-methylformamid, N-Vinylacetamid, N-Vinyl-N-methylacetamid, N-Vinyl-N-ethylacetamid, N-Vinylpropionamid, N-Vinyl-N-methylpropionamid und N-Vinylbutyramid.

Geeignete Ester von α,β-ethylenisch ungesättigten Mono- und Dicarbonsäuren mit Aminoalkoholen sind N,N-Dimethylaminomethyl(meth)acrylat, N,N-Dimethylaminoethyl(meth)acrylat, N,N-Diethylaminoethylacrylat, N,N-Dimethylaminopropyl(meth)acrylat, N,N-Diethylaminopropyl(meth)acrylat und N,N-Dimethylaminocyclohexyl(meth)acrylat.

Geeignete Amide α,β-ethylenisch ungesättigter Mono- und Dicarbonsäuren mit Diaminen, welche mindestens eine primäre oder sekundäre Aminogruppe aufweisen sind N-[2-(Dimethylamino)ethyl]acrylamid, N-[2-(Dimethylamino)ethyl]methacrylamid, N-[3-(Dimethylamino)propyl]acrylamid, N-[3-(Dimethylamino)propyl]methacrylamid, N-[4-(Dimethylamino)butyl]acrylamid, N-[4-(Dimethylamino)-butyl]methacrylamid, N-[2-(Diethylamino)ethyl]acrylamid, N-[4-(Dimethylamino)cyclohexyl]acrylamid, N-[4-(Dimethylamino)cyclohexyl]methacrylamid etc.

Geeignete Monomere M) sind weiterhin N,N-Diallylamine und N,N-Diallyl-N-alkylamine und deren Säureadditionssalze und Quaternisierungsprodukte. Alkyl steht dabei vorzugsweise für C₁-C₂₄-Alkyl. Bevorzugt sind N,N-Diallyl-N-methylamin und N,N-Diallyl-N,N-dimethylammonium-Verbindungen, wie z. B. die Chloride und Bromide.

Geeignete Monomere M) sind weiterhin vinyl- und allylsubstituierte Stickstoffheterocyclen, wie N-Vinylimidazol, N-Vinyl-2-methylimidazol, vinyl- und allylsubstituierte heteroaromatische Verbindungen, wie 2- und 4-Vinylpyridin, 2- und 4-Allylpyridin, und die Salze davon.

Geeignete C₂-C₈-Monoolefine und nicht aromatische Kohlenwasserstoffe mit mindestens zwei konjugierten Doppelbindungen sind z. B. Ethylen, Propylen, Isobutylen, Isopren, Butadien, etc.

Geeignete Polyether(meth)acrylate sind Verbindungen der allgemeinen Formel (A) 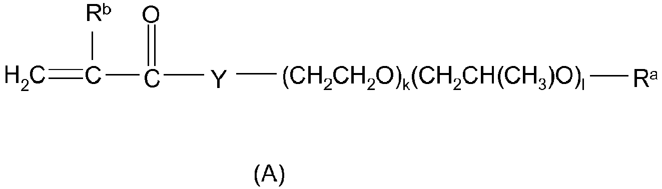 worin
die Reihenfolge der Alkylenoxideinheiten beliebig ist,
k und l unabhängig voneinander für eine ganze Zahl von 0 bis 100 stehen, wobei die Summe aus k und l mindestens 3 beträgt,
R^{a} für Wasserstoff, C₁-C₃₀-Alkyl, C₅-C₈-Cycloalkyl, C₆-C₁₄-Aryl oder (C₆-C₁₄-)Aryl-(C₁-C₄-)alkyl steht,
R^{b} für Wasserstoff oder C₁-C₈-Alkyl steht,
Y für O oder NR^{c} steht, wobei R^{c} für Wasserstoff, C₁-C₃₀-Alkyl oder C₅-C₈-Cycloalkyl steht.

Bevorzugt steht k für eine ganze Zahl von 1 bis 100, besonders bevorzugt 3 bis 50, insbesondere 4 bis 25. Bevorzugt steht l für eine ganze Zahl von 0 bis 100, besonders bevorzugt 3 bis 50, insbesondere 4 bis 25.

Die Summe aus k und l beträgt vorzugsweise 3 bis 200, insbesondere 4 bis 100.

Vorzugsweise steht Rₐ in der Formel (A) für Wasserstoff oder C₁-C₁₈-Alkyl, wie Methyl, Ethyl, n-Propyl, Isopropyl, n-Butyl, sec-Butyl, n-Pentyl, n-Hexyl, Octyl, 2-Ethylhexyl, Decyl, Lauryl, Palmityl oder Stearyl.

Bevorzugt steht R^{b} für Wasserstoff oder C₁-C₆-Alkyl, wie Methyl, Ethyl, n-Propyl, Isopropyl, n-Butyl, sek.-Butyl, tert.-Butyl, n-Pentyl oder n-Hexyl, insbesondere für Wasserstoff, Methyl oder Ethyl. Besonders bevorzugt steht R^{b} für Wasserstoff oder Methyl.

Vorzugsweise steht Y in der Formel (A) für O oder NH, speziell für O.

Geeignete Polyether(meth)acrylate sind z. B. die Polykondensationsprodukte der zuvor genannten α,β-ethylenisch ungesättigten Mono- und/oder Dicarbonsäuren und deren Säurechloriden, -amiden und -anhydriden mit Polyetherolen. Geeignete Polyetherole können leicht durch Umsetzung von Ethylenoxid, 1,2-Propylenoxid und/oder Epichlorhydrin mit einem Startermolekül, wie Wasser oder einem kurzkettigen Alkohol Rₐ-OH hergestellt werden. Die Alkylenoxide können einzeln, alternierend nacheinander oder als Mischung eingesetzt werden. Die Polyetheracrylate können allein oder in Mischungen zur Herstellung der erfindungsgemäß eingesetzten Emulsionspolymerisate verwendet werden.

Die Polymerdispersion PD) enthält vorzugsweise wenigstens ein Polyether(meth)-acrylat einpolymerisiert, dass ausgewählt ist unter Verbindungen der allgemeinen Formeln I oder II oder Mischungen davon 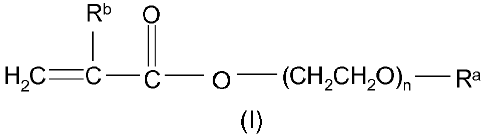 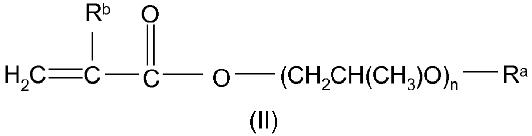 worin
n für eine ganze Zahl von 3 bis 15, vorzugsweise 4 bis 12 steht,
Rₐ für Wasserstoff, C₁-C₂₀-Alkyl, C₅-C₈-Cycloalkyl oder C₆-C₁₄-Aryl steht,
R^{b} für Wasserstoff oder Methyl steht.

Geeignete Polyether(meth)acrylate sind kommerziell erhältlich, z. B. in Form verschiedener Produkte der Bezeichnung Bisomer ® von Laporte Performance Chemicals, UK. Dazu zählt z. B. Bisomer ® MPEG 350 MA, ein Methoxypolyethylenglykolmonomethacrylat.

Geeignete Harnstoffgruppen aufweisende Monomere sind z. B. N-Vinyl- oder N-Allylharnstoff oder Derivate des Imidazolidin-2-ons. Dazu zählen N-Vinyl- und N-Allylimidazolidin-2-on, N-Vinyloxyethylimidazolidin-2-on,
N-(2-(Meth)acrylamidoethyl)imidazolidin-2-on,
N-(2-(Meth)acryloxyethyl)imidazolidin-2-on (= 2-Ureido(meth)acrylat), N-[2-((Meth)acryloxyacetamido)ethyl]imidazolidin-2-on etc.

Bevorzugte Harnstoffgruppen aufweisende Monomere sind
N-(2-Acryloxyethyl)imidazolidin-2-on und N-(2-Methacryloxyethyl)imidazolidin-2-on. Besonders bevorzugt ist N-(2-Methacryloxyethyl)imidazolidin-2-on (2-Ureidomethacrylat, UMA).

Die zuvor genannten Monomere M) können einzeln, in Form von Mischungen innerhalb einer Monomerklasse oder in Form von Mischungen aus verschiedenen Monomerklassen eingesetzt werden.

Vorzugsweise werden zur Emulsionspolymerisation mindestens 40 Gew.-%, besonders bevorzugt mindestens 60 Gew.-%, insbesondere mindestens 80 Gew.-%, bezogen auf das Gesamtgewicht der Monomere M), wenigstens eines Monomers M1) eingesetzt, das ausgewählt ist unter Estern α,β-ethylenisch ungesättigter Mono- und Dicarbonsäuren mit C₁-C₂₀-Alkanolen, Vinylaromaten, Estern von Vinylalkohol mit C₁-C₃₀-Monocarbonsäuren, ethylenisch ungesättigten Nitrilen, Vinylhalogeniden, Vinylidenhalogeniden und Mischungen davon (Hauptmonomere). Vorzugsweise werden die Monomere M1) in einer Menge von bis zu 99,9 Gew.-%, besonders bevorzugt bis zu 99,5 Gew.-%, insbesondere bis zu 99 Gew.-%, bezogen auf das Gesamtgewicht der Monomere M), zur Emulsionspolymerisation eingesetzt.

Die Hauptmonomere M1) sind vorzugsweise ausgewählt unter
Methyl(meth)acrylat, Ethyl(meth)acrylat, n-Propyl(meth)acrylat, Isopropyl(meth)acrylat, n-Butyl(meth)acrylat, sec.-Butyl(meth)acrylat, tert.-Butyl(meth)acrylat, n-Pentyl(meth)acrylat, n-Hexyl(meth)acrylat, n-Heptyl(meth)acrylat, n-Octyl(meth)acrylat, 2-Ethylhexyl(meth)acrylat, Styrol, 2-Methylstyrol, Vinylacetat, Acrylnitril, Methacrylnitril und Mischungen davon.

Zusätzlich zu wenigstens einem Hauptmonomer M1) kann bei der radikalischen Emulsionspolymerisation zur Herstellung von PD) wenigstens ein weiteres Monomer M2) eingesetzt werden, das allgemein in untergeordnetem Maße vorliegt (Nebenmonomere). Vorzugsweise werden zur Emulsionspolymerisation bis zu 60 Gew.-%, besonders bevorzugt bis zu 40 Gew.-%, insbesondere bis zu 20 Gew.-%, bezogen auf das Gesamtgewicht der Monomere M), wenigstens eines Monomers M2) eingesetzt, das ausgewählt ist unter ethylenisch ungesättigten Mono- und Dicarbonsäuren und den Anhydriden und Halbestern ethylenisch ungesättigter Dicarbonsäuren, ethylenisch ungesättigten Sulfonsäuren, (Meth)acrylamiden, C₁-C₁₀-Hydroxyalkyl(meth)acrylaten, C₁-C₁₀-Hydroxyalkyl(meth)acrylamiden und Mischungen davon. Vorzugsweise werden die Monomere M2), soweit vorhanden, in einer Menge von mindestens 0,01 Gew.-%, besonders bevorzugt mindestens 0,05 Gew.-%, insbesondere mindestens 0,1 Gew.-%, speziell mindestens 0,5 Gew.-%, spezieller mindestens 1 Gew.-%, bezogen auf das Gesamtgewicht der Monomere M), zur Emulsionspolymerisation eingesetzt.

Besonders bevorzugt werden zur Emulsionspolymerisation 0,1 bis zu 60 Gew.-%, bevorzugt 0,5 bis 40 Gew.-%, insbesondere 1 bis 20 Gew.-% wenigstens eines Monomers M2) eingesetzt. Die Monomere M2) umfassen in einer ersten Ausführung wenigstens ein Säuregruppen tragendes Monomer, das vorzugsweise ausgewählt ist unter monoethylenisch ungesättigten C₃-C₈-Monocarbonsäuren, monoethylenisch ungesättigten C₄-C₈-Dicarbonsäuren, deren Anhydriden und Halbestern, monoethylenisch ungesättigten Sulfonsäuren und Mischungen davon. Der Anteil an Säuregruppen tragenden Monomeren M2) (falls vorhanden) beträgt vorzugsweise 0,05 bis 15 Gew.-%, besonders bevorzugt 0,1 bis 10 Gew.-%, bezogen auf das Gesamtgewicht der Monomere M). Die Monomere M2) umfassen in einer zweiten Ausführung wenigstens ein neutrales monoethylenisch ungesättigtes Monomer, das vorzugsweise ausgewählt ist unter Amiden monoethylenisch ungesättigter C₃-C₈-Monocarbonsäuren, Hydroxy-C₂-C₄-alkylestern monoethylenisch ungesättigter C₃-C₈-Monocarbonsäuren und Mischungen davon. Der Anteil an neutralen Monomeren M2) (falls vorhanden) beträgt vorzugsweise 0,01 bis 15 Gew.-%, besonders bevorzugt 0,1 bis 10 Gew.-%, bezogen auf das Gesamtgewicht der Monomere M). In einer dritten Ausführung umfassen die Monomere M2) eine Mischung aus wenigstens einem Säuregruppen tragenden Monomer und wenigstens einem neutralen monoethylenisch ungesättigten Monomer. Die Summe dieser Monomere M2) beträgt vorzugsweise 0,1 bis 20 Gew.-%, besonders bevorzugt 0,5 bis 15 Gew.-%, bezogen auf das Gesamtgewicht der Monomere M). Die Monomere M2) sind speziell ausgewählt ist unter Acrylsäure, Methacrylsäure, Itaconsäure, Maleinsäure, Fumarsäure, Maleinsäureanhydrid, Acrylsäureamid, Methacrylsäureamid, 2-Hydroxyethylacrylat, 2-Hydroxyethylmethacrylat, 2-Hydroxyethylacrylamid, 2-Hydroxyethylmethacrylamid, und Mischungen davon.

Besonders geeignete Kombinationen an Hauptmonomeren M1) für das erfindungsgemäße Verfahren sind beispielsweise:
n-Butylacrylat, Methylmethacrylat;
n-Butylacrylat, Methylmethacrylat, Styrol;
n-Butylacrylat, Styrol;
n-Butylacrylat, Ethylhexylacrylat;
n-Butylacrylat, Ethylhexylacrylat, Styrol.

Die zuvor genannten besonders geeigneten Kombinationen an Hauptmonomeren M1) können mit besonders geeigneten Monomeren M2) kombiniert werden, die vorzugsweise ausgewählt sind unter Acrylsäure, Methacrylsäure, Acrylamid, Methacrylamid und Mischungen davon.

In einer speziellen Ausführung wird bei der radikalischen Emulsionspolymerisation zur Herstellung von PD) zusätzlich zu M1) und, falls vorhanden, M2) wenigstens ein Polyether(meth)acrylat eingesetzt. Dieser wird vorzugsweise in einer Menge bis zu 25 Gew.-%, bevorzugt bis zu 20 Gew.-%, bezogen auf das Gesamtgewicht der Monomere M), eingesetzt. Besonders bevorzugt wird zur Emulsionspolymerisation 0,1 bis zu 20 Gew.-%, bevorzugt 1 bis 15 Gew.-% wenigstens eines Polyether(meth)acrylats eingesetzt. Geeignete Polyether(meth)acrylate sind die zuvor genannten. Vorzugsweise ist das Polyether(meth)acrylat ausgewählt unter Verbindungen der allgemeinen Formeln I oder II oder Mischungen davon 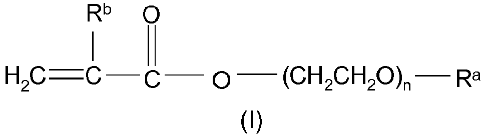 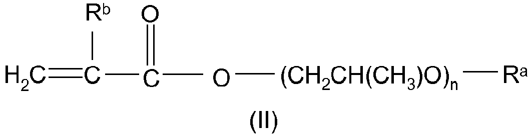 worin
- n: für eine ganze Zahl von 3 bis 15, vorzugsweise 4 bis 12 steht,
- R^{a}: für Wasserstoff, C₁-C₂₀-Alkyl, C₅-C₈-Cycloalkyl oder C₆-C₁₄-Aryl steht,
- R^{b}: für Wasserstoff oder Methyl steht.

In einer speziellen Ausführung wird bei der radikalischen Emulsionspolymerisation zur Herstellung von PD) zusätzlich zu M1) und, falls vorhanden, M2) und/oder Polyether-(meth)acrylaten wenigstens ein Harnstoffgruppen aufweisendes Monomer eingesetzt. Dieses wird vorzugsweise in einer Menge bis zu 25 Gew.-%, bevorzugt bis zu 20 Gew.-% bezogen auf das Gesamtgewicht der Monomere M), eingesetzt. Besonders bevorzugt wird zur Emulsionspolymerisation 0,1 bis zu 20 Gew.-%, insbesondere 1 bis 15 Gew.-% wenigstens eines Harnstoffgruppen aufweisenden Monomers eingesetzt. Geeignete Harnstoffgruppen aufweisenden Monomere sind die zuvor genannten. Bei der Herstellung der erfindungsgemäßen Polymerdispersionen kann zusätzlich zu den zuvor genannten Monomeren M) wenigstens ein Vernetzer eingesetzt werden. Monomere, die eine vernetzende Funktion besitzen, sind Verbindungen mit mindestens zwei polymerisierbaren, ethylenisch ungesättigten, nichtkonjugierten Doppelbindungen im Molekül. Eine Vernetzung kann auch z. B. durch photochemische Aktivierung erfolgen. Dazu kann zur Herstellung von PD) zusätzlich wenigstens ein Monomeren mit photoaktivierbaren Gruppen eingesetzt werden. Fotoinitiatoren können auch separat zugesetzt werden. Eine Vernetzung kann auch z. B. durch funktionelle Gruppen erfolgen, welche mit dazu komplementären funktionellen Gruppen eine chemische Vernetzungsreaktion eingehen können. Dabei können die komplementären Gruppen beide an das Emulsionspolymerisat gebunden sein. Zur Vernetzung kann ein Vernetzer eingesetzt werden, der befähigt ist, mit funktionellen Gruppen des Emulsionspolymerisats eine chemische Vernetzungsreaktion eingehen zu können.

Geeignete Vernetzer sind z. B. Acrylester, Methacrylester, Allylether oder Vinylether von mindestens zweiwertigen Alkoholen. Die OH-Gruppen der zugrundeliegenden Alkohole können dabei ganz oder teilweise verethert oder verestert sein; die Vernetzer enthalten aber mindestens zwei ethylenisch ungesättigte Gruppen.

Beispiele für die zugrundeliegenden Alkohole sind zweiwertige Alkohole wie 1,2-Ethandiol, 1,2-Propandiol, 1,3-Propandiol, 1,2-Butandiol, 1,3-Butandiol, 2,3-Butandiol, 1,4-Butandiol, But-2-en-1,4-diol, 1,2-Pentandiol, 1,5-Pentandiol, 1,2-Hexandiol, 1,6-Hexandiol, 1,10-Decandiol, 1,2-Dodecandiol, 1,12-Dodecandiol, Neopentylglykol, 3-Methylpentan-1,5-diol, 2,5-Dimethyl-1,3-hexandiol, 2,2,4-Trimethyl-1,3-pentandiol, 1,2-Cyclohexandiol, 1,4-Cyclohexandiol, 1,4-Bis(hydroxymethyl)cyclohexan, Hydroxypivalinsäure-neopentylglykolmonoester, 2,2-Bis(4-hydroxyphenyl)-propan, 2,2-Bis[4-(2-hydroxypropyl)phenyl]propan, Diethylenglykol, Triethylenglykol, Tetraethylenglykol, Dipropylenglykol, Tripropylenglykol, Tetrapropylenglykol, 3-Thiapentan-1,5-diol, sowie Polyethylenglykole, Polypropylenglykole und Polytetrahydrofurane mit Molekulargewichten von jeweils 200 bis 10 000. Außer den Homopolymerisaten des Ethylenoxids bzw. Propylenoxids können auch Blockcopolymerisate aus Ethylenoxid oder Propylenoxid oder Copolymerisate, die Ethylenoxid- und Propylenoxid-Gruppen eingebaut enthalten, eingesetzt werden. Beispiele für zugrundeliegende Alkohole mit mehr als zwei OH-Gruppen sind Trimethylolpropan, Glycerin, Pentaerythrit, 1,2,5-Pentantriol, 1,2,6-Hexantriol, Cyanursäure, Sorbitan, Zucker wie Saccharose, Glucose, Mannose. Selbstverständlich können die mehrwertigen Alkohole auch nach Umsetzung mit Ethylenoxid oder Propylenoxid als die entsprechenden Ethoxylate bzw. Propoxylate eingesetzt werden. Die mehrwertigen Alkohole können auch zunächst durch Umsetzung mit Epichlorhydrin in die entsprechenden Glycidylether überführt werden.

Weitere geeignete Vernetzer sind die Vinylester oder die Ester einwertiger, ungesättigter Alkohole mit ethylenisch ungesättigten C₃-C₆-Carbonsäuren, beispielsweise Acrylsäure, Methacrylsäure, Itaconsäure, Maleinsäure oder Fumarsäure. Beispiele für solche Alkohole sind Allylalkohol, 1-Buten-3-ol, 5-Hexen-1-ol, 1-Octen-3-ol, 9-Decen-1-ol, Dicyclopentenylalkohol, 10-Undecen-1-ol, Zimtalkohol, Citronellol, Crotylalkohol oder cis-9-Octadecen-1-ol. Man kann aber auch die einwertigen, ungesättigten Alkohole mit mehrwertigen Carbonsäuren verestern, beispielsweise Malonsäure, Weinsäure, Trimellithsäure, Phthalsäure, Terephthalsäure, Citronensäure oder Bernsteinsäure.

Weitere geeignete Vernetzer sind Ester ungesättigter Carbonsäuren mit den oben beschriebenen mehrwertigen Alkoholen, beispielsweise der Ölsäure, Crotonsäure, Zimtsäure oder 10-Undecensäure.

Geeignet als Vernetzer sind außerdem geradkettige oder verzweigte, lineare oder cyclische, aliphatische oder aromatische Kohlenwasserstoffe, die über mindestens zwei Doppelbindungen verfügen, die bei aliphatischen Kohlenwasserstoffen nicht konjugiert sein dürfen, z. B. Divinylbenzol, Divinyltoluol, 1,7-Octadien, 1,9-Decadien, 4-Vinyl-1-cyclohexen, Trivinylcyclohexan oder Polybutadiene mit Molekulargewichten von 200 bis 20 000.

Als Vernetzer sind ferner geeignet die Acrylsäureamide, Methacrylsäureamide und N-Allylamine von mindestens zweiwertigen Aminen. Solche Amine sind z. B. 1,2-Diaminoethan, 1,3-Diaminopropan, 1,4-Diaminobutan, 1,6-Diaminohexan, 1,12-Dodecandiamin, Piperazin, Diethylentriamin oder Isophorondiamin. Ebenfalls geeignet sind die Amide aus Allylamin und ungesättigten Carbonsäuren, wie Acrylsäure, Methacrylsäure, Itaconsäure, Maleinsäure, oder mindestens zweiwertigen Carbonsäuren, wie sie oben beschrieben wurden.

Ferner sind Triallylamin und Triallylmonoalkylammoniumsalze, z. B. Triallylmethylammoniumchlorid oder -methylsulfat, als Vernetzer geeignet.

Geeignet sind auch N-Vinyl-Verbindungen von Harnstoffderivaten, mindestens zweiwertigen Amiden, Cyanuraten oder Urethanen, beispielsweise von Harnstoff, Ethylenharnstoff, Propylenharnstoff oder Weinsäurediamid, z. B. N,N'-Divinylethylenharnstoff oder N,N'-Divinylpropylenharnstoff.

Weitere geeignete Vernetzer sind Divinyldioxan, Tetraallylsilan oder Tetravinylsilan. Selbstverständlich können auch Mischungen der vorgenannten Verbindungen eingesetzt werden. Vorzugsweise werden wasserlösliche Vernetzer eingesetzt.

Weiterhin zählen zu den vernetzenden Monomeren auch solche, die neben einer ethylenisch ungesättigten Doppelbindung eine reaktive funktionelle Gruppe, z. B. eine Aldehydgruppe, eine Ketogruppe oder eine Oxirangruppe aufweisen, die mit einem zugesetzten Vernetzer reagieren können. Vorzugsweise handelt es sich bei den funktionellen Gruppen um Keto- oder Aldehydgruppen. Die Keto- oder Aldehydgruppen sind vorzugsweise durch Copolymerisation von copolymerisierbaren, ethylenisch ungesättigten Verbindungen mit Keto- oder Aldehydgruppen an das Polymer gebunden. Geeignete derartige Verbindungen sind Acrolein, Methacrolein, Vinylalkylketone mit 1 bis 20, vorzugsweise 1 bis 10 Kohlenstoffatome im Alkylrest, Formylstyrol, (Meth-)acrylsäurealkylester mit ein oder zwei Keto- oder Aldehyd-, bzw. einer Aldehyd- und einer Ketogruppe im Alkylrest, wobei der Alkylrest vorzugsweise insgesamt 3 bis 10 Kohlenstoffatome umfasst, z. B. (Meth)acryloxyalkylpropanale, wie sie in der DE-A-2722097 beschrieben sind. Des Weiteren eignen sich auch N-Oxoalkyl(meth)acrylamide wie sie z. B. aus der US-A-4226007, der DE-A-2061213 oder DE-A-2207209 bekannt sind. Besonders bevorzugt sind Acetoacetyl(meth)acrylat, Acetoacetoxyethyl(meth)acrylat und insbesondere Diacetonacrylamid. Bei den Vernetzern handelt es sich vorzugsweise um eine Verbindung mit mindestens zwei funktionellen Gruppen, insbesondere zwei bis fünf funktionellen Gruppen, die mit den funktionellen Gruppen des Polymerisats, speziell den Keto- oder Aldehydgruppen, eine Vernetzungsreaktion eingehen können. Dazu zählen z. B. Hydrazid-, Hydroxylamin- oder Oximether- oder Aminogruppen als funktionelle Gruppen für die Vernetzung der Keto- oder Aldehydgruppen. Geeignete Verbindungen mit Hydrazidgruppen sind z. B. Polycarbonsäurehydrazide mit einem Molgewicht von bis zu 500 g/mol. Besonders bevorzugte Hydrazidverbindungen sind Dicarbonsäuredihydrazide mit bevorzugt 2 bis 10 C-Atomen. Dazu zählen z. B. Oxalsäuredihydrazid, Malonsäuredihydrazid, Bernsteinsäuredihydrazid, Glutarsäuredihydrazid, Adipinsäuredihydrazid, Sebazinsäuredihydrazid, Maleinsäuredihydrazid, Fumarsäuredihydrazid, Itaconsäuredihydrazid und/oder Isophthalsäuredihydrazid. Von besonderem Interesse sind: Adipinsäuredihydrazid, Sebazinsäuredihydrazid und Isophthalsäuredihydrazid. Geeignete Verbindungen mit Hydroxylamin- oder Oximethergruppen sind z. B. in WO 93/25588 genannt.

Auch durch eine entsprechende Additivierung der wässrigen Polymerdispersion PD) kann zusätzlich eine Oberflächenvernetzung erzeugt werden. Dazu zählt z. B. Zugabe eines Photoinitiators oder Sikkativierung. Als Photoinitiatoren kommen solche in Frage, die durch Sonnenlicht angeregt werden, beispielsweise Benzophenon oder Benzophenonderivate. Zur Sikkativierung eignen sich die für wässrige Alkydharze empfohlenen Metallverbindungen, beispielsweise auf Basis von Co oder Mn (Überblick in U. Poth, Polyester und Alkydharze, Vincentz Network 2005, S 183 f).

Die vernetzende Komponente wird vorzugsweise in einer Menge von 0,0005 bis 5 Gew.-%, bevorzugt 0,001 bis 2,5 Gew.-%, insbesondere 0,01 bis 1,5 Gew.-%, bezogen auf das Gesamtgewicht der zur Polymerisation eingesetzten Monomere (einschließlich des Vernetzers), eingesetzt.

In einer speziellen Ausführung werden zur Emulsionspolymerisation wenigstens 98 Gew.-%, besonders bevorzugt wenigstens 99 Gew.-%, insbesondere wenigstens 99,5 Gew.-%, speziell 100 Gew.-%, monoethylenisch ungesättigte Verbindungen, bezogen auf das Gesamtgewicht der zur Polymerisation befähigten Verbindungen, eingesetzt.

Eine spezielle Ausführungsform sind Polymerdispersionen PD), die keinen Vernetzer einpolymerisiert enthalten.

Die radikalische Polymerisation des Monomergemischs M) kann in Gegenwart mindestens eines Reglers erfolgen. Regler werden vorzugsweise in einer Einsatzmenge von 0,0005 bis 5 Gew.-%, besonders bevorzugt von 0,001 bis 2,5 Gew.-% und insbesondere von 0,01 bis 1,5 Gew.-%, bezogen auf das Gesamtgewicht der zur Polymerisation eingesetzten Monomere, eingesetzt.

Als Regler (Polymerisationsregler) werden allgemein Verbindungen mit hohen Übertragungskonstanten bezeichnet. Regler beschleunigen Kettenübertragungsreaktionen und bewirken damit eine Herabsetzung des Polymerisationsgrades der resultierenden Polymeren, ohne die Bruttoreaktions-Geschwindigkeit zu beeinflussen. Bei den Reglern kann man zwischen mono-, bi- oder polyfunktionalen Reglern unterscheiden, je nach Anzahl der funktionellen Gruppen im Molekül, die zu einer oder mehreren Kettenübertragungsreaktionen führen können. Geeignete Regler werden beispielsweise ausführlich beschrieben von K. C. Berger und G. Brandrup in J. Brandrup, E. H. Immergut, Polymer Handbook, 3. Aufl., John Wiley & Sons, New York, 1989, S. II/81 - II/141.

Als Regler eignen sich beispielsweise Aldehyde wie Formaldehyd, Acetaldehyd, Propionaldehyd, n-Butyraldehyd, Isobutyraldehyd.

Ferner können auch als Regler eingesetzt werden: Ameisensäure, ihre Salze oder Ester, wie Ammoniumformiat, 2,5-Diphenyl-1-hexen, Hydroxylammoniumsulfat, und Hydroxylammoniumphosphat.

Weitere geeignete Regler sind Halogenverbindungen, z. B. Alkylhalogenide wie Tetrachlormethan, Chloroform, Bromtrichlormethan, Bromoform, Allylbromid und Benzylverbindungen wie Benzylchlorid oder Benzylbromid.

Weitere geeignete Regler sind Allylverbindungen, wie z. B. Allylalkohol, funktionalisierte Allylether, wie Allylethoxylate, Alkylallylether oder Glycerinmonoallylether.

Bevorzugt werden als Regler Verbindungen eingesetzt, die Schwefel in gebundener Form enthalten.

Verbindungen dieser Art sind beispielsweise anorganische Hydrogensulfite, Disulfite und Dithionite oder organische Sulfide, Disulfide, Polysulfide, Sulfoxide und Sulfone. Dazu zählen Di-n-butylsulfid, Di-n-octylsulfid, Diphenylsulfid, Thiodiglykol, Ethylthioethanol, Düsopropyldisulfid, Di-n-butyldisulfid, Di-n-hexyldisulfid, Diacetyldisulfid, Diethanolsulfid, Di-t-butyltrisulfid, Dimethylsulfoxid, Dialkylsulfid, Dialkyldisulfid und/oder Diarylsulfid.

Geeignet als Polymerisationsregler sind weiterhin Thiole (Verbindungen, die Schwefel in Form von SH-Gruppen erhalten, auch als Mercaptane bezeichnet). Bevorzugt sind als Regler mono-, bi- und polyfunktionale Mercaptane, Mercaptoalkohole und/oder Mercaptocarbonsäuren. Beispiele für diese Verbindungen sind Allylthioglykolate, Ethylthioglykolat, Cystein, 2-Mercaptoethanol, 1,3-Mercaptopropanol, 3-Mercaptopropan-1,2-diol, 1,4-Mercaptobutanol, Mercaptoessigsäure, 3-Mercaptopropionsäure, Mercaptobernsteinsäure, Thioglycerin, Thioessigsäure, Thioharnstoff und Alkylmercaptane wie n-Butylmercaptan, n-Hexylmercaptan oder n-Dodecylmercaptan.

Beispiele für bifunktionale Regler, die zwei Schwefelatome in gebundener Form enthalten sind bifunktionale Thiole wie z. B. Dimercaptopropansulfonsäure (Natriumsalz), Dimercaptobernsteinsäure, Dimercapto-1-propanol, Dimercaptoethan, Dimercaptopropan, Dimercaptobutan, Dimercaptopentan, Dimercaptohexan, Ethylenglykol-bisthioglykolate und Butandiol-bis-thioglykolat. Beispiele für polyfunktionale Regler sind Verbindungen, die mehr als zwei Schwefelatome in gebundener Form enthalten. Beispiele hierfür sind trifunktionale und/oder tetrafunktionale Mercaptane.

Alle genannten Regler können einzeln oder in Kombination miteinander eingesetzt werden. Eine spezielle Ausführungsform betrifft Polymerdispersionen PD, die durch radikalische Emulsionspolymerisation ohne Zusatz eines Reglers hergestellt werden.

Zur Herstellung der Polymerisate können die Monomeren mit Hilfe von Radikale bildenden Initiatoren polymerisiert werden.

Als Initiatoren für die radikalische Polymerisation können die hierfür üblichen Peroxo- und/oder Azo-Verbindungen eingesetzt werden, beispielsweise Alkali- oder Ammoniumperoxidisulfate, Diacetylperoxid, Dibenzoylperoxid, Succinylperoxid, Di-tert.-butylperoxid, tert.-Butylperbenzoat, tert.-Butylperpivalat, tert.-Butylperoxy-2-ethylhexanoat, tert.-Butylpermaleinat, Cumolhydroperoxid, Diisopropylperoxidicarbamat, Bis-(o-toluoyl)peroxid, Didecanoylperoxid, Dioctanoylperoxid, Dilauroylperoxid, tert.-Butylperisobutyrat, tert.-Butylperacetat, Di-tert.-Amylperoxid, tert.-Butylhydroperoxid, Azo-bis-isobutyronitril, 2,2'-Azo-bis-(2-amidinopropan)dihydrochlorid oder 2-2'-Azo-bis-(2-methyl-butyronitril). Geeignet sind auch Gemische dieser Initiatoren.

Als Initiatoren können auch Reduktions-/Oxidations-(= Red-Ox)-Initiator Systeme eingesetzt werden. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponente handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natrium-peroxodisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit.

Die Menge der Initiatoren beträgt im Allgemeinen 0,1 bis 10 Gew.-%, bevorzugt 0,1 bis 5 Gew.-%, bezogen auf alle zu polymerisierenden Monomeren. Es können auch mehrere, verschiedene Initiatoren bei der Emulsionspolymerisation Verwendung finden.

Die Herstellung der Polymerdispersion PD), erfolgt üblicherweise in Gegenwart wenigstens einer grenzflächenaktiven Verbindung. Eine ausführliche Beschreibung geeigneter Schutzkolloide findet sich in Houben-Weyl, Methoden der organischen Chemie, Band XIV/1, Makromolekulare Stoffe, Georg Thieme Verlag, Stuttgart, 1961, S. 411 bis 420. Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Als Emulgatoren sind sowohl anionische, kationische als auch nichtionische Emulgatoren geeignet. Vorzugsweise werden als grenzflächenaktive Substanzen Emulgatoren eingesetzt, deren relative Molekulargewichte üblicherweise unterhalb derer von Schutzkolloiden liegen. Insbesondere hat es sich bewährt, ausschließlich anionische Emulgatoren oder eine Kombination aus wenigstens einem anionischen Emulgator und wenigstens einem nichtionischen Emulgator einzusetzen.

Brauchbare nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: C₄-C₁₀), Ethoxylate langkettiger Alkohole (EO-Grad: 3 bis 100, Alkylrest: C₈-C₃₆) sowie Polyethylenoxid/Polypropylenoxid-Homo- und Copolymere. Diese können die Alkylenoxideinheiten statistisch verteilt oder in Form von Blöcken einpolymerisiert enthalten. Gut geeignet sind z. B. EO/PO-Blockcopolymere. Bevorzugt werden Ethoxylate langkettiger Alkanole (Alkylrest C₁-C₃₀, mittlerer Ethoxylierungsgrad 5 bis 100) und darunter besonders bevorzugt solche mit einem linearen C₁₂-C₂₀-Alkylrest und einem mittleren Ethoxylierungsgrad von 10 bis 50 sowie ethoxylierte Monoalkylphenole, eingesetzt.

Geeignete anionische Emulgatoren sind beispielsweise Alkali- und Ammoniumsalze von Alkylsulfaten (Alkylrest: C₈-C₂₂), von Schwefelsäurehalbestern ethoxylierter Alkanole (EO-Grad: 2 bis 50, Alkylrest: C₁₂-C₁₈) und ethoxylierter Alkylphenole (EO-Grad: 3 bis 50, Alkylrest: C₄-C₉), von Alkylsulfonsäuren (Alkylrest: C₁₂-C₁₈) und von Alkylarylsulfonsäuren (Alkylrest: C₉-C₁₈). Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208). Als anionische Emulgatoren sind ebenfalls Bis(phenylsulfonsäure)ether bzw. deren Alkali- oder Ammoniumsalze, die an einem oder beiden aromatischen Ringen eine C₄-C₂₄-Alkylgruppe tragen, geeignet. Diese Verbindungen sind allgemein bekannt, z. B. aus der US-A-4,269,749, und im Handel erhältlich, beispielsweise als Dowfax® 2A1 (Dow Chemical Company).

Geeignete kationische Emulgatoren sind vorzugsweise quartäre Ammoniumhalogenide, z. B. Trimethylcetylammoniumchlorid, Methyltrioctylammoniumchlorid, Benzyltriethylammoniumchlorid oder quartäre Verbindungen von N-C₆-C₂₀-Alkylpyridinen, -morpholinen oder -imidazolen, z. B. N-Laurylpyridiniumchlorid.

Die Menge an Emulgator beträgt im Allgemeinen etwa 0,01 bis 10 Gew.-%, bevorzugt 0,1 bis 5 Gew.-%, bezogen auf die Menge an zu polymerisierenden Monomeren.

Den Polymerdispersionen PD) können weiterhin übliche Hilfs- und Zusatzstoffe zugesetzt werden. Dazu zählen beispielsweise den pH-Wert einstellende Substanzen, Reduktions- und Bleichmittel, wie z. B. die Alkalimetallsalze der Hydroxymethansulfinsäure (z. B. Rongalit® C der BASF Aktiengesellschaft), Komplexbildner, Desodorantien, Geschmacksstoffe, Geruchsstoffe und Viskositätsmodifizierer, wie Alkohole, z. B. Glycerin, Methanol, Ethanol, tert.-Butanol, Glykol etc. Diese Hilfs- und Zusatzstoffe können den Polymerdispersionen in der Vorlage, einem der Zuläufe oder nach Abschluss der Polymerisation zugesetzt werden.

Die Polymerisation erfolgt im Allgemeinen bei Temperaturen in einem Bereich von 0 bis 150 °C, bevorzugt 20 bis 100 °C, besonders bevorzugt 30 bis 95 °C. Die Polymerisation erfolgt vorzugsweise bei Normaldruck, möglich ist jedoch auch eine Polymerisation unter erhöhtem Druck, beispielsweise dem Eigendruck der zur Polymerisation eingesetzten Komponenten. In einer geeigneten Ausführung erfolgt die Polymerisation in Gegenwart wenigstens eines Inertgases, wie z. B. Stickstoff oder Argon.

Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes oder auch eine Polymersaat vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt.

Unter dem Begriff "Saatpolymer" versteht der Fachmann ein feinteiliges Polymer in Form einer wässrigen Polymerdispersion. Die gewichtsmittlere Teilchengröße von Saatpolymeren (Gewichtsmittel, d₅₀-Wert) liegt typischerweise unterhalb von 200 nm, häufig im Bereich von 10 bis 150 nm. Die Monomerzusammensetzungen der Saatpolymere ist in der Regel von untergeordneter Bedeutung. Geeignet sind sowohl Saatpolymere, die überwiegend aus vinylaromatischen Monomeren und insbesondere aus Styrol aufgebaut sind (sogenannte Styrol-Saat), als auch Saatpolymere, die überwiegend aus C₁-C₁₀-Alkylacrylaten und/oder C₁-C₁₀-Alkylmethacrylaten, z. B. aus einer Mischung aus Butylacrylat und Methylmethacrylat aufgebaut sind. Neben diesen Hauptmonomeren, die typischerweise wenigstens 80 Gew.-% und insbesondere wenigstens 90 Gew.-% des Saatpolymeren ausmachen, können die Saatpolymere auch davon verschiedene Monomere, insbesondere solche mit einer erhöhten Wasserlöslichkeit, z. B. Monomere mit wenigstens einer Säurefunktion und/oder neutrale Monomere mit erhöhter Wasserlöslichkeit einpolymerisiert enthalten. Der Anteil derartiger Monomere wird in der Regel 20 Gew.-% und insbesondere 10 Gew.-% nicht überschreiten und liegt, sofern vorhanden, typischerweise im Bereich von 0,1 bis 10 Gew.-%, bezogen auf die Gesamtmenge der das Saatpolymer konstituierenden Monomere. Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Die bei der Polymerisation entstandenen Dispersionen können im Anschluss an den Polymerisationsprozess einer physikalischen oder chemischen Nachbehandlung unterworfen werden. Solche Verfahren sind beispielsweise die bekannten Verfahren zur Restmonomerenreduzierung, wie z. B. die Nachbehandlung durch Zusatz von Polymerisationsinitiatoren oder Mischungen mehrerer Polymerisationsinitiatoren bei geeigneten Temperaturen, eine Nachbehandlung der Polymerlösung mittels Wasserdampf oder Ammoniakdampf, oder Strippen mit Inertgas oder Behandeln der Reaktionsmischung mit oxidierenden oder reduzierenden Reagenzien, Adsorptionsverfahren wie die Adsorption von Verunreinigung an ausgewählten Medien wie z. B. Aktivkohle oder eine Ultrafiltration.

Die wässrige Polymerdispersion PD) weist üblicherweise einen Feststoffgehalt von 20 bis 70 Gew.-%, vorzugsweise 40 bis 65 Gew.-%, bezogen auf die Polymerdispersion einschließlich zugesetztem hochverzweigtem Polymer auf. Der Feststoffgehalt beträgt in einer speziellen Ausführung mindestens 50 Gew.-%, spezieller mindestens 55 Gew.-%, noch spezieller mindestens 58 Gew.-%. Möglich sind Feststoffgehalte von mindestens 60 Gew.-% oder auch mindestens 65 Gew.-%, bezogen auf die wässrige Polymerdispersion einschließlich zugesetztem hochverzweigtem Polymer.

Die Glasübergangstemperatur T_{g} des in der Polymerdispersion enthaltenen Emulsionspolymerisats ist vorzugsweise kleiner als 50 °C, besonders bevorzugt kleiner als 40 °C, insbesondere kleiner als 30 °C.

Die erhaltene wässrige Polymerdispersion PD) kann als solche oder gemischt mit weiteren, in der Regel filmbildenden, Polymeren als Bindemittelzusammensetzung in wässrigen Beschichtungsmitteln, wie Farb- oder Lackmischungen, verwendet werden.

Ein weiterer Gegenstand der Erfindung ist ein Beschichtungsmittel in Form einer wässrigen Zusammensetzung, enthaltend wenigstens eine Dispersion PD), wie zuvor definiert, die ein hochverzweigtes Polymer als Zusatz enthält. Dabei können die hochverzweigten Polymere dem Beschichtungsmittel auch in Form eines Additivs zugegeben werden.

Zusätzlich zu der Polymerdispersion PD) kann die Bindemittelzusammensetzung des Beschichtungsmittels wenigstens ein weiteres filmbildendes Polymer aufweisen. Dazu zählen z. B. Alkydharze. Geeignete Alkydharze sind z. B. wasserlösliche Alkydharze, die vorzugsweise ein gewichtsmittleres Molekulargewicht von 5000 bis 40 000 aufweisen. Geeignet sind weiterhin Alkydharze mit einem gewichtsmittleren Molekulargewicht von mehr als 40 000, speziell von mehr als 100 000. Unter einem Alkydharz versteht man einen Polyester, der mit einem trocknenden Öl, einer Fettsäure oder dergleichen verestert ist (U. Poth, Polyester und Alkydharze, Vincentz Network 2005). Geeignete wasserlösliche Alkydharze sind Alkydharze mit ausreichend hoher Säurezahl, vorzugsweise im Bereich von 30-65 mg KOH/g. Diese können gegebenenfalls teilweise oder vollständig neutralisiert vorliegen. Das gewichtsmittlere Molekulargewicht beträgt vorzugsweise 8000 bis 35 000 und besonders bevorzugt 10 000 bis 35 000.

Der Einsatz von solchen weiteren filmbildenden Polymeren, speziell Alkydharzen, die den VOC-Gehalt der Beschichtungsmittel erhöhen, ist nicht bevorzugt. Bevorzugt ist daher ein Beschichtungsmittel, das wenigstens eine Dispersion PD) und wenigstens ein hochverzweigtes Polymer, jedoch kein von dem in der Polymerdispersion enthaltenen Emulsionspolymerisat verschiedenes filmbildendes Polymer aufweist.

Die erfindungsgemäßen Bindemittelzusammensetzungen kommen vorzugsweise in wässrigen Anstrichmitteln zum Einsatz. Diese Anstrichmittel liegen beispielsweise in Form eines unpigmentierten Systems (Klarlacks) oder eines pigmentierten Systems vor. Der Anteil der Pigmente kann durch die Pigmentvolumenkonzentration (PVK) beschrieben werden. Die PVK beschreibt das Verhältnis des Volumens an Pigmenten (V_{P}) und Füllstoffen (V_{F}) zum Gesamtvolumen, bestehend aus den Volumina an Bindemittel (V_{B}), Pigmenten und Füllstoffen eines getrockneten Beschichtungsfilms in Prozent: PVK = (V_{P} + V_{F}) x 100 / (V_{P} + V_{F} + V_{B}). Anstrichmittel lassen sich anhand der PVK beispielsweise wie folgt einteilen:

| | |
|---|---|
| hochgefüllte Innenfarbe, waschbeständig, weiß/matt | ca. 85 |
| Innenfarbe, scheuerbeständig, weiß/matt | ca. 80 |
| Halbglanzfarbe, seidenmatt | ca. 35 |
| Halbglanzfarbe, seidenglänzend | ca. 25 |
| Hochglanzfarbe | ca. 15-25 |
| Außenfassadenfarbe, weiß | ca. 45-55 |
| Klarlack | 0 |

Ein weiterer Gegenstand der Erfindung ist ein Beschichtungsmittel in Form einer wässrigen Zusammensetzung, enthaltend:
- wenigstens eine Dispersion PD), wie zuvor definiert, die ein hochverzweigtes Polymer als Zusatzstoff enthält,
- gegebenenfalls wenigstens einen anorganischen Füllstoff und/oder wenigstens ein anorganisches Pigment,
- gegebenenfalls wenigstens ein übliches Hilfsmittel, und
- Wasser.

Bevorzugt ist ein Beschichtungsmittel, enthaltend:
- 10 bis 60 Gew.-%, bezogen auf den Festgehalt wenigstens einer Dispersion PD), wie zuvor definiert,
- 10 bis 70 Gew.-% anorganische Füllstoffe und/oder anorganische Pigmente,
- 0,1 bis 20 Gew.-% übliche Hilfsmittel, und
- Wasser auf 100 Gew.-%.

Der Anteil von PD) an dem obigen Beschichtungsmittel bezieht sich auf Feststoff, d. h. Emulsionspolymerisat und hochverzweigte(s) Polymer(e), ohne Wasser.

Die erfindungsgemäßen Beschichtungsmittel in Form einer wässrigen Zusammensetzung kommen vorzugsweise als Anstrichmittel zum Einsatz. Eine Ausführungsform sind Anstrichmittel in Form eines Klarlacks. Eine weitere Ausführungsform sind Anstrichmittel in Form einer Dispersionsfarbe. Die erfindungsgemäßen pigmentierten Beschichtungsmittel liegen vorzugsweise in Form einer wässrigen Seidenglanz- oder einer Hochglanzfarbe vor.

Im Folgenden wird die Zusammensetzung einer üblichen Dispersionsfarbe erläutert. Dispersionsfarben enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittel, Füllstoff, Pigment, schwerflüchtigen Lösungsmitteln (Siedepunkt oberhalb 220 °C), z. B. Weichmacher, und polymere Hilfsmittel. Davon entfallen etwa
a) 3 bis 90 Gew.-%, insbesondere 10 bis 60 Gew.-%, auf die feinteilige Polymerdispersion PD,
b) 0 bis 85 Gew.-%, bevorzugt 5 bis 60 Gew.-%, insbesondere 10 bis 50 Gew.-%, auf wenigstens ein anorganisches Pigment,
c) 0 bis 85 Gew.-%, insbesondere 5 bis 60 Gew.-%, auf anorganische Füllstoffe und
d) 0,1 bis 40 Gew.-%, insbesondere 0,5 bis 20 Gew.-%, auf übliche Hilfsmittel.

Besonders bevorzugt eignen sich die erfindungsgemäßen Polymerdispersionen zur Herstellung hochglänzender Dispersionsfarben. Diese sind in der Regel durch eine Pigmentvolumenkonzentration PVK im Bereich von 12 bis 30 % charakterisiert. Aber auch für Fassadenfarben mit einer PVK im Bereich von 30 bis 65 oder Innenfarben mit einer PVK im Bereich von 65 bis 80 sind die erfindungsgemäßen Polymerdispersionen besonders geeignet. Unter der Pigmentvolumenkonzentration PVK versteht man hier den mit 100 multiplizierten Quotienten aus dem Gesamtvolumen von Pigmenten plus Füllstoffen geteilt durch das Gesamtvolumen aus Pigmenten, Füllstoffen und Bindemittelpolymeren; vgl. Ullmann's Enzyklopädie der technischen Chemie, 4. Auflage, Band 15, S. 667.

Als Pigment werden im Rahmen dieser Erfindung zusammenfassend alle Pigmente und Füllstoffe, z. B. Farbpigmente, Weißpigmente und anorganische Füllstoffe bezeichnet. Dazu zählen anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten. Geeignet sind auch synthetische Weißpigmente mit Lufteinschlüssen zur Erhöhung der Lichtstreuung, wie die Rhopaque®-Dispersionen.

Geeignete Füllstoffe sind z. B. Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. In Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Glänzende Anstrichmittel weisen in der Regel nur geringe Mengen sehr feinteiliger Füllstoffe auf oder enthalten keine Füllstoffe.

Feinteilige Füllstoffe können auch zur Erhöhung der Deckkraft und/oder zur Einsparung von Weißpigmenten eingesetzt werden. Zur Einstellung der Deckkraft des Farbtons und der Farbtiefe werden vorzugsweise Abmischungen aus Farbpigmenten und Füllstoffen eingesetzt.

Der Anteil der Pigmente kann, wie zuvor beschrieben, durch die Pigmentvolumenkonzentration (PVK), beschrieben werden. Erfindungsgemäße Beschichtungsmittel in Form von Hochglanzlacken haben z. B. eine PVK im Bereich von 12 bis 35 %, vorzugsweise 15 bis 30 %.

Das erfindungsgemäße Beschichtungsmittel (wässrige Anstrichmittel) kann neben der Polymerdispersion PD), wenigstens einem hochverzweigten Polymer als Zusatzstoff, gegebenenfalls zusätzlichen filmbildenden Polymeren und Pigment weitere Hilfsmittel enthalten.

Zu den üblichen Hilfsmitteln zählen neben den bei der Polymerisation eingesetzten Emulgatoren, Netz- oder Dispergiermittel, wie Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.

Weitere geeignete Hilfsmittel sind Verlaufsmittel, Entschäumer, Biozide und Verdicker. Geeignete Verdicker sind z. B. Assoziativverdicker, wie Polyurethanverdicker. Die Menge des Verdickers beträgt vorzugsweise weniger als 1 Gew.-%, besonders bevorzugt weniger als 0,6 Gew.-% Verdicker, bezogen auf Feststoffgehalt des Anstrichmittels.

Die Herstellung der erfindungsgemäßen Anstrichmittel erfolgt in bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten, und anschließend erst das polymere Bindemittel, d. h. in der Regel die wässrige Dispersion des Polymeren mit der Pigmentpaste bzw. Pigmentdispersion zu vermischen.

Die erfindungsgemäßen Anstrichmittel enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittel, Pigment und Hilfsmittel, bezogen auf den Feststoffgehalt des Anstrichmittels. Bei den flüchtigen Bestandteilen handelt es sich vorwiegend um Wasser.

Geeignete Anstrichmittel sind hochglänzende Anstrichmittel. Die Bestimmung des Glanzes des Anstrichmittels kann nach DIN 67530 erfolgen. Hierbei wird das Anstrichmittel mit 240 µm Spaltweite auf eine Glasplatte aufgetragen und 72 Stunden lang bei Raumtemperatur getrocknet. Der Prüfkörper wird in ein kalibriertes Reflektometer eingesetzt, und bei definiertem Einfallswinkel wird festgestellt, inwieweit das zurückgeworfene Licht reflektiert oder gestreut worden ist. Der ermittelte Reflektometerwert ist ein Maß für den Glanz (je höher der Wert, desto höher der Glanz).

Der Glanz der Hochglanzlacke ist vorzugsweise größer 60 bei 20° und größer 80 bei 60°. Der Reflektometerwert wird bestimmt bei 23 °C und dimensionslos angegeben in Abhängigkeit vom Einfallswinkel, z. B. 40 bei 20°.

Das erfindungsgemäße Anstrichmittel kann in üblicher Weise auf Substrate aufgebracht werden, z. B. durch Streichen, Spritzen, Tauchen, Rollen, Rakeln etc.

Es wird vorzugsweise als Bautenanstrichmittel, d. h. zum Beschichten von Gebäuden oder Gebäudeteilen verwendet. Es kann sich dabei um mineralische Untergründe wie Putze, Gips- oder Gipskartonplatten, Mauerwerk oder Beton, um Holz, Holzwerkstoffe, Metall oder Papier, z. B. Tapeten oder Kunststoff, z. B. PVC, handeln.

Vorzugsweise findet das Anstrichmittel für Gebäudeinnenteile, z. B. Innenwände, Innentüren, Vertäfelungen, Treppengeländer, Möbel etc. Verwendung.

Die erfindungsgemäßen Anstrichmittel zeichnen sich aus durch einfache Handhabung, gute Verarbeitungseigenschaften und hohes Deckvermögen. Die Anstrichmittel sind schadstoffarm. Sie haben gute anwendungstechnische Eigenschaften, z. B. eine gute Wasserfestigkeit, gute Nasshaftung, insbesondere auch auf Alkydfarben, gute Blockfestigkeit, eine gute Überstreichbarkeit und sie zeigen beim Auftragen einen guten Verlauf. Das verwendete Arbeitsgerät lässt sich leicht mit Wasser reinigen.

Die Erfindung wird anhand der folgenden nicht einschränkenden Beispiele näher erläutert.

### Beispiele:

### I. Synthese der hochverzweigten Polymere

### HBP 1: Hyperverzweigtes Polycarbonat

In einem 4-l-Kolben, der mit Rührer, Gaseinleitrohr, Innenthermometer und Rückflusskühler versehen war, wurden 1417,6 g Diethylcarbonat, 2400,0 g eines Triols, das durch Propoxylierung von Trimethylolpropan mit im Mittel 1,5 Propylenoxideinheiten erhalten wurde, und 0,4 g Kaliumcarbonat vorgelegt und bei Normaldruck unter leichter Begasung mit Stickstoff auf ca. 130 °C erhitzt. Im Verlauf der Polykondensation verringerte sich durch das als Kondensationsprodukt gebildete Ethanol die Temperatur der Reaktionsmischung innerhalb von 4 h auf ca. 105 °C. Nachdem die Siedetemperatur konstant blieb, wurde der Rückflusskühler durch eine Destillationsvorrichtung, bestehend aus einer 20 cm Füllkörperkolonne, einem absteigendem Kühler und einer Vorlage, ersetzt und das Ethanol kontinuierlich abdestilliert. Nachdem 770 g Destillat entfernt worden war wurde die Reaktionsmischung auf 100 °C abgekühlt und zur Neutralisation des Kaliumcarbonats 0,5 g 85%ige Phosphorsäure zugegeben. Die Mischung wurde noch 1 h bei 100 °C gerührt. Anschließend wurde ca. 0,5 h bei 140 °C mit Stickstoff gestrippt, wobei noch vorhandene Reste von flüchtigen Komponenten entfernt wurden. Danach wurde das Produkt abgekühlt und analysiert. Die OH-Zahl lag bei 421 mg KOH/g, die mittels GPC bestimmten Molekulargewichte (Eluent = DMAC, Kalibrierung = PMMA) betrugen Mₙ = 980 g/mol und M_{w} = 1450 g/mol.

### HBP 2: Hyperverzweigtes Polycarbonat

In einem 4-l-Kolben, der mit Rührer, Gaseinleitrohr, Innenthermometer und Rückflusskühler versehen war, wurden 591 g Diethylcarbonat, 3350 g eines Triols, das durch Ethoxylierung von Trimethylolpropan mit im Mittel 12 Ethylenoxideinheiten gewonnen wurde, und 0,5 g Kaliumhydroxid vorgelegt und bei Normaldruck unter leichter Begasung mit Stickstoff auf ca. 140 °C erhitzt. Im Verlauf der Polykondensation verringerte sich durch das als Kondensationsprodukt gebildete Ethanol die Temperatur der Reaktionsmischung innerhalb von 4 h auf ca. 110 °C. Nachdem die Siedetemperatur konstant blieb, wurde der Rückflusskühler durch eine Destillationsvorrichtung, bestehend aus einer 20 cm Füllkörperkolonne, einem absteigendem Kühler und einer Vorlage, ersetzt und das Ethanol kontinuierlich abdestilliert. Nachdem 405 g Destillat entfernt worden war, wurde die Reaktionsmischung auf 100 °C abgekühlt und zur Neutralisation des Kaliumhydroxids 0,5 g 85%ige Phosphorsäure zugegeben. Die Mischung wurde noch 1 h bei 100 °C gerührt. Anschließend wurde ca. 0,5 h bei 140 °C mit Stickstoff gestrippt, wobei noch vorhandene Reste von flüchtigen Komponenten entfernt wurden. Danach wurde das Produkt abgekühlt und analysiert. Die OH-Zahl lag bei 151 mg KOH/g, die mittels GPC bestimmten Molekulargewichte (Eluent = DMAC, Kalibrierung = PMMA) betrugen Mₙ = 2750 g/mol und M_{w} = 5700 g/mol.

### HBP 3: Hyperverzweigtes Polycarbonat

In einem 4-l-Kolben, der mit Rührer, Gaseinleitrohr, Innenthermometer und Rückflusskühler versehen war, wurden 1182 g Diethylcarbonat, 2750 g eines Triols, das durch Ethoxylierung von Trimethylolpropan mit im Mittel 3 Ethylenoxideinheiten gewonnen wurde, und 0,4 g Kaliumcarbonat vorgelegt und bei Normaldruck unter leichter Begasung mit Stickstoff auf ca. 140 °C erhitzt. Im Verlauf der Polykondensation verringerte sich durch das als Kondensationsprodukt gebildete Ethanol die Temperatur der Reaktionsmischung innerhalb von 4 h auf ca. 110 °C. Nachdem die Siedetemperatur konstant blieb, wurde der Rückflusskühler durch eine Destillationsvorrichtung, bestehend aus einer 20 cm Füllkörperkolonne, einem absteigendem Kühler und einer Vorlage, ersetzt und das Ethanol kontinuierlich abdestilliert. Nachdem 828 g Destillat entfernt worden war, wurde die Reaktionsmischung auf 100 °C abgekühlt und zur Neutralisation des Kaliumcarbonats 0,5 g 85%ige Phosphorsäure zugegeben. Die Mischung wurde noch 1 h bei 100 °C gerührt. Anschließend wurde ca. 0,5 h bei 140 °C mit Stickstoff gestrippt, wobei noch vorhandene Reste von flüchtigen Komponenten entfernt wurden. Danach wurde das Produkt abgekühlt und analysiert. Die OH-Zahl lag bei 274 mg KOH/g, die mittels GPC bestimmten Molekulargewichte (Eluent = DMAC, Kalibrierung = PMMA) betrugen Mₙ = 2170 g/mol und M_{w} = 5400 g/mol.

### II. Herstellung von Polymerdispersionen

### Beispiel 1: Herstellung der Dispersion 1

In einem mit Dosiervorrichtung und Temperaturregelung ausgerüsteten Polymerisationsgefäß wurden vorgelegt:

### Vorlage:

| | |
|---|---|
| 528,0 g | Wasser |
| 46,7 g | einer Polystyrolsaatdispersion mit einem Feststoffgehalt von 33 % und einer mittleren Teilchengröße von 30 nm |
| 3,67 g | einer 15%igen wässrigen Lösung von Natriumlaurylsulfat |

Danach wurde unter Rühren auf 85 °C erhitzt. Anschließend wurde, unter Aufrechterhaltung dieser Temperatur 5 Gew.-% von Zulauf 2 zugegeben und 5 min gerührt. Danach wurde Zulauf 1 in 180 min zudosiert und parallel dazu die Restmenge von Zulauf 2 in 195 min.

### Zulauf 1:

| | |
|---|---|
| 543,2 g | Wasser |
| 125,4 g | einer 15%igen wässrigen Lösung von Natriumlaurylsulfat |
| 458,0 g | n-Butylacrylat |
| 399,6 g | Methylmethacrylat |
| 165,1 g | Styrol |
| 22,78 g | Methacrylsäure |
| 21,45 g | Ureidomethacrylat (N-(2-Methacryloxyethyl)imidazolidin-2-on) |
| 33,0 g | Bisomer MPEG 350 MA (Methoxypolyethylenglykolmonomethacrylat der Fa. Laporte Performance Chemicals UK) |

### Zulauf 2:

| | |
|---|---|
| 83,6 g | Wasser |
| 4,4 g | Natriumperoxodisulfat |

Nach Beendigung von Zulauf 1 wurden 22 g Wasser zugegeben; nach Beendigung von Zulauf 2 wurde 30 min nachpolymerisiert und mit 7,47 g Ammoniak (25%ige wässrige Lösung) neutralisiert. Danach wurde 13,2 g Wasserstoffperoxid (5%ige wässrige Lösung) zugegeben und eine Lösung von 0,557 g Ascorbinsäure in 4,96 g Wasser in 60 min zudosiert. Danach ließ man die Dispersion abkühlen und filtrierte über einen 125 µm-Filter. Es wurden 2,48 kg einer 46%igen Dispersion erhalten.

Die hyperverzweigten Polymere HBP 1 und HBP 2 wurden der Dispersion 1 als Reinsubstanz zugemischt in Mengen wie in den Tabellen 3 und 4 angegeben.

### Beispiel 2: Herstellung der Dispersion 2

In einem mit Dosiervorrichtung und Temperaturregelung ausgerüsteten Polymerisationsgefäß wurden vorgelegt:

### Vorlage:

| | |
|---|---|
| 584,0 g | Wasser |
| 56,9 g | einer Polystyrolsaatdispersion mit einem Feststoffgehalt von 33 % und einer mittleren Teilchengröße von 30 nm |
| 4,47 g | einer 15%igen wässrigen Lösung von Natriumlaurylsulfat |

Danach wurde unter Rühren auf 85 °C erhitzt. Anschließend wurde unter Aufrechterhaltung dieser Temperatur 5 Gew.-% von Zulauf 2 zugegeben und 5 min gerührt. Danach wurde Zulauf 1 in 180 min zudosiert und parallel dazu die Restmenge von Zulauf 2 in 195 min.

### Zulauf 1:

| | |
|---|---|
| 595,6 g | Wasser |
| 153,0 g | einer 15%igen wässrigen Lösung von Natriumlaurylsulfat |
| 576,3 g | n-Butylacrylat |
| 529,6 g | Methylmethacrylat |
| 207,6 g | Styrol |
| 28,59 g | Methacrylsäure |

### Zulauf 2:

| | |
|---|---|
| 16,1 g | einer 5%igen wässrigen Lösung Natriumperoxodisulfat |

Nach Beendigung von Zulauf 1 wurden 27 g Wasser zugegeben; nach Beendigung von Zulauf 2 wurde 30 min nachpolymerisiert und mit 9,13 g Ammoniak (25%ige wässrige Lösung) neutralisiert. Danach wurde 16,11 g Wasserstoffperoxid (5%ige wässrige Lösung) zugegeben und 6,71 g einer 10%igen wässrigen Lösung von Ascorbinsäure in 60 min zudosiert. Danach ließ man die Dispersion abkühlen und filtrierte über einen 125 µm-Filter. Es wurden 2,85 kg einer 48%igen Dispersion erhalten.

Das hyperverzweigten Polymer HBP 3 wurde der Dispersion 2 als Reinsubstanz zugemischt in Mengen wie in Tabelle 5 angegeben.

### III. Anwendungstechnische Beispiele

### 1. Herstellung von wässrigen Lacken

Die einzelnen Komponenten (Herstellernachweis s. Tabelle 1) wurden in der Menge (Gewichtsteile) und Reihenfolge, wie in Tabelle 2 angegeben, unter Rühren mit einem Zahnscheibenrührer zudosiert. Nach Zugabe des Titandioxidpigments wurde die Drehzahl auf 2000 Upm erhöht und solange dispergiert, bis die Pigmentpaste glatt, d. h. frei von Klümpchen war. Dann ließ man, falls erforderlich, auf Raumtemperatur Abkühlen und gab die restlichen Komponenten bei reduzierter Drehzahl zu. Das Bindemittel der in Tabelle 2 angegebenen Formulierung für ein wässriges Beschichtungsmittel enthielt kein hoch- oder hyperverzweigtes Polymer. Für die erfindungsgemäßen Beschichtungsmittel mit hyperverzweigten Polymeren erhöht sich der entsprechende Gewichtsanteil Bindemittel, zum Ausgleich verringert sich entsprechend der Wasseranteil.

**Tabelle 1**

| Funktion | Name | Hersteller |
|---|---|---|
| Dispergiermittel | Disperbyk^{®} 190 (hochmolekulares Blockcopolymer mit pigmentaktiven Gruppen) | Byk-Chemie GmbH, Wesel |
| Entschäumer | Byk^{®} 020 (Polysiloxan) | Byk-Chemie GmbH, Wesel |
| | Tego Airex^{®} 902W (kieselsäurehaltiges Poly(ether-siloxan)-Copolymer | Tego Chemie, Essen |
| Titandioxidpigment | Kronos^{®} 2190 | Kronos Titan GmbH, Leverkusen |
| Verdicker | DSX 2000 und DSX 1514 (Assoziativ-Verdicker auf Polyurethanbasis) | Cognis Deutschland GmbH & Co. KG, Düsseldorf |

**Tabelle 2: Formulierung der wässrigen Beschichtungsmittel**

| Komponente | Name | Menge [g] |
|---|---|---|
| Wasser | | 10,72 |
| Entschäumer | Byk^{®} 020 | 0,96 |
| Dispergiermittel | Disperbyk^{®} 190 | 4,7 |
| Verdicker | DSX 2000/1514 (1:0.3) | 2,46 |
| Titandioxidpigment | Kronos^{®} 2190 | 47,16 |
| Paste | | 66 |
| Wasser | | 7,7 |
| Lösemittel | Propylenglycol | 4,36 |
| Entschäumer | Tego Airex^{®} 902W | 0,04 |
| Bindemittel | | 121,9 |
| Gesamt | | 200,0 |

### 2. Prüfung der wässrigen Lacke (Beschichtungsmittel)

Die Bestimmung des Glanzes des Anstrichmittels erfolgt nach DIN EN ISO 2813: Das Anstrichmittel wird mit 240 µm Spaltweite auf eine Glasplatte aufgetragen und 72 Stunden lang bei Raumtemperatur getrocknet. Der Prüfkörper wird in ein kalibriertes Reflektometer Typ haze-gloss (Fa. Byk-Gardner, Geretsried) eingesetzt und der Reflektometerwert bei 20 und 60° Einstrahlwinkel sowie der Haze (Glanzschleier) abgelesen. Der ermittelte Reflektometerwert ist ein Maß für den Glanz (je höher der Wert ist, desto höher ist der Glanz).

**Tabelle 3: Zusatz von hyperverzweigtem Polymer HBP 1 zu Acrylatdispersion 1:**

| | Acrylatdispersion 1 abgemischt mit verschiedenen Mengen HBP 1 | | | |
|---|---|---|---|---|
| Anteil* | 0 % | 1 % | 2,5 % | 5 % |
| Glanz (60°) | 77,5 | 78,8 | 84 | 89,4 |
| Glanz (20°) | 52,2 | 60,7 | 66,9 | 78,2 |
| Haze | 187 | 129 | 105 | 25,5 |

| | | | | |
|---|---|---|---|---|
| *Gewichtsprozent bezogen auf Feststoffgehalt der Dispersion | | | | |

**Tabelle 4: Zusatz von hyperverzweigtem Polymer HBP 2 zu Acrylatdispersion 1:**

| | Acrylatdispersion 1 abgemischt mit verschiedenen Mengen HBP 2 | | | |
|---|---|---|---|---|
| Anteil* | 0 % | 1 % | 2,5 % | 5 % |
| Glanz (60°) | 77,5 | 80,5 | 84,4 | 85,1 |
| Glanz (20°) | 52,2 | 59,7 | 66,3 | 71,9 |
| Haze | 187 | 126 | 99,3 | 34,2 |

| | | | | |
|---|---|---|---|---|
| *Gewichtsprozent bezogen auf Feststoffgehalt der Dispersion | | | | |

Mit steigendem Anteil an hyperverzweigtem Polymer steigt der Glanz und sinkt der Glanzschleier (Haze).

**Tabelle 5: Zusatz von hyperverzweigtem Polymer HBP 3 zu Acrylatdispersion 2**

| | Acrylatdispersion 2 abgemischt mit HBP 3 | |
|---|---|---|
| Anteil* in Gew.% bezogen auf Feststoffgehalt der Dispersion | 0 % | 5 % |
| Glanz (20°) | 41 | 67 |
| Glanz (60°) | 79 | 88 |
| Haze | 113 | 70 |

## Patentansprüche

1. Verwendung von hochverzweigten Polymeren, wobei wenigstens ein hyperverzweigtes Polymer eingesetzt wird, das einen Verzweigungsgrad DB von 10 bis 95 % aufweist, als Zusatzstoff für wässrige Beschichtungsmittel, die eine wässrige Polymerdispersion PD) enthalten, zur Erhöhung des Glanzes der daraus hergestellten Beschichtungen.

2. Verwendung einer wässrigen Polymerdispersion PD), die ein hochverzweigtes Polymer, wobei wenigstens ein hyperverzweigtes Polymer eingesetzt wird, das einen Verzweigungsgrad DB von 10 bis 95 % aufweist, als Zusatzstoff enthält, als Komponente in Hochglanzfarben.

3. Verwendung wenigstens eines hochverzweigten Polymers als Additiv für ein Beschichtungsmittel, das ein Emulsionspolymerisat auf Basis wenigstens eines ethylenisch ungesättigten Monomers M), enthält, zur Erhöhung des Glanzes der daraus hergestellten Beschichtungen, wobei das Monomer M) ausgewählt ist unter Estern α,β-ethylenisch ungesättigter Mono- und Dicarbonsäuren mit C₁-C₂₀-Alkanolen, Vinylaromaten, Estern von Vinylalkohol mit C₁-C₃₀-Monocarbonsäuren, ethylenisch ungesättigten Nitrilen, Vinylhalogeniden, Vinylidenhalogeniden, monoethylenisch ungesättigten Carbon- und Sulfonsäuren, phosphorhaltigen Monomeren, Estern α,β-ethylenisch ungesättigter Mono- und Dicarbonsäuren mit C₂-C₃₀-Alkandiolen, Amiden α,β-ethylenisch ungesättigter Mono- und Dicarbonsäuren mit C₂-C₃₀-Aminoalkoholen, die eine primäre oder sekundäre Aminogruppe aufweisen, primären Amiden α,β-ethylenisch ungesättigter Monocarbonsäuren und deren N-Alkyl- und N,N-Dialkylderivaten, N-Vinyllactamen, offenkettigen N-Vinylamidverbindungen, Estern von Allylalkohol mit C₁-C₃₀-Monocarbonsäuren, Estern von α,β-ethylenisch ungesättigten Mono- und Dicarbonsäuren mit Aminoalkoholen, Amiden α,β-ethylenisch ungesättigten Mono- und Dicarbonsäuren mit Diaminen, welche mindestens eine primäre oder sekundäre Aminogruppe aufweisen, N,N-Diallylaminen, N,N-Diallyl-N-alkylaminen, vinyl- und allylsubstituierten Stickstoffheterocyclen, Vinylethern, C₂-C₈-Monoolefinen, nicht aromatischen Kohlenwasserstoffen mit mindestens zwei konjugierten Doppelbindungen, Polyether(meth)acrylaten, Harnstoffgruppen aufweisenden Monomeren und Mischungen davon.

4. Verfahren zur Herstellung von Beschichtungen mit erhöhtem Glanz, bei dem man auf ein Substrat ein wässriges Beschichtungsmittel aufträgt, das eine wässrige Polymerdispersion PD) und ein hochverzweigtes Polymer enthält, bei dem als hochverzweigtes Polymer wenigstens ein hyperverzweigtes Polymer eingesetzt wird, das einen Verzweigungsgrad DB von 10 bis 95 % aufweist, wobei die wässrige Polymerdispersion PD) erhältlich ist durch radikalische Emulsionspolymerisation wenigstens eines ethylenisch ungesättigten Monomers M), wobei das Monomer M) ausgewählt ist unter Estern α,β-ethylenisch ungesättigter Mono- und Dicarbonsäuren mit C₁-C₂₀-Alkanolen, Vinylaromaten, Estern von Vinylalkohol mit C₁-C₃₀-Monocarbonsäuren, ethylenisch ungesättigten Nitrilen, Vinylhalogeniden, Vinylidenhalogeniden, monoethylenisch ungesättigten Carbon- und Sulfonsäuren, phosphorhaltigen Monomeren, Estern α,β-ethylenisch ungesättigter Mono- und Dicarbonsäuren mit C₂-C₃₀-Alkandiolen, Amiden α,β-ethylenisch ungesättigter Mono- und Dicarbonsäuren mit C₂-C₃₀-Aminoalkoholen, die eine primäre oder sekundäre Aminogruppe aufweisen, primären Amiden α,β-ethylenisch ungesättigter Monocarbonsäuren und deren N-Alkyl- und N,N-Dialkylderivaten, N-Vinyllactamen, offenkettigen N-Vinylamidverbindungen, Estern von Allylalkohol mit C₁-C₃₀-Monocarbonsäuren, Estern von α,β-ethylenisch ungesättigten Mono- und Dicarbonsäuren mit Aminoalkoholen, Amiden α,β-ethylenisch ungesättigten Mono- und Dicarbonsäuren mit Diaminen, welche mindestens eine primäre oder sekundäre Aminogruppe aufweisen, N,N-Diallylaminen, N,N-Diallyl-N-alkylaminen, vinyl- und allylsubstituierten Stickstoffheterocyclen, Vinylethern, C₂-C₈-Monoolefinen, nicht aromatischen Kohlenwasserstoffen mit mindestens zwei konjugierten Doppelbindungen, Polyether(meth)acrylaten, Harnstoffgruppen aufweisenden Monomeren und Mischungen davon,
wobei zur Emulsionspolymerisation mindestens 40 Gew.-%, bezogen auf das Gesamtgewicht der Monomere M), wenigstens eines Monomers M1) eingesetzt werden, das ausgewählt ist unter Estern α,β-ethylenisch ungesättigter Mono- und Dicarbonsäuren mit C₁-C₂₀-Alkanolen, Vinylaromaten, Estern von Vinylalkohol mit C₁-C₃₀-Monocarbonsäuren, ethylenisch ungesättigten Nitrilen, Vinylhalogeniden, Vinylidenhalogeniden und Mischungen davon.

5. Verfahren nach Anspruch 4, bei dem man auf das Substrat ein wässriges Beschichtungsmittel aufträgt, das eine wässrige Polymerdispersion PD) enthält, die das hochverzweigte Polymer als Zusatzstoff enthält.

6. Verfahren nach einem der Ansprüche 4 oder 5, wobei das hyperverzweigte Polymer einen Verzweigungsgrad DB von 25 bis 90 %, insbesondere 30 bis 80 %, aufweist.

7. Verfahren nach einem der Ansprüche 4 bis 6, wobei die hochverzweigten Polymere ausgewählt sind unter Polycarbonaten, Polyestern, Polyethern, Polyurethanen, Polyharnstoffen, Polyaminen, Polyamiden, Poly(harnstoffurethanen), Poly(etheraminen), Poly(esteraminen), Poly(etheramiden), Poly(esteramiden), Poly(amidoaminen), Poly(estercarbonaten), Poly(ethercarbonaten), Poly(etherestern), Poly(etherestercarbonaten) und Mischungen davon.

8. Verfahren nach einem der Ansprüche 4 bis 7, bei dem als hochverzweigtes Polymer ein hyperverzweigtes Polycarbonat, Poly(ethercarbonat), Poly(estercarbonat) oder Poly(etherestercarbonat) oder ein Gemisch hyperverzweigter Polymere, das wenigstens ein hyperverzweigtes Polycarbonat, Poly(ethercarbonat), Poly(estercarbonat) oder Poly(etherestercarbonat) enthält, eingesetzt wird.

9. Verfahren nach einem der Ansprüche 4 bis 7, bei dem als hochverzweigtes Polymer ein hyperverzweigter Polyester vom A₂B₃-Typ, eingesetzt wird.

10. Verfahren nach einem der Ansprüche 4 bis 9, wobei zur Emulsionspolymerisationmindestens 60 Gew.-%, besonders bevorzugt mindestens 80 Gew.-%, bezogen auf das Gesamtgewicht der Monomere M), wenigstens eines Monomers M1) eingesetzt werden, das ausgewählt ist unter Estern α,β-ethylenisch ungesättigter Mono- und Dicarbonsäuren mit C₁-C₂₀-Alkanolen, Vinylaromaten, Estern von Vinylalkohol mit C₁-C₃₀-Monocarbonsäuren, ethylenisch ungesättigten Nitrilen, Vinylhalogeniden, Vinylidenhalogeniden und Mischungen davon.

11. Verfahren nach Anspruch 10, wobei zusätzlich zur Emulsionspolymerisation bis zu 60 Gew.-%, bevorzugt bis zu 40 Gew.-%, besonders bevorzugt bis zu 20 Gew.-%, bezogen auf das Gesamtgewicht der Monomere M), wenigstens eines Monomers M2) eingesetzt werden, das ausgewählt ist unter ethylenisch ungesättigten Mono- und Dicarbonsäuren und den Anhydriden und Halbestern ethylenisch ungesättigter Dicarbonsäuren, (Meth)acrylamiden, C₁-C₁₀-Hydroxyalkyl(meth)acrylaten, C₁-C₁₀-Hydroxyalkyl(meth)acrylamiden und Mischungen davon.

12. Verfahren nach einem der Ansprüche 10 oder 11 wobei zusätzlich zur Emulsionspolymerisation bis zu 25 Gew.-%, bevorzugt bis zu 20 Gew.-%, bezogen auf das Gesamtgewicht der Monomere M), wenigstens eines Polyether(meth)acrylats eingesetzt wird.

13. Verfahren nach einem der Ansprüche 10 bis 12, wobei zusätzlich zur Emulsionspolymerisation bis zu 25 Gew.-%, bevorzugt bis zu 20 Gew.-%, bezogen auf das Gesamtgewicht der Monomere M), wenigstens eines Harnstoffgruppen aufweisenden Monomers eingesetzt wird.

14. Beschichtungsmittel in Form einer wässrigen Zusammensetzung, enthaltend:
- wenigstens eine Dispersion PD) wie in einem der Ansprüche 4 bis 13 definiert, die ein hochverzweigtes Polymer als Zusatzstoff enthält,
- gegebenenfalls wenigstens einen anorganischen Füllstoff und/oder wenigstens ein anorganisches Pigment,
- gegebenenfalls wenigstens ein übliches Hilfsmittel, und
- Wasser.

15. Beschichtungsmittel nach Anspruch 14 in Form einer Dispersionsfarbe enthaltend:
- 10 bis 60 Gew.-% wenigstens einer Dispersion PD), die ein hochverzweigtes Polymer als Zusatzstoff enthält,
- 10 bis 70 Gew.-% anorganische Füllstoffe und/oder anorganische Pigmente,
- 0,1 bis 20 Gew.-% übliche Hilfsmittel, und
- Wasser auf 100 Gew.-%.

## Claims

1. The use of highly branched polymers, wherein at least one hyperbranched polymer is used which has a degree of branching DB of 10% to 95%, as an additive for aqueous coating materials which comprise an aqueous polymer dispersion PD), for increasing the gloss of the coatings produced therefrom.

2. The use of an aqueous polymer dispersion PD) which comprises a highly branched polymer, wherein at least one hyperbranched polymer is used which has a degree of branching DB of 10% to 95%, as an additive as a component in high-gloss paints.

3. The use of at least one highly branched polymer as an additive for a coating material which comprises an emulsion polymer based on at least one ethylenically unsaturated monomer M) for increasing the gloss of the coatings produced therefrom, wherein the monomer M) is selected from esters of α,β-ethylenically unsaturated monocarboxylic and dicarboxylic acids with C₁-C₂₀ alkanols, vinylaromatics, esters of vinyl alcohol with C₁-C₃₀ monocarboxylic acids, ethylenically unsaturated nitriles, vinyl halides, vinylidene halides, monoethylenically unsaturated carboxylic and sulfonic acids, phosphorus monomers, esters of α,β-ethylenically unsaturated monocarboxylic and dicarboxylic acids with C₂-C₃₀ alkanediols, amides of α,β-ethylenically unsaturated monocarboxylic and dicarboxylic acids with C₂-C₃₀ amino ackohols which contain a primary or secondary amino group, primary amides of α,β-ethylenically unsaturated monocarboxylic acids and their N-alkyl and N,N-dialkyl derivatives, N-vinyllactams, open-chain N-vinylamide compounds, esters of allyl alcohol with C₁-C₃₀ monocarboxylic acids, esters of α,β-ethylenically unsaturated monocarboxylic and dicarboxylic acids with amino alcohols, amides of α,β-ethylenically unsaturated monocarboxylic and dicarboxylic acids with diamines which contain at least one primary or secondary amino group, N,N-diallylamines, N,N-diallyl-N-alkylamines, vinyl- and allyl-substituted nitrogen heterocycles, vinyl ethers, C₂-C₈-monoolefins, nonaromatic hydrocarbons having at least two conjugated double bonds, polyether (meth)acrylates, monomers containing urea groups, and mixtures thereof.

4. A method of producing a coating with increased gloss by applying to a substrate an aqueous coating material which comprises an aqueous polymer dispersion PD) and a highly branched polymer, wherein at least one hyperbranched polymer which has a degree of branching DB of 10% to 95% is used as highly branched polymer, wherein said aqueous polymer dispersion PD) is obtainable by free-radical emulsion polymerization of at least one ethylenically unsaturated monomer M), wherein the monomer M) is selected from esters of α,β-ethylenically unsaturated monocarboxylic and dicarboxylic acids with C₁-C₂₀ alkanols, vinylaromatics, esters of vinyl alcohol with C₁-C₃₀ monocarboxylic acids, ethylenically unsaturated nitriles, vinyl halides, vinylidene halides, monoethylenically unsaturated carboxylic and sulfonic acids, phosphorus monomers, esters of α,β-ethylenically unsaturated monocarboxylic and dicarboxylic acids with C₂-C₃₀ alkanediols, amides of α,β-ethylenically unsaturated monocarboxylic and dicarboxylic acids with C₂-C₃₀ amino ackohols which contain a primary or secondary amino group, primary amides of α,β-ethylenically unsaturated monocarboxylic acids and their N-alkyl and N,N-dialkyl derivatives, N-vinyllactams, open-chain N-vinylamide compounds, esters of allyl alcohol with C₁-C₃₀ monocarboxylic acids, esters of α,β-ethylenically unsaturated monocarboxylic and dicarboxylic acids with amino alcohols, amides of α,β-ethylenically unsaturated monocarboxylic and dicarboxylic acids with diamines which contain at least one primary or secondary amino group, N,N-diallylamines, N,N-diallyl-N-alkylamines, vinyl- and allyl-substituted nitrogen heterocycles, vinyl ethers, C₂-C₈-monoolefins, nonaromatic hydrocarbons having at least two conjugated double bonds, polyether (meth)acrylates, monomers containing urea groups, and mixtures thereof, wherein emulsion polymerization is carried out using at least 40% by weight, based on the total weight of the monomers M), of at least one monomer M1) selected from esters of α,β-ethylenically unsaturated monocarboxylic and dicarboxylic acids with C₁-C₂₀ alkanols, vinylaromatics, esters of vinyl alcohol with C₁-C₃₀ monocarboxylic acids, ethylenically unsaturated nitriles, vinyl halides, vinylidene halides, and mixtures thereof.

5. The method according to claim 4, wherein the aqueous coating material applied to the substrate comprises an aqueous polymer dispersion PD) which comprises the highly branched polymer as an additive.

6. The method according to either of claims 4 and 5, wherein the hyperbranched polymer has a degree of branching DB of 25% to 90%, more particularly 30% to 80%.

7. The method according to any one of claims 4 to 6, wherein the highly branched polymers are selected from polycarbonates, polyesters, polyethers, polyurethanes, polyureas, polyamines, polyamides, poly(ureaurethanes), poly(etheramines), poly(esteramines), poly(etheramides), poly(esteramides), poly(amidoamines), poly(estercarbonates), poly(ethercarbonates), poly(etheresters), poly(etherestercarbonates), and mixtures thereof.

8. The method according to any one of claims 4 to 7, wherein said highly branched polymer is a hyperbranched polycarbonate, poly(ethercarbonate), poly(estercarbonate) or poly(etherestercarbonate) or a mixture of hyperbranched polymers which comprises at least one hyperbranched polycarbonate, poly(ethercarbonate), poly(estercarbonate) or poly(etherestercarbonate).

9. The method according to any one of claims 4 to 7, wherein said highly branched polymer is a hyperbranched polyester of A₂B₃ type.

10. The method according to any one of claims 4 to 9, wherein emulsion polymerization is carried out using at least 60%, more preferably at least 80%, by weight, based on the total weight of the monomers M), of at least one monomer M1) selected from esters of α,β-ethylenically unsaturated monocarboxylic and dicarboxylic acids with C₁-C₂₀ alkanols, vinylaromatics, esters of vinyl alcohol with C₁-C₃₀ monocarboxylic acids, ethylenically unsaturated nitriles, vinyl halides, vinylidene halides, and mixtures thereof.

11. The method according to claim 10, wherein emulsion polymerization is carried out additionally using up to 60%, preferably up to 40%, more preferably up to 20%, by weight, based on the total weight of the monomers M), of at least one monomer M2) selected from ethylenically unsaturated monocarboxylic and dicarboxylic acids and the anhydrides and monoesters of ethylenically unsaturated dicarboxylic acids, (meth)acrylamides, C₁-C₁₀ hydroxyalkyl (meth) acrylates, C₁-C₁₀ hydroxyalkyl(meth)acrylamides, and mixtures thereof.

12. The method according to either of claims 10 and 11, wherein emulsion polymerization is carried out additionally using up to 25% by weight, preferably up to 20% by weight, based on the total weight of the monomers M), of at least one polyether (meth) acrylate .

13. The method according to any one of claims 10 to 12, wherein emulsion polymerization is carried out additionally using up to 25% by weight, preferably up to 20% by weight, based on the total weight of the monomers M), of at least one monomer containing urea groups.

14. A coating material in the form of an aqueous composition comprising:
- at least one dispersion PD) as defined in any one of claims 4 to 13, comprising a highly branched polymer as an additive,
- optionally at least one inorganic filler and/or at least one inorganic pigment,
- optionally at least one typical auxiliary, and
- water.

15. The coating material according to claim 14 in the form of an emulsion paint comprising:
- 10% to 60% by weight of at least one dispersion PD) which comprises a highly branched polymer as an additive,
- 10% to 70% by weight of inorganic fillers and/or inorganic pigments,
- 0.1% to 20% by weight of typical auxiliaries, and
- water to 100% by weight.

## Revendications

1. Utilisation de polymères hautement ramifiés, au moins un polymère hyperramifié qui présente un degré de ramification DB de 10 à 95 % étant utilisé, en tant qu'additif pour des agents de revêtement aqueux, qui contiennent une dispersion aqueuse de polymère PD), pour augmenter la brillance des revêtements obtenus à partir de ceux-ci.

2. Utilisation d'une dispersion aqueuse de polymère PD), qui contient un polymère hautement ramifié en tant qu'additif, au moins un polymère hyperramifié qui présente un degré de ramification DB de 10 à 95 % étant utilisé, en tant que composant dans des peintures de brillance élevée.

3. Utilisation d'au moins un polymère hautement ramifié en tant qu'additif pour un agent de revêtement, qui continent un polymère en émulsion à base d'au moins un monomère éthyléniquement insaturé M), pour augmenter la brillance des revêtements fabriqués à partir de celui-ci, le monomère M) étant choisi parmi les esters d'acides mono- et dicarboxyliques α,β-éthyléniquement insaturés avec des alcanols en C₁-C₂₀, les composés aromatiques de vinyle, les esters d'alcool vinylique avec des acides monocarboxyliques en C₁-C₃₀, les nitriles éthyléniquement insaturés, les halogénures de vinyle, les halogénures de vinylidène, les acides carboxyliques et sulfoniques monoéthyléniquement insaturés, les monomères phosphorés, les esters d'acides mono- et dicarboxyliques α,β-éthyléniquement insaturés avec des alcanediols en C₂-C₃₀, les amides d'acides mono- et dicarboxyliques α,β-éthyléniquement insaturés avec des aminoalcools en C₂-C₃₀, qui comprennent un groupe amino primaire ou secondaire, les amides primaires d'acides monocarboxyliques α,β-éthyléniquement insaturés et leurs dérivés N-alkyle et N,N-dialkyle, les N-vinyllactames, les composés de N-vinylamide à chaîne ouverte, les esters d'alcool allylique avec des acides monocarboxyliques en C₁-C₃₀, les esters d'acides mono- et dicarboxyliques α,β-éthyléniquement insaturés avec des aminoalcools, les amides d'acides mono- et dicarboxyliques α,β-éthyléniquement insaturés avec des diamines, qui portent au moins un groupe amino primaire ou secondaire, les N,N-diallylamines, les N,N-diallyl-N-alkylamines, les hétérocycles azotés à substitution vinyle et allyle, les éthers de vinyle, les monooléfines en C₂-C₈, les hydrocarbures non aromatiques contenant au moins deux doubles liaisons conjuguées, les (méth)acrylates de polyéther, les monomères comprenant des groupes urée et leurs mélanges.

4. Procédé de fabrication de revêtement à brillance augmentée, selon lequel un agent de revêtement aqueux est appliqué sur un substrat, ledit agent de revêtement aqueux contenant une dispersion aqueuse de polymère PD) et un polymère hautement ramifié, au moins un polymère hyperramifié qui présente un degré de ramification DB de 10 à 95 % étant utilisé en tant que polymère hautement ramifié, la dispersion aqueuse de polymère PD) pouvant être obtenue par polymérisation en émulsion radicalaire d'au moins un monomère éthyléniquement insaturé M), le monomère M) étant choisi parmi les esters d'acides mono- et dicarboxyliques α,β-éthyléniquement insaturés avec des alcanols en C₁-C₂₀, les composés aromatiques de vinyle, les esters d'alcool vinylique avec des acides monocarboxyliques en C₁-C₃₀, les nitriles éthyléniquement insaturés, les halogénures de vinyle, les halogénures de vinylidène, les acides carboxyliques et sulfoniques monoéthyléniquement insaturés, les monomères phosphorés, les esters d'acides mono- et dicarboxyliques α,β-éthyléniquement insaturés avec des alcanediols en C₂-C₃₀, les amides d'acides mono- et dicarboxyliques α,β-éthyléniquement insaturés avec des aminoalcools en C₂-C₃₀, qui comprennent un groupe amino primaire ou secondaire, les amides primaires d'acides monocarboxyliques α,β-éthyléniquement insaturés et leurs dérivés N-alkyle et N,N-dialkyle, les N-vinyllactames, les composés de N-vinylamide à chaîne ouverte, les esters d'alcool allylique avec des acides monocarboxyliques en C₁-C₃₀, les esters d'acides mono- et dicarboxyliques α,β-éthyléniquement insaturés avec des aminoalcools, les amides d'acides mono- et dicarboxyliques α,β-éthyléniquement insaturés avec des diamines, qui portent au moins un groupe amino primaire ou secondaire, les N,N-diallylamines, les N,N-diallyl-N-alkylamines, les hétérocycles azotés à substitution vinyle et allyle, les éthers de vinyle, les monooléfines en C₂-C₈, les hydrocarbures non aromatiques contenant au moins deux doubles liaisons conjuguées, les (méth)acrylates de polyéther, les monomères comprenant des groupes urée et leurs mélanges,
au moins 40 % en poids, par rapport au poids total des monomères M), d'au moins un monomère M1) étant utilisé pour la polymérisation en émulsion, ledit monomère M1) étant choisi parmi les esters d'acides mono- et dicarboxyliques α,β-éthyléniquement insaturés avec des alcanols en C₁-C₂₀, les composés aromatiques de vinyle, les esters d'alcool vinylique avec des acides monocarboxyliques en C₁-C₃₀, les nitriles éthyléniquement insaturés, les halogénures de vinyle, les halogénures de vinylidène et leurs mélanges.

5. Procédé selon la revendication 4, selon lequel un agent de revêtement aqueux est appliqué sur le substrat, ledit agent de revêtement aqueux contenant une dispersion aqueuse de polymère PD) qui contient le polymère hautement ramifié en tant qu'additif.

6. Procédé selon l'une quelconque des revendications 4 ou 5, dans lequel le polymère hyperramifié présente un degré de ramification DB de 25 à 90 %, notamment de 30 à 80 %.

7. Procédé selon l'une quelconque des revendications 4 à 6, dans lequel les polymères hautement ramifiés sont choisis parmi les polycarbonates, les polyesters, les polyéthers, les polyuréthanes, les polyurées, les polyamines, les polyamides, les poly(urée-uréthanes), les poly(éther-amines), les poly(ester-amines), les poly(éther-amides), les poly(ester-amides), les poly(amidoamines), les poly(ester-carbonates), les poly(éther-carbonates), les poly(éther-esters), les poly(éther-ester-carbonates) et leurs mélanges.

8. Procédé selon l'une quelconque des revendications 4 à 7, dans lequel un polycarbonate, poly(éther-carbonate), poly(ester-carbonate) ou poly(éther-ester-carbonate) hyperramifié ou un mélange de polymères hyperramifiés, qui contient au moins un polycarbonate, poly(éther-carbonate), poly(ester-carbonate) ou poly(éther-ester-carbonate) hyperramifié, est utilisé en tant que polymère hautement ramifié.

9. Procédé selon l'une quelconque des revendications 4 à 7, dans lequel un polyester hyperramifié de type A₂B₃ est utilisé en tant que polymère hautement ramifié.

10. Procédé selon l'une quelconque des revendications 4 à 9, dans lequel au moins 60 % en poids, de manière particulièrement préférée au moins 80 % en poids, par rapport au poids total des monomères M), d'au moins un monomère M1) est utilisé pour la polymérisation en émulsion, ledit monomère M1) étant choisi parmi les esters d'acides mono- et dicarboxyliques α,β-éthyléniquement insaturés avec des alcanols en C₁-C₂₀, les composés aromatiques de vinyle, les esters d'alcool vinylique avec des acides monocarboxyliques en C₁-C₃₀, les nitriles éthyléniquement insaturés, les halogénures de vinyle, les halogénures de vinylidène et leurs mélanges.

11. Procédé selon la revendication 10, dans lequel jusqu'à 60 % en poids, de préférence jusqu'à 40 % en poids, de manière particulièrement préférée jusqu'à 20 % en poids, par rapport au poids total des monomères M), d'au moins un monomère M2) est en outre utilisé pour la polymérisation en émulsion, ledit monomère M2) étant choisi parmi les acides mono- et dicarboxyliques éthyléniquement insaturés et les anhydrides et semi-esters d'acides dicarboxyliques éthyléniquement insaturés, les (méth)acrylamides, les (méth)acrylates d'hydroxyalkyle en C₁-C₁₀, les hydroxyalkyl(méth)acrylamides en C₁-C₁₀ et leurs mélanges.

12. Procédé selon l'une quelconque des revendications 10 ou 11, dans lequel jusqu'à 25 % en poids, de préférence jusqu'à 20 % en poids, par rapport au poids total des monomères M), d'au moins un (méth)acrylate de polyéther est utilisé en outre pour la polymérisation en émulsion.

13. Procédé selon l'une quelconque des revendications 10 à 12, dans lequel jusqu'à 25 % en poids, de préférence jusqu'à 20 % en poids, par rapport au poids total des monomères M), d'au moins un monomère comprenant des groupes urée est utilisé en outre pour la polymérisation en émulsion.

14. Agent de revêtement sous la forme d'une composition aqueuse, contenant :
- au moins une dispersion PD) telle que définie dans l'une quelconque des revendications 4 à 13, qui contient un polymère hautement ramifié en tant qu'additif,
- éventuellement au moins une charge inorganique et/ou au moins un pigment inorganique,
- éventuellement au moins un adjuvant usuel, et
- de l'eau.

15. Agent de revêtement selon la revendication 14, sous la forme d'une peinture en dispersion contenant :
- 10 à 60 % en poids d'au moins une dispersion PD), qui contient un polymère hautement ramifié en tant qu'additif,
- 10 à 70 % en poids de charges inorganiques et/ou de pigments inorganiques,
- 0,1 à 20 % en poids d'adjuvants usuels et
- de l'eau jusqu'à 100 % en poids.
